(19) Europäisches Patentamt
European Patent Office
Office européen des brevets

(11) **EP 4 648 456 A1**

(12) **EUROPEAN PATENT APPLICATION**
published in accordance with Art. 153(4) EPC

(43) Date of publication:
**12.11.2025 Bulletin 2025/46**

(21) Application number: **23914067.6**

(22) Date of filing: **06.01.2023**

(51) International Patent Classification (IPC):
**H04W 12/12** (2021.01)   **H04W 56/00** (2009.01)
**H04B 5/00** (2024.01)

(52) Cooperative Patent Classification (CPC):
**H04B 5/00; H04W 12/12; H04W 56/00**

(86) International application number:
**PCT/CN2023/070927**

(87) International publication number:
**WO 2024/145909 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **GAN, Lu
  Dongguan, Guangdong 523860 (CN)**

• **WANG, Huiming
  Dongguan, Guangdong 523860 (CN)**
• **ZHAO, Feifei
  Dongguan, Guangdong 523860 (CN)**
• **XU, Weijie
  Dongguan, Guangdong 523860 (CN)**
• **SHI, Cong
  Dongguan, Guangdong 523860 (CN)**

(74) Representative: **Mewburn Ellis LLP
Aurora Building
Counterslip
Bristol BS1 6BX (GB)**

(54) **COMMUNICATION METHODS, AND DEVICES**

(57)    The present disclosure relates to a communication method, a device, a computer-readable storage medium, a computer program product, and a computer program. The communication method includes the following. A first device sends a first signal to a third device. The first signal includes $M$ energy supply signals, the $M$ energy supply signals occupy the same time domain range, and the time domain range contains multiple time periods. Each of the M energy supply signals is generated based on a different first parameter in each of different time periods among the multiple time periods, and different energy supply signals among the M energy supply signals are generated based on different first parameters in a same time period among the multiple time periods. $M$ is an integer greater than or equal to 2.

FIRST DEVICE SENDS FIRST SIGNAL TO THIRD DEVICE, WHERE FIRST SIGNAL INCLUDES *M* ENERGY SUPPLY SIGNALS; *M* ENERGY SUPPLY SIGNALS OCCUPY THE SAME TIME DOMAIN RANGE; TIME DOMAIN RANGE CONTAINS MULTIPLE TIME PERIODS; EACH OF *M* ENERGY SUPPLY SIGNALS IS GENERATED BASED ON DIFFERENT FIRST PARAMETER IN EACH OF DIFFERENT TIME PERIODS AMONG MULTIPLE TIME PERIODS, AND DIFFERENT ENERGY SUPPLY SIGNALS AMONG *M* ENERGY SUPPLY SIGNALS ARE GENERATED BASED ON DIFFERENT FIRST PARAMETERS IN SAME TIME PERIOD AMONG MULTIPLE TIME PERIODS; AND *M* IS INTEGER GREATER THAN OR EQUAL TO 2

S410

**FIG. 4**

EP 4 648 456 A1

**Description**

TECHNICAL FIELD

This disclosure relates to the field of communication, in particular to a communication method, a device, a computer-readable storage medium, a computer program product, and a computer program.

BACKGROUND

In the related art, terminal devices, especially zero-power terminals, may need to report data to a network device. However, in a scenario where a zero-power terminal reports data to a network device, how to ensure the security of the data reported by the zero-power terminal becomes a problem to be solved.

SUMMARY

Embodiments of the present disclosure provide a communication method, a device, a computer-readable storage medium, a computer program product, and a computer program.

Embodiments of the present disclosure provide a communication method. The communication method includes the following. A first device sends a first signal to a third device. The first signal includes $M$ energy supply signals, the $M$ energy supply signals occupy a same time domain range, and the time domain range contains multiple time periods. Each of the $M$ energy supply signals is generated based on a different first parameter in each of different time periods among the multiple time periods, and different energy supply signals among the $M$ energy supply signals are generated based on different first parameters in a same time period among the multiple time periods. $M$ is an integer greater than or equal to 2.

Embodiments of the present disclosure provide a communication method. The communication method includes the following. A second device receives a second signal sent by a third device. The second device obtains data reported by the third device through processing the second signal based on $M$ third signals. The $M$ third signals have a same duration, and the duration contains multiple time periods. Each of the $M$ third signals is generated based on a different second parameter in each of different time periods among the multiple time periods, and different third signals among the $M$ third signals are generated based on different second parameters in a same time period among the multiple time periods. $M$ is an integer greater than or equal to 2.

Embodiments of the present disclosure provide a communication method. The communication method includes the following. A third device receives a first signal sent by a first device. The first signal includes $M$ energy supply signals, the $M$ energy supply signals occupy a same time domain range, and the time domain range contains multiple time periods. Each of the $M$

energy supply signals is generated based on a different first parameter in each of different time periods among the multiple time periods, and different energy supply signals among the $M$ energy supply signals are generated based on different first parameters in a same time period among the multiple time periods. $M$ is an integer greater than or equal to 2. The third device sends a second signal to a second device, where the second signal carries data reported by the third device.

Embodiments of the present disclosure provide a first device. The first device includes a first communication unit. The first communication unit is configured to send a first signal to a third device. The first signal includes $M$ energy supply signals, the $M$ energy supply signals occupy a same time domain range, and the time domain range contains multiple time periods. Each of the $M$ energy supply signals is generated based on a different first parameter in each of different time periods among the multiple time periods, and different energy supply signals among the M energy supply signals are generated based on different first parameters in a same time period among the multiple time periods. $M$ is an integer greater than or equal to 2.

Embodiments of the present disclosure provide a second device. The second device includes a second communication unit and a second processing unit. The second communication unit is configured to receive a second signal sent by a third device. The second processing unit is configured to obtain data reported by the third device through processing the second signal based on $M$ third signals. The $M$ third signals have a same duration, and the duration contains multiple time periods. Each of the $M$ third signals is generated based on a different second parameter in each of different time periods among the multiple time periods, and different third signals among the $M$ third signals are generated based on different second parameters in a same time period among the multiple time periods. $M$ is an integer greater than or equal to 2.

Embodiments of the present disclosure provide a third device. The third device includes a third communication unit. The third communication unit is configured to receive a first signal sent by a first device. The first signal includes $M$ energy supply signals, the $M$ energy supply signals occupy a same time domain range, and the time domain range contains multiple time periods. Each of the $M$ energy supply signals is generated based on a different first parameter in each of different time periods among the multiple time periods, and different energy supply signals among the $M$ energy supply signals are generated based on different first parameters in a same time period among the multiple time periods. $M$ is an integer greater than or equal to 2. The third communication unit is configured to send a second signal to a second device, where the second signal carries data reported by the third device.

Embodiments of the present disclosure provide a first device. The first device includes a processor and a memory. The memory is configured to store a computer program. The processor is configured to invoke and execute the computer program stored in the memory, to cause the first device to perform the foregoing method.

Embodiments of the present disclosure provide a second device. The second device includes a processor and a memory. The memory is configured to store a computer program. The processor is configured to invoke and execute the computer program stored in the memory, to cause the second device to perform the foregoing method.

Embodiments of the present disclosure provide a third device. The third device includes a processor and a memory. The memory is configured to store a computer program. The processor is configured to invoke and execute the computer program stored in the memory, to cause the third device to perform the foregoing method.

Embodiments of the present disclosure provide a chip. The chip is configured to implement the foregoing method.

Specifically, the chip includes a processor. The processor is configured to invoke and execute a computer program stored in a memory, to cause a device equipped with the chip to perform the foregoing method.

Embodiments of the present disclosure provide a computer-readable storage medium. The computer-readable storage medium is configured to store a computer program which, when executed by a device, causes the device to perform the foregoing method.

Embodiments of the present disclosure provide a computer program product. The computer program product includes computer program instructions that cause a computer to perform the foregoing method.

Embodiments of the present disclosure provide a computer program. The computer program, when executed by a computer, causes the computer to perform the foregoing method.

With the solutions provided in embodiments of the present disclosure, the first signal sent by the first device includes $M$ energy supply signals, the $M$ energy supply signals occupy the same time domain range, each of the $M$ energy supply signals is generated based on a different parameter in each of different time periods, and different energy supply signals among the $M$ energy supply signals are generated based on different parameters in a same time period. In this way, the first signal sent by the first device and including the $M$ energy supply signals is a time-varying signal, such that eavesdroppers cannot parse the data modulated onto the $M$ energy supply signals by the third device due to their inability to obtain a time-varying pattern of the $M$ energy supply signals, thereby ensuring the security of the data uploaded by the third device.

BRIEF DESCRIPTION OF THE DRAWINGS

FIG. 1 is a schematic diagram of an application scenario according to embodiments of the present disclosure.
FIG. 2 is a schematic diagram of a zero-power communication system based on backscattering.
FIG. 3 is a schematic diagram illustrating a scenario of a hybrid zero-power communication system based on cellular communication and/or sidelink communication according to an embodiment of the present disclosure.
FIG. 4 is a schematic flowchart of a communication method according to an embodiment of the present disclosure.
FIG. 5 is a schematic flowchart of a communication method according to another embodiment of the present disclosure.
FIG. 6 is an exemplary flowchart of a communication method according to yet another embodiment of the present disclosure.
FIG. 7 to FIG. 9 are various schematic flowcharts illustrating exemplary processing of a communication method according to an embodiment of the present disclosure.
FIG. 10 is a schematic flowchart illustrating exemplary processing of a communication method in which an energy supply signal is generated based on an amplitude parameter according to an embodiment of the present disclosure.
FIG. 11 is an exemplary diagram illustrating simulation experiment results of a communication method in which an energy supply signal is generated based on an amplitude parameter according to embodiments of the present disclosure.
FIG. 12 is a schematic flowchart illustrating exemplary processing of a communication method by generating an energy supply signal through a phase parameter according to an embodiment of the present disclosure.
FIG. 13 is an exemplary diagram illustrating simulation experiment results of a communication method by generating an energy supply signal through a phase parameter according to embodiments of the present disclosure.
FIG. 14 is a schematic diagram illustrating an application scenario of a communication method according to an embodiment of the present disclosure, an eavesdropper existing in the application scenario.
FIG. 15 is a schematic block diagram of a first device according to an embodiment of the present disclosure.
FIG. 16 is a schematic block diagram of a second device according to an embodiment of the present disclosure.
FIG. 17 is a schematic block diagram of a third device according to an embodiment of the present disclosure.
FIG. 18 is a schematic block diagram of a third device according to another embodiment of the present disclosure.

FIG. 19 is a schematic block diagram of a communication device according to embodiments of the present disclosure.

FIG. 20 is a schematic block diagram of a chip according to embodiments of the present disclosure.

FIG. 21 is a schematic block diagram of a communication system according to embodiments of the present disclosure.

DETAILED DESCRIPTION

The following will describe technical solutions of embodiments of the present disclosure with reference to the accompanying drawings in embodiments of the present disclosure.

The technical solutions of embodiments of the present disclosure may be applicable to various wireless communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication System (UMTS), a wireless local area network (WLAN), a wireless fidelity (WiFi), a 5th-generation (5G) communication system, or other communication systems.

Generally speaking, a conventional communication system generally supports a limited number (quantity) of connections and therefore is easy to implement. However, with the development of communication technology, a mobile communication system will not only support a conventional communication but also support, for example, device-to-device (D2D) communication, machine-to-machine (M2M) communication, machine-type communication (MTC), vehicle-to-vehicle (V2V) communication, vehicle to everything (V2X) communication, etc. The technical solutions of embodiments of the present disclosure are also applicable to these wireless communication systems. In a possible embodiment, the communication system in embodiments of the present disclosure may be applicable to a carrier aggregation (CA) scenario, or may be applicable to a dual connectivity (DC) scenario, or may be applicable to a standalone (SA) scenario. In a possible embodiment, the communication system in embodiments of the present disclosure is applicable to an unlicensed spectrum, and the unlicensed spectrum may be regarded as a shared spectrum. Alternatively, the communication system in embodiments of the present disclosure is applicable to a licensed spectrum, and the licensed spectrum may be regarded as a non-shared spectrum.

Various embodiments of the present disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, a user device, etc. The terminal device may be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, a terminal device in a future evolved public land mobile network (PLMN), etc. In embodiments of the present disclosure, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.). In embodiments of the present disclosure, the terminal may be a mobile phone, a pad, a computer with wireless transceiver functions, a virtual reality (VR) terminal device, an augmented reality (AR) terminal device, a wireless terminal device in industrial control, a wireless terminal device in self-driving, a wireless terminal device in remote medicine, a wireless terminal device in smart grid, a wireless terminal device in transportation safety, a wireless terminal device in smart city, a wireless terminal device in smart home, etc. By way of explanation rather than limitation, in embodiments of the present disclosure, the terminal device may also be a wearable device. The wearable device may also be referred to as a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the present disclosure, the network device may be a device configured to communicate with a mobile device, and the network device may be an access point (AP) in a WLAN, a base transceiver station (BTS) in GSM or CDMA, or may be a Node B (NB) in WCDMA, or may be an evolutional Node B (eNB or eNodeB) in LTE, or a relay station or AP, or an in-vehicle device, a wearable device, a network device (gNB) in an NR network, a network device in a future evolved PLMN, a network device in an NTN, etc. By way of explanation rather than limitation, in embodiments of the present disclosure, the network device may be mobile. For example, the network device may be a mobile device. Optionally, the network device may be a satellite or a balloon base station (BS). For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a BS deployed on land or water. In embodiments of the present disclosure, the network device serves a cell, and the terminal device communicates with the network device on a transmission resource (for example, a frequency-domain resource or a spectrum resource) for the cell. The cell may be a cell corresponding to the network device (for example, a BS). The cell may belong to a macro BS, or may belong to a BS corresponding to a small cell. The small cell may include: a metro cell, a micro cell, a pico cell, a femto cell, etc. These small cells are characterized by small coverage and low transmission power and are adapted to provide data transmission service with high-rate.

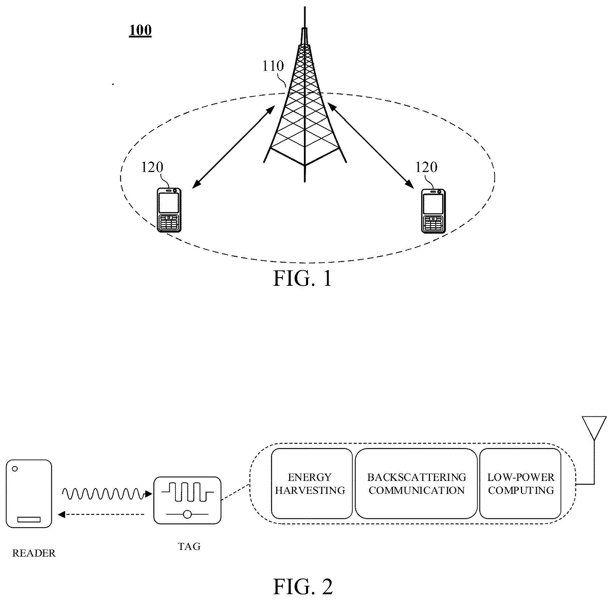

FIG. 1 exemplarily illustrates a communication system 100. The communication system 100 includes one network device 110 and two terminal devices 120. In an embodiment, the communication system 100 may also include multiple network devices 110, and there may be other quantities of terminal devices 120 in the coverage of each network device 110, which is not limited in embodiments of the present disclosure. In a possible embodiment, the communication system 100 may further include other network entities such as a mobility management entity (MME), an access and mobility management function (AMF), etc., which is not limited in embodiments of the present disclosure. The network device may further include an access network (AN) device and a core network (CN) device. That is, the wireless communication system further includes multiple CNs for communication with the AN device. The AN device may be an eNB (or e-NodeB) macro BS, micro BS (also referred to as "small BS"), pico BS, AP, transmission point (TP), new-generation base station (new generation Node B, gNodeB), etc., in a long-term evolution (LTE) system, a next generation (next radio, NR) (mobile communication) system or authorized auxiliary access long-term evolution (LAA-LTE) system. It can be understood that, in embodiments of the present disclosure, a device with communication functions in a network/system may be referred to as a "communication device". Taking the communication system illustrated in FIG. 1 as an example, the communication device may include the network device and the terminal device(s) that have communication functions. The network device and the terminal device(s) may be the devices in embodiments of the present disclosure, which will not be repeated herein. The communication device may further include other devices such as a network controller, an MME, or other network entities in the communication system, which is not limited in embodiments of the present disclosure.

To facilitate the understanding of embodiments of the present disclosure, basic processes and basic concepts involved in embodiments of the present disclosure are briefly described below. It can be understood that, the basic processes and basic concepts introduced below do not limit embodiments of the present disclosure.

Extreme environments, such as high temperature, extremely low temperature, high humidity, high pressure, high radiation, high-speed movement, etc., may be encountered in some Internet of Things (IoT) scenarios, for example, ultra-high voltage power stations, monitoring of railways carrying high-speed trains, environmental monitoring in high-altitude cold areas, industrial production lines, etc. In these scenarios, IoT terminals will not work due to failure of conventional power supplies. In addition, maintenance (e.g., replacing batteries) of IoT terminals becomes challenging under extreme conditions. For some IoT communication scenarios, e.g., goods traceability, commodity circulation, smart wearables, etc., small form-factored terminals are requested for practical use. For example, IoT terminals used for commodity management in circulation are normally in the form of small electronic tags and are embedded into the commodity packaging. As another example, small and lightweight wearable devices can improve the user experience while meeting communication needs. Many IoT communication scenarios ask for IoT terminals with ultra-low cost to enhance competitiveness over other alternative technologies. For example, in logistics or warehousing scenarios, in order to facilitate the management of a large number of goods in circulation, IoT terminals can be attached to each package, such that the accurate management of the whole process and circle of logistics can be completed through communication between the IoT terminals and the logistics network. These scenarios require that the cost of the IoT terminals is sufficiently competitive.

Zero-power communication network is a wireless communication technology suitable for a short distance and a low rate. A zero-power device mainly utilizes technologies such as radio frequency (RF) energy harvesting, backscattering, low-power computing, etc., to enable a device node to operate without carrying a power supply. As illustrated in FIG. 2, a basic architecture of a zero-power system includes a reader and a tag. The tag can have functions such as energy harvesting, backscattering communication, low-power computing, etc. The tag is a type of zero-power terminal. It can be understood that, in actual scenarios, the zero-power terminal may be the tag or an ordinary device, which is not limited herein. The primary technological advantage of the zero-power communication is battery-free communication. By utilizing key technologies such as RF energy harvesting, backscattering, ultra-low power computing, etc., the terminals can operate without batteries while maintaining minimal hardware complexity. Therefore, the zero-power communication can meet the requirements of ultra-low power consumption, very small size, and ultra-low cost. It is foreseeable that zero-power technologies will have significant application advantages in a wide range of application fields, for example, applications such as industrial sensor networks, intelligent transportation, smart logistics, smart warehousing, smart agriculture, smart city, energy, etc., for vertical industries, as well as applications in scenarios smart wearables, smart home, medical care, etc., for individual consumers. In this section, some typical scenarios will be selected to demonstrate the potential applications of the zero-power communication in these fields. When the reader is a network device, the reader has the following requirements (or characteristics). In terms of flexible deployment based on network infrastructure, for example, the reader may be deployed on outdoor light poles or deployed with a distance from a digital indoor system (DIS) indoors, to provide fundamental coverage. For another example, additional deployment can be considered for dead zone or coverage enhancement as required. In terms of coverage requirements, single site needs to provide a coverage greater than 30 m for indoor scenarios and a coverage greater than 100 m for outdoor scenarios. In terms of network security, authorization-based tag reading can protect privacy and data security. In terms of connection requirements, a sufficient system capacity is supported, and reading of data for a large number of terminals is supported.

The zero-power terminal, the zero-power device, or a zero-power IoT terminal include but are not limited to the following characteristics. As for power consumption, the power consumption can be less than 1 mw, and the terminal is passive, battery-free, and maintenance-free. As for the working environment, it is required to be able to adapt to special environments, for example, to work well in special environments such as high temperature, high pressure, extreme cold, radiation, etc. As for size, an extremely small size is convenient for large-scale applications. As for communication distance, the communication distance may range from tens of meters to hundreds of meters. As for material, the material may be a paper tag or anti-metal tag. It can be understood that, the above only illustrates an application scenario of an industrial sensor network. However, the application scenario of the industrial sensor network may also include other requirements, which are not exhaustively enumerated herein. In addition, requirements in other application scenarios may be different from those in the industrial sensor network. For example, in application scenarios of smart logistics and smart warehousing, a requirement for connection may be added (due to a large number of goods, a large number of tags need to be detected at the same time, and therefore thousands of connections per second may need to be implemented). For another example, in an application scenario of smart home, a requirement for communication delay may be added (smart home appliance adjustment: at a level of 10 ms to 100 ms, and housewares positioning: at a level of 100 ms to 1 s), and a requirement for an excitation signal may be added (e.g., a signal of a domestic smart device such as a smart phone, a customer premises equipment (CPE), a Wi-Fi is used as an energy excitation signal of a passive terminal, and no additional excitation signals are required, which simplifies a network layout), etc., which are not exhaustively enumerated herein.

In a zero-power communication system based on backscattering, the zero-power device backscatters a received RF signal that is modulated and reflected by a transmitter, to transmit data, instead of generating an RF signal by itself. This technology has been widely applied in production, such as radio frequency identification (RFID), a tracking device, a remote switch, medical telemetry, a low-cost sensor network, etc. Specifically, the zero-power terminal can include three main modules, namely, energy harvesting, backscattering, and low-power computing. Energy harvesting may also be referred to as "RF energy harvesting", which mainly converts RF energy into direct current (DC). The harvested energy may be stored in batteries or capacitors, or may be used directly to drive logic circuits, digital chips, or sensor devices, so as to complete functions and applications, such as modulation and transmission of a backscattering signal, harvesting and processing of sensor information, etc. A basic principle for RF energy harvesting is to harvest energy of a spatial electromagnetic wave through electromagnetic induction. An essence of the RF energy harvesting is to convert RF energy into DC voltage. In application to the zero-power communication, a core requirement for the RF energy harvesting is to effectively use the harvested energy for the driving of a load circuit (low-power operation, a sensor, etc.), so as to implement battery-free communication. Backscattering technology is a wireless technology that enables signal transmission and coding without an active transmitter. Similar to radar technology, a part of electromagnetic waves will be reflected when they reach the surface of an object. The strength of the reflected signal depends on the shape, material, and distance of the object. From the perspective of a radar, each object has its radar cross section (RCS). The tag achieves modulation of the reflected signal by changing its RCS. A backscattering transmitter transmits data through modulating the received RF signal without generating the RF signal by itself. For example, a backscattering tag is the zero-power terminal, and a backscattering reader sends the RF signal to the backscattering tag via a transmitter (TX) and an amplifier (AMP) through a carrier. After the carrier is received by the backscattering tag, the backscattering tag obtains energy by using its energy harvesting function, drives its logic processing module by using the energy, and then sends the data to be transmitted to the backscattering reader through the reflected signal. The backscattering reader receives the data via a low noise amplifier (LNA) and a receiver (RX). The conversion efficiency of the RF energy is always less than 10%, which determines that the power consumption requirement for driving digital logic circuits or chips for calculation cannot be too high. Although the number of calculations that can be performed with each microjoule of energy has increased with process improvements and design optimization, it still cannot meet the needs of complex calculations.

With the development of the 5G system, the 3rd generation partnership project (3GPP) standard has emerged the need that the zero-power terminal can be supported to access the network in the 5G system. The main scenarios where the zero-power terminal accesses the network have the following characteristics: an extreme environment that is not suitable for an ordinary terminal to work, a terminal with very low-power consumption and cost, and a battery-free terminal. The zero-power communication system may be used in a wireless industrial inductive network, smart agriculture, smart warehousing and logistics, smart home, or other scenarios. The zero-power terminal may be connected to a base station directly, which is referred to as "direct mode". Alternatively, the zero-power device may be connected to the base station through a relay device, which is referred to as "indirect mode".

Based on energy sources and usages of the zero-power terminal, the zero-power terminal can be divided into the following types: passive zero-power terminal, semi-passive zero-power terminal, and active zero-power terminal. The passive zero-power terminal does not require a built-in battery. When the passive zero-power terminal approaches the network device (such as a reader/writer in an RFID system), the passive zero-power terminal is located in a near field formed by radiation of an antenna of the network device. Therefore, the antenna of the passive zero-power terminal generates an induced current through electromagnetic induction, and the induced current drives a low-power chip circuit of the passive zero-power terminal, so as to achieve the demodulation of a forward link signal and the modulation of a reverse link signal. For the backscattering link, the passive zero-power terminal transmits signals through backscattering. It can be seen that, the built-in battery is not required for the passive zero-power terminal to be driven for either the forward link or the reverse link, and thus the passive zero-power terminal is a truly zero-power terminal. The passive zero-power terminal does not require a battery, and the RF circuit and baseband circuit are very simple. For example, the passive zero-power terminal does not require devices such as a low-noise amplifier (LNA), a power amplifier (PA), a crystal oscillator, an analog-to-digital converter (ADC), etc. Therefore, the passive zero-power terminal has many advantages such as small size, light weight, very low price, long service life, etc. This type of passive zero-power terminal can also have the following characteristics: no battery, obtaining energy from the ambient environment (such as radio waves, solar energy, wind energy, mechanical kinetic energy, etc.), no universal subscriber identity module (USIM) card. This type of passive zero-power terminal can also store a certain amount of energy through the ambient environment, but the energy is limited, such that the supported functional logic is much less than that of a general mobile phone terminal. The semi-passive zero-power terminal is not equipped with a conventional battery, but can use an RF energy harvesting module to harvest radio wave energy and store the harvested energy in an energy storage unit (such as a capacitor). After the energy is stored in the energy storage unit, the energy storage unit can drive a low-power chip circuit of the semi-passive zero-power terminal, so as to achieve the demodulation of the forward link signal and the modulation of the reverse link signal. For the backscattering link, the semi-passive zero-power terminal transmits signals through backscattering. It can be seen that, a built-in battery is not required for the semi-passive zero-power terminal to be driven for either the forward link or the reverse link. Although the energy stored in the capacitor is used in operation, the energy comes from the radio energy collected by the energy harvesting module. Therefore, the semi-passive zero-power terminal is also a truly zero-power terminal. The semi-passive zero-power terminal has many identical advantages to the passive zero-power terminal, such as small size, light weight, very low price, long service life, etc. In some scenarios, the zero-power terminal can also be the active zero-power terminal, which can have a built-in battery. The battery is used to drive a low-power chip circuit of the active zero-power terminal, so as to achieve the demodulation of the forward link signal and the modulation of the reverse link signal. However, for the backscattering link, the active zero-power terminal transmits signals through backscattering. Therefore, the zero-power of this type of terminal is mainly reflected in the fact that the signal transmission in the reverse link is performed not with the power of the terminal itself but through backscattering. The active zero-power terminal has the built-in battery to power an RFID chip, so as to increase the reading and writing distance of the tag and improve the reliability of communication. Therefore, the active zero-power terminal is applicable in some scenarios with relatively high requirements for communication distance and reading delay.

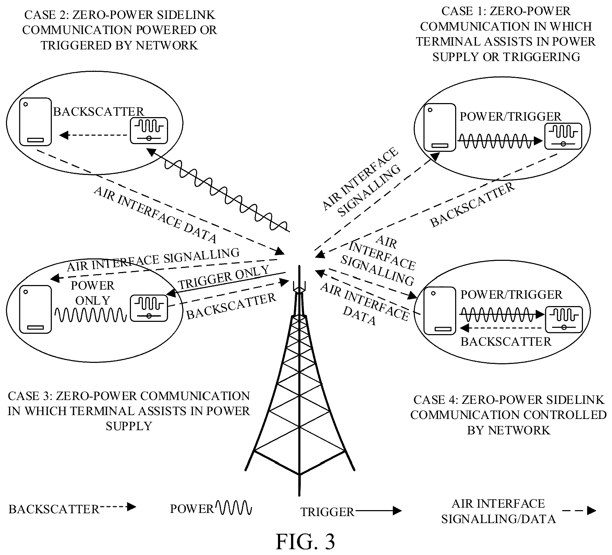

With reference to FIG. 3, the following illustrates different cases of a hybrid zero-power communication system based on cellular communication and/or sidelink communication. Case 1, zero-power communication in which an intelligent terminal assists in power supply or triggering: the zero-power terminal is powered and triggered by the intelligent terminal in the network, and a backscattering signal of the zero-power terminal is received by the base station. The operations of power supply, triggering and power supply, and triggering performed by the intelligent terminal can be controlled by the base station through air interface signalling. In Case 1, the intelligent terminal may be the third device, or may be replaced by an auxiliary base station. In other words, the third device sends a trigger signal to the zero-power terminal to activate and power the zero-power terminal, such that the zero-power terminal can send data to the base station. Case 2, zero-power sidelink communication powered or triggered by the network: the base station provides wireless power supply and sends trigger signalling to the zero-power terminal, and the backscattering signal of the zero-power terminal is received by the intelligent terminal, thereby completing sidelink communication. Further, the intelligent terminal sends air interface data to the base station. Case 3, zero-power communication in which an intelligent terminal assists in power supply: the intelligent terminal in the network provides auxiliary power supply for the zero-power terminal, and the base station sends trigger information to the zero-power terminal and receives the backscattering signal of the zero-power terminal. A process in which the intelligent terminal performs auxiliary power supply for the zero-power terminal may be controlled by the base station through air interface signalling. Case 4, zero-power sidelink communication controlled by the network: the intelligent terminal receives air interface signalling and data of the network. The intelligent terminal powers and triggers the zero-power terminal, and receives a backscattering signal of the zero-power terminal, thereby completing the sidelink communication.

At present, there is no solution for the hybrid zero-power communication system based on cellular communication and/or sidelink communication to prevent an uplink signal from being eavesdropped. In the related art, anti-eavesdropping solutions that mainly focus on a scenario of direct two-way communication between the UE and the zero-power device may include, for example, a method for key-based secure transmission, a method for randomized signal-based secure transmission. In the method for key-based secure transmission, the UE and the zero-power device, through interaction, generate a physical layer key by using some physical layer characteristics (signal strength, etc.), or generate a key by using some lightweight key generation methods, such as a lightweight security suite in the RFID protocol, and then the zero-power device finally encrypts information by using the key and then transmits encrypted information. In the method for randomized signal-based secure transmission, a randomized signal may include a randomized energy supply signal or an energy supply signal superimposed with artificial noise. This method can achieve safety due to that a random rule is known to a legitimate end but unknown to an eavesdropper, such that an eavesdropper is unable to parse useful information, while the legitimate end can correctly parse the useful information by removing a randomized factor. In the scenario of direct two-way communication between the UE and the zero-power device, if the UE uses this method, an eavesdropper that includes multiple antennas can parse the tag information. Further, to prevent eavesdropping, the UE can continuously adjust its antenna, such that a channel from the UE to the eavesdropper changes rapidly. However, in the method for key-based secure transmission, the zero-power device still needs to perform some necessary calculations, such as estimating the signal strength and performing some mathematical operations such as exclusive OR (XOR), which may increase the overhead of the zero-power device. Meanwhile, interaction between the UE and the zero-power device is required for any method for key generation, but in the hybrid zero-power communication system based on cellular communication and/or sidelink communication, the communication link is unidirectional, and the zero-power device cannot interact with other devices, such that a key cannot be generated. Therefore, the method for randomized signal-based secure transmission is only applicable to the scenario of direct two-way communication between the UE and the zero-power device. If the UE continuously adjusts its antenna to make the channel change rapidly, the legitimate end may also fail to estimate the channel, and thus the legitimate end may also fail to parse the tag information.

It can be understood that, the terms "system" and "network" herein are usually used interchangeably throughout this disclosure. The term "and/or" herein only describes an association between associated objects, and indicates that there may be three relationships, for example, A and/or B may mean A alone, both A and B exist, and B alone. In addition, the character "/" herein can indicate that the associated objects are in an "or" relationship. It can be understood that, "indication" referred to in embodiments of the present disclosure may be a direct indication, may be an indirect indication, or may mean that there is an association. For example, A indicates B may mean that A directly indicates B, for instance, B may be obtained according to A, may mean that A indirectly indicates B, for instance, A indicates C, and B may be obtained according to C, or may mean that there is an association between A and B. In the elaboration of embodiments of the present disclosure, the term "correspondence" may mean that there is a direct or indirect correspondence between the two, may mean that there is an association between the two, may mean a relationship of indicating and indicated or configuring and configured, etc.

To facilitate understanding of the technical solutions of embodiments of the present disclosure, the related art of embodiments of the present disclosure will be described in detail below. The following related art as an optional scheme may be arbitrarily combined with the technical solutions of embodiments of the present disclosure, which shall all belong to the protection scope of embodiments of the present disclosure.

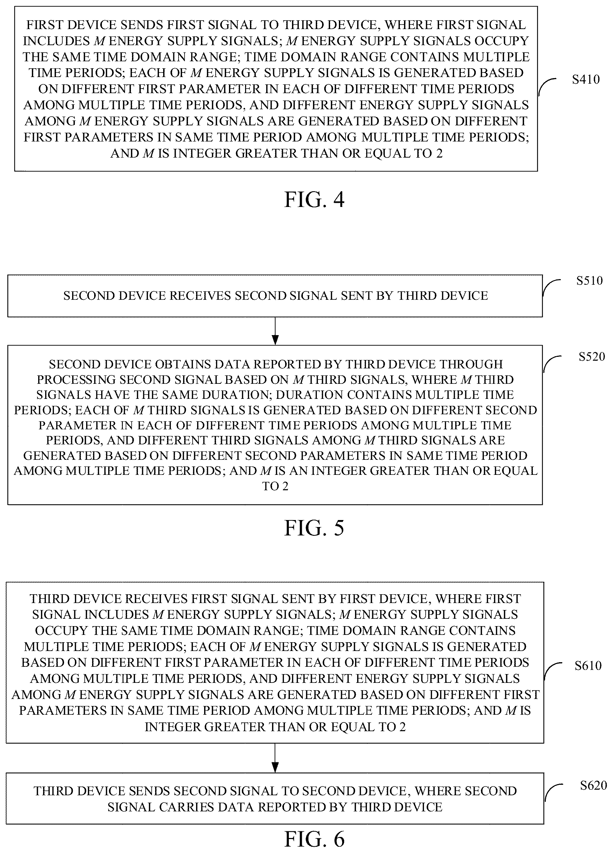

FIG. 4 is a schematic flowchart of a communication method according to an embodiment of the present disclosure. The method includes at least part of the following.

S410, a first device sends a first signal to a third device. The first signal includes $M$ energy supply signals, the $M$ energy supply signals occupy the same time domain range, and the time domain range contains multiple time periods. Each of the $M$ energy supply signals is generated based on a different first parameter in each of different time periods among the multiple time periods, and different energy supply signals among the $M$ energy supply signals are generated based on different first parameters in a same time period among the multiple time periods. $M$ is an integer greater than or equal to 2.

FIG. 5 is a schematic flowchart of a communication method according to another embodiment of the present disclosure. The method includes at least part of the following.

S510, a second device receives a second signal sent by a third device.

S520, the second device obtains data reported by the third device through processing the second signal based on $M$ third signals. The $M$ third signals have the same duration, and the duration contains multiple time periods. Each of the $M$ third signals is generated based on a different second parameter in each of different time periods among the multiple time periods, and different third signals among the $M$ third signals are generated based on different second parameters in a same time period among the multiple time periods. $M$ is an integer greater than or equal to 2.

FIG. 6 is a schematic flowchart of a communication method according to another embodiment of the present disclosure. The method includes at least part of the following.

S610, a third device receives a first signal sent by a first device. The first signal includes $M$ energy supply signals, the $M$ energy supply signals occupy the same time domain range, and the time domain range contains multiple time periods. Each of the $M$ energy supply signals is generated based on a different first parameter in each of different time periods among the multiple time periods, and different energy supply signals among the $M$ energy supply signals are generated based on different first parameters in a same time period among the multiple time periods. $M$ is an integer greater than or equal to 2.

S620, the third device sends a second signal to a second device, where the second signal carries data reported by the third device.

The third device may be a zero-power terminal.

The first device may be a terminal device, such as a UE, or may be other types of terminal devices, which are not exhaustively listed herein. The first device is specifically a device provided with $M$ antennas. For example, the first device may be a terminal device provided with $M$ antennas, the first device may be a UE provided with $M$ antennas, etc., where $M$ is an integer greater than or equal to 2.

The first signal includes $M$ energy supply signals, the $M$ energy supply signals have the same duration, and all the $M$ energy supply signals are sent in the same time domain range. Specifically, the $M$ energy supply signals are sent by the $M$ antennas of the first device, respectively, and different energy supply signals are sent by different antennas among the $M$ antennas. The $M$ antennas are in one-to-one correspondence with the $M$ energy supply signals, and the one-to-one correspondence may be pre-configured. For example, in a case where $M$ is equal to 2, the one-to-one correspondence may be pre-configured as that: the first antenna is configured to send the second energy supply signal, and the second antenna is configured to send the first energy supply signal; alternatively, the one-to-one correspondence may be pre-configured as that: the first antenna is configured to send the first energy supply signal, and the second antenna is configured to send the second energy supply signal, which are not exhaustively listed herein.

The second device may be a network device. The network device may specifically be an access network device or an AP.

It can be noted that, the related illustrations of the first device, the second device, and the third device are applicable to the communication method provided in any one of embodiments corresponding to FIG. 4 to FIG. 6.

In some possible embodiments, before the first device sends the first signal to the third device, the first device can perform the following processing. The first device determines the time domain range occupied by the $M$ energy supply signals, determines a duration of the $M$ energy supply signals, and determines a duration of each of the multiple time periods in the time domain range.

The duration of the $M$ energy supply signals specifically refers to the duration of each of the $M$ energy supply signals. In this embodiment, the $M$ energy supply signals have the same duration. The duration may be preset or determined by the first device. If the duration is preset, it may mean that the duration is specified by a protocol, is preset by the second device for the first device, or is other network devices for the first device. If the duration is determined by the first device, the duration may be determined by the first device based on any one of its processing resources, capability information, a remaining battery level, etc. For example, when the remaining battery level of the first device exceeds a preset threshold value, a first duration may be taken as the duration, and when the remaining battery level of the first device is less than or equal to the preset threshold value, a second duration may be taken as the duration, where the first duration is greater than the second duration.

Since the first signal includes the $M$ energy supply signals, the time domain range occupied by the $M$ energy supply signals may also be alternatively referred to as a time domain range occupied by the first signal, and the duration of the $M$ energy supply signals may also be alternatively referred to as a duration of the first signal. Unless otherwise specified, the time domain range occupied by the $M$ energy supply signals has the same meaning as the time domain range occupied by the first signal, and the duration of the $M$ energy supply signals also has the same meaning as the duration of the first signal, which will not be repeated below.

The time domain range occupied by the $M$ energy supply signals may be determined based on a starting transmission time point of the $M$ energy supply signals and the duration of the $M$ energy supply signals. For example, after the starting transmission time point of the $M$ energy supply signals is determined, in combination with the duration of the $M$ energy supply signals, the starting transmission time point and an ending transmission time point of the $M$ energy supply signals can be determined, and a time domain range between the starting transmission time point (including the starting transmission time point) and the ending transmission time point (including the ending transmission time point) is the time domain range occupied by the $M$ energy supply signals.

The starting transmission time point of the $M$ energy supply signals may be determined by the first device. Exemplarily, the starting transmission time point of the $M$ energy supply signals may be determined by the first device based on configuration information, where the configuration information may contain multiple optional transmission time points. Correspondingly, when a current time reaches one of the multiple optional transmission time points, the first device can take the current time point as the starting transmission time point, and start to send the $M$ energy supply signals, i.e., start to send the first signal including the $M$ energy supply signals. The configuration information may be configured by the second device, may be preset, or may be configured by other network devices other than the second device, and the manner for obtaining the configuration information is not limited in the embodiment. Exemplarily, the starting transmission time point of the $M$ energy supply signals may be determined by the first device based on first indication information from the second device. For example, the first indication information may contain a first time point value, and correspondingly, the first device takes the first time point value as the starting transmission time point of the $M$ energy supply signals (i.e., the first signal including the $M$ energy supply signals). For another example, the first indication information may only indicate that the first device is to send the $M$ energy supply signals. In this case, the first device can take a time point when the first indication information is received as the starting transmission time point of the $M$ energy supply signals (i.e., the first signal including the $M$ energy supply signals).

In some possible embodiments, the time domain range contains multiple time periods, that is, the duration of the $M$ energy supply signals contains multiple time periods. In each two adjacent time periods among the multiple time periods, an ending time point of a previous time period is the same as a starting time point of a subsequent time period. In the multiple time periods, the duration of each of the multiple time periods may be preset, may be determined by the second device, or may be determined by the first device. As long as the duration of each of the multiple time periods used by the first device is the same as the duration of each of the multiple time periods used by the second device, it shall all belong to the protection scope of embodiments of the present disclosure. It may be pointed out that, the same time periods among the multiple time periods contained in different energy supply signals have the same duration.

Optionally, when the duration of each of the multiple time periods is preset, the duration of each of the multiple time periods is related to a reciprocal of an information modulation rate of the third device. In this case, different time periods among the multiple time periods have the same duration. Exemplarily, the duration of each of the multiple time periods may be equal to the reciprocal of the information modulation rate of the third device. For example, the information modulation rate of the third device is denoted as $f_{tag}$, and correspondingly, the duration of each of the multiple time periods may be equal to $1/f_{tag}$. Exemplarily, the duration of each of the multiple time periods may be equal to a first multiple of the reciprocal of the information modulation rate of the third device. For example, the first multiple may be denoted as $a$, where $a$ is a positive number, and in a preferred example, $a$ is a positive integer greater than or equal to 2, the information modulation rate of the third device is denoted as $f_{tag}$, and correspondingly, the duration of each of the multiple time periods may be equal to $a(1/f_{tag})$.

The first multiple may be preset, may be determined by the first device, or may be determined by the second device. As long as a first multiple used by the first device is the same as a first multiple used by the second device, it shall all belong to the protection scope of embodiments of the present disclosure. For example, a same first multiple may be configured for the first device and the second device. For another example, the first multiple may be determined by the second device according to the actual situation, and then sent to the first device by the second device via seventh indication information. Correspondingly, the first device receives the seventh indication information sent by the second device and obtains the first multiple from the seventh indication information. For yet another example, the first multiple may be determined by the first device according to the actual situation, and then sent to the second device by the first device via eighth indication information. Correspondingly, the second device receives the eighth indication information sent by the first device and obtains the first multiple from the eighth indication information. The seventh indication information may be carried in any one of a radio resource control (RRC) message, a medium access control (MAC) control element (CE), downlink control information (DCI), a system broadcast message, etc. The eighth indication information may be carried in any one of an RRC message, an MAC CE, uplink control information (UCI), etc.

Optionally, when the duration of each of the multiple time periods is determined by the second device, before the first device sends the first signal to the third device, the method further includes the following. The first device receives fifth indication information sent by the second device, where the fifth indication information is used for determining the duration of each of the multiple time periods. Correspondingly, when the duration of each of the multiple time periods is determined by the second device, before the second device receives the second signal sent by the third device, the method further includes the following. The second device sends the fifth indication information to the first device, where the fifth indication information is used for determining the duration of each of the multiple time periods. In this case, in the multiple time periods, different time periods have the same duration, or different time periods have different durations. The fifth indication information may be carried in a downlink message, for example, may be carried in any one of an RRC message, an MAC CE, DCI, a system broadcast message, etc.

In a preferred example, the second device may determine the duration of each of the multiple time periods based on the reciprocal of the information modulation rate of the third device. For example, the second device may determine that the duration of each of the multiple time periods is equal to the reciprocal of the information modulation rate of the third device. For another example, the second device may determine that the duration of each of the multiple time periods is equal to the first multiple of the reciprocal of the information modulation rate of the third device. For yet another example, the second device may determine to configure the duration of each of the multiple time periods according to a preset rule, for example, the preset rule is as follows: a duration of the first time period is equal to the reciprocal of the information modulation rate of the third device, a duration of the second time period is equal to the first multiple of the reciprocal of the information modulation rate of the third device, a duration of the third time period is equal to the reciprocal of the information modulation rate of the third device, and a duration of the fourth time period is equal to the first multiple of the reciprocal of the information modulation rate of the third device. The related illustration of the first multiple is the same as that in the foregoing embodiment, which will not be repeated. In another example, the second device may determine the duration of each of the multiple time periods based on other parameters except the information modulation rate of the third device. For example, the second device may configure the duration of each of the multiple time periods according to its own needs. The second device may configure equal durations for different time periods, and/or may configure different durations for different time periods. It can be understood that, the above is only an exemplary illustration, and the manner in which the second device determines the duration of each of the multiple time periods is not limited to the above examples, which are not exhaustively enumerated herein.

Optionally, when the duration of each of the multiple time periods is determined by the first device, before the first device sends the first signal to the third device, the method further includes the following. The first device sends sixth indication information to the second device, where the sixth indication information is used for determining the duration of each of the multiple time periods. Correspondingly, when the duration of each of the multiple time periods is determined by the first device, before the second device receives the second signal sent by the third device, the method further includes the following. The second device receives the sixth indication information sent by the first device, where the sixth indication information is used for determining the duration of each of the multiple time periods. In this case, in the multiple time periods, different time periods have the same duration, or different time periods have different durations. The sixth indication information may be carried in an uplink message, for example, may be carried in any one of an RRC message, an MAC CE, UCI, etc. The manner in which the first device determines the duration of each of the multiple time periods is similar to the manner in which the second device determines the duration of each of the multiple time periods, which will not be repeated.

In some possible embodiments, the first device and the second device need to pre-obtain or preset the same multiple candidate generation parameters. The multiple candidate generation parameters may be preset, may be determined by the second device, or may be determined by the first device. The multiple candidate generation parameters may be multiple candidate amplitude parameters or multiple candidate phase parameters.

In a possible example, the multiple candidate generation parameters are not required to be divided into candidate parameter groups. In this example, the multiple candidate generation parameters may be preset, may be determined by the second device, or may be determined by the first device. Candidate generation parameters at different positions among the multiple candidate generation parameters may be different or the same.

Optionally, when the multiple candidate generation parameters are preset, the multiple candidate generation parameters may be preset in the first device and by the second device, respectively, that is, the first device and the second device preset the same multiple candidate generation parameters. The first device and the second device preset the same multiple candidate generation parameters, which means that a candidate generation parameter at a position among the multiple candidate generation parameters preset in the first device has the same value as a candidate generation parameter at the same position among the multiple candidate generation parameters preset in the second device. Optionally, when the multiple candidate generation parameters are determined by the second device, before the second device receives the second signal sent by the third device, the method further includes the following. The second device sends third indication information to the first device, where the third indication information carries the multiple candidate generation parameters. Correspondingly, when the multiple candidate generation parameters are determined by the second device, before the first device sends the first signal to the third device, the method further includes the following. The first device receives the third indication information sent by the second device, where the third indication information carries the multiple candidate generation parameters. The third indication information may be carried in a downlink message, for example, may be carried in any one of an RRC message, an MAC CE, DCI, a system broadcast message, etc. The second device may determine the multiple candidate generation parameters by using a random number generator, by using the random number generator in a case where a minimum value and a maximum value are provided, or by manually selecting each candidate generation parameter and determining a position of each candidate generation parameter. The specific manner of manual processing is not limited herein. It may be understood that, the above is only an exemplary illustration, and the manner in which the second device determines the multiple candidate generation parameters is not limited to the above examples, which will not be exhaustively illustrated.

Optionally, when the multiple candidate generation parameters are determined by the first device, before the first device sends the first signal to the third device, the method further includes the following. The first device sends fourth indication information to the second device, where the fourth indication information carries the multiple candidate generation parameters. Correspondingly, when the multiple candidate generation parameters are determined by the first device, before the second device receives the second signal sent by the third device, the method further includes the following. The second device receives the fourth indication information sent by the first device, where the fourth indication information carries the multiple candidate generation parameters. The fourth indication information may be carried in an uplink message, for example, may be carried in any one of an RRC message, an MAC CE, UCI, etc. The manner in which the first device determines the multiple candidate generation parameters is similar to the manner in which the second device determines the multiple candidate generation parameters in the foregoing embodiment, which will not be repeated.

In another possible example, the multiple candidate generation parameters are multiple candidate generation parameters in any one of $M$ candidate parameter groups.

In this example, all the multiple candidate generation parameters in each of the $M$ candidate parameter groups may be preset, may be determined by the second device, or may be determined by the first device. Candidate generation parameters at the same position in different candidate parameter groups among the $M$ candidate parameter groups may be the same or different. Preferably, the candidate generation parameters at the same position in different candidate parameter groups among the $M$ candidate parameter groups are different. In addition, the number of candidate generation parameters in different candidate parameter groups among the $M$ candidate parameter groups may be the same, and candidate generation parameters at different positions among the multiple candidate generation parameters in any one of the $M$ candidate parameter groups may be different or the same.

It may be pointed out that, an association between energy supply signals and candidate parameter groups, and an association between third signals and candidate parameter groups may be preset, may be determined by the first device, or may be determined by the second device. The association between energy supply signals and candidate parameter groups means that different candidate parameter groups among the $M$ candidate parameter groups are associated with different energy supply signals, or that different energy supply signals among the $M$ energy supply signals are associated with different candidate parameter groups. For example, in a case where $M$ is equal to 2, the first candidate parameter group is associated with energy supply signal 1, and the second candidate parameter group is associated with energy supply signal 2; alternatively, the first candidate parameter group is associated with energy supply signal 2, and the second candidate parameter group is associated with energy supply signal 1. As long as different candidate parameter groups are associated with different energy supply signals, it shall all belong to the protection scope of embodiments of the present disclosure. The association between third signals and candidate parameter groups means that different candidate parameter groups among the $M$ candidate parameter groups are associated with different third signals, or that different third signals among the $M$ third signals are associated with different candidate parameter groups.

Optionally, the multiple candidate generation parameters are preset, which specifically means that all the multiple candidate generation parameters in each of the $M$ candidate parameter groups are preset. In addition, besides that the multiple candidate generation parameters in each of the $M$ candidate parameter groups are preset, the association between energy supply signals and candidate parameter groups and the association between third signals and candidate parameter groups are also preset. The association between energy supply signals and candidate parameter groups and the association between third signals and candidate parameters group may both be preset in the first device and the second device. Alternatively, the association between energy supply signals and candidate parameter groups may be preset in the first device, and the association between third signals and candidate parameter groups may be preset in the second device. The multiple candidate generation parameters in each of the candidate parameter groups may be preset in the first device and the second device, respectively, that is, the same candidate generation parameter groups each containing multiple candidate generation parameters are preset in both the first device and the second device, respectively. In other words, among the multiple candidate generation parameters in the candidate parameter groups preset in the first device and the second device, respectively, candidate generation parameters at the same position in the same candidate parameter groups have the same value.

Optionally, the multiple candidate generation parameters are determined by the second device, which specifically means that all the multiple candidate generation parameters in each of the $M$ candidate parameter groups are determined by the second device. Before the second device receives the second signal sent by the third device, the method further includes the following. The second device sends the third indication information to the first device, where the third indication information carries the multiple candidate generation parameters in each of the $M$ candidate parameter groups. Correspondingly, when the multiple candidate generation parameters are determined by the second device, before the first device sends the first signal to the third device, the method further includes the following. The first device receives the third indication information sent by the second device, where the third indication information carries the multiple candidate generation parameters in each of the $M$ candidate parameter groups. Further, the association between energy supply signals and candidate parameter groups and the association between third signals and candidate parameter groups may also be determined by the second device. Correspondingly, the third indication information further carries the association between energy supply signals and candidate parameter groups. In an example, the third indication information may carry the association between third signals and candidate parameter groups. In another possible example, the third indication information may not carry the association between third signals and candidate parameter groups.

The second device may determine the multiple candidate generation parameters in each of the $M$ candidate parameter groups by using a random number generator, by using the random number generator in a case where a minimum value and a maximum are provided, or by manually selecting each candidate generation parameter in each candidate parameter group and determining a position of each candidate generation parameter. The specific manner of manual processing is not limited herein.

Optionally, the multiple candidate generation parameters are determined by the first device, which specifically means that all the multiple candidate generation parameters in each of the $M$ candidate parameter groups are determined by the first device. Before the first device sends the first signal to the third device, the method further includes the following. The first device sends the fourth indication information to the second device, where the fourth indication information carries the multiple candidate generation parameters in each of the $M$ candidate parameter groups. Correspondingly, when the multiple candidate generation parameters are determined by the first device, before the second device receives the second signal sent by the third device, the method further includes the following. The second device receives the fourth indication information sent by the first device, where the fourth indication information carries the multiple candidate generation parameters in each of the $M$ candidate parameter groups. Further, the association between energy supply signals and candidate parameter groups and the association between third signals and candidate parameter groups may also be determined by the first device. Correspondingly, the fourth indication information further carries the association between third signals and candidate parameter groups. In an example, the fourth indication information may carry the association between energy supply signals and candidate parameter groups. In another possible example, the fourth indication information may not carry the association between energy supply signals and candidate parameter groups. The manner in which the first device determines the multiple candidate generation parameters in each of the $M$ candidate parameter groups is similar to the manner in which the second device determines the multiple candidate generation parameters provided in the foregoing embodiment, which will not be repeated. The detailed illustrations of the third indication information and the fourth indication information are also the same as those in the foregoing embodiment, which will not be repeated.

In some possible embodiments, the first device and the second device need to pre-obtain or preset the same $M$ selection information groups. Each of the $M$ selection information groups contains multiple selection indication values, and different selection information groups among the $M$ selection information groups are associated with different energy supply signals.

In an example, if the multiple candidate generation parameters are not divided into candidate parameter groups, any selection indication value in each of the $M$ selection information groups indicates a first target sorting position, where the first target sorting position is a position of any one of the multiple candidate generation parameters. Any selection indication value in any selection information group is a positive integer greater than or equal to 1 and less than or equal to the number of multiple candidate generation parameters. In another example, if the multiple candidate generation parameters are divided into the *M* candidate parameter groups, different selection information groups are associated with different energy supply signals, and thus are associated with different candidate parameter groups. In this example, the *m*-th selection information group among the *M* selection indication groups is associated with the *m*-th energy supply signal, and thus is associated with the *m*-th candidate parameter group. Correspondingly, any selection indication value in the *m*-th selection information group indicates a second target sorting position, where the second target sorting position is a position of any one of multiple candidate generation parameters in the *m*-th candidate parameter group. Any selection indication value in the *m*-th selection information group is a positive integer greater than or equal to 1 and less than or equal to the number of multiple candidate generation parameters in the *m*-th candidate parameter group. The *M* selection information groups may be preset, may be determined by the second device, or may be determined by the first device.

Optionally, when the *M* selection information groups are preset, multiple selection indication values in each of the *M* selection information groups may be preset in the first device and the second device, respectively. Optionally, when the *M* selection information groups are determined by the second device, before the first device sends the first signal to the third device, the method further includes the following. The first device receives first indication information sent by the second device, where the first indication information carries the *M* selection information groups. Correspondingly, when the *M* selection information groups are determined by the second device, before the second device receives the second signal sent by the third device, the method further includes the following. The second device sends the first indication information to the first device, where the first indication information carries the *M* selection information groups. The first indication information may be carried in a downlink message, for example, may be carried in any one of an RRC message, an MAC CE, DCI, a system broadcast message, etc.

The second device may determine the multiple selection indication values in each of the *M* selection information groups manually or according to a preset manner. The preset manner may be a manner of random number generation, and the random number may be an integer in a range of a set minimum value and a set maximum value, where the minimum value may be 1, and the maximum value may be equal to the number of multiple candidate generation parameters. The multiple candidate generation parameters may vary with different scenarios. If the multiple candidate generation parameters are not divided into candidate parameter groups, it refers to all the candidate generation parameters. If the multiple candidate generation parameters are divided into candidate parameter groups, it refers to the number of candidate generation parameters in candidate parameter groups related to the selection information groups.

It may be noted that, in the foregoing embodiment, the first indication information, the third indication information, the fifth indication information, and the seventh indication information may be carried in the same downlink message, for example, may be carried in the same RRC message. Alternatively, the first indication information, the third indication information, the fifth indication information, and the seventh indication information may be carried in different downlink messages, for example, may be carried in different RRC messages. For another example, the first indication information, the third indication information, the fifth indication information, and the seventh indication information may be carried in an RRC message, an MAC CE, DCI, and a system broadcast message, respectively. Alternatively, at least two of the first indication information, the third indication information, the fifth indication information, and the seventh indication information may be carried in the same downlink message. For example, the first indication information and the third indication information may be carried in the first RRC message, and the fifth indication information and the seventh indication information may be carried in the first MAC CE, etc. All possible cases are not exhaustively enumerated herein.

Optionally, when the *M* selection information groups are determined by the first device, before the first device sends the first signal to the third device, the method further includes the following. The first device sends second indication information to the second device, where the second indication information carries the *M* selection information groups. Correspondingly, when the *M* selection information groups are determined by the first device, before receiving, before the second device receives the second signal sent by the third device, the method further includes the following. The second device receives the second indication information sent by the first device, where the second indication information carries the *M* selection information groups. The second indication information may be carried in an uplink message, for example, may be carried in any one of an RRC message, an MAC CE, UCI, etc.

It may be noted that, in the foregoing embodiment, the second indication information, the fourth indication information, the sixth indication information, and the eighth indication information may be carried in the same uplink message, for example, may be carried in the same uplink RRC message. Alternatively, the second indication information, the fourth indication information, the sixth indication information, and the eighth indication information may be carried in different uplink messages, for example, may be carried in different uplink RRC messages. For another example, the second indication information, the fourth indication information, the sixth indication information, and the eighth indication information may be carried in an uplink RRC message, an MAC CE, and UCI, respectively. Alternatively, at least two of the second indication information, the fourth indication information, the sixth indication information, and the eighth indication information may be carried in the same uplink message. For example, the second indication information and the sixth indication information may be carried in the second RRC message, the fourth indication information and the eighth indication information may be carried in the third RRC message, etc. All possible cases are not exhaustively enumerated herein.

It may also be noted that, if the first indication information to the eighth indication information need to be sent between the first device and the second device, the first indication information to the eighth indication information may also be encrypted and then sent, where the encryption method may be any encryption method in the related art. In an example, encryption may be performed by using the wired equivalent privacy (WEP) mechanism of rivest cipher 4 (RC4). In another example, encryption may be performed by using access stratum (AS) security technology specified by the 3GPP. In yet another example, encryption may be performed by using internet protocol security (IPSEC). The above is only an exemplary illustration, and all possible encryption manners are not exhaustively listed. The manner in which the first device determines the $M$ selection information groups is similar to the manner in which the second device determines the $M$ selection information groups provided in the foregoing embodiment, which will not be repeated.

Optionally, the first device and the second device can pre-obtain or preset the same association between energy supply signals and selection information groups. The association between energy supply signals and selection information groups refers to an association between different energy supply signals and different selection information groups. The first device and the second device can pre-obtain or preset the same association between third signals and selection information groups. The association between third signals and selection information groups refers to an association between different third signals and different selection information groups. The association between energy supply signals and selection information groups and the association between third signals and selection information groups may be preset, may be determined by the second device, or may be determined by the first device. If the association between energy supply signals and selection information groups is determined by the second device, the first indication information carries not only the $M$ selection information groups but also the association between energy supply signals and selection information groups. If the association between energy supply signals and selection information groups is determined by the first device, the second indication information carries not only the $M$ selection information groups but also the association between energy supply signals and selection information groups. If the association between third signals and selection information groups is determined by the second device, the first indication information carries not only the $M$ selection information groups but also the association between third signals and selection information groups. If the association between third signals and selection information groups is determined by the first device, the second indication information carries not only the $M$ selection information groups but also the association between third signals and selection information groups.

In some possible embodiments, the first device can perform the following processing. The first device determines a respective first parameter for each of the $M$ energy supply signals in each time period based on the multiple candidate generation parameters, and generates the $M$ energy supply signals based on the respective first parameter for each of the $M$ energy supply signals in each time period.

Specifically, the first device determines, based on the multiple candidate generation parameters, a respective first parameter for the $m$-th energy supply signal among the $M$ energy supply signals in each of multiple time periods, and generates the $m$-th energy supply signal based on the respective first parameter for each time period. The first device sends the first signal as follows. The first device obtains the $M$ energy supply signals after generating, in each of the multiple time periods occupied by the $M$ energy supply signals, a respective energy supply signal segment in each time period based on a corresponding first parameter, and sends the first signal including the $M$ energy supply signals in the time domain range occupied by the $M$ energy supply signals. The $m$-th energy supply signal among the $M$ energy supply signals is generated based on the $i$-th first parameter in the $i$-th time period among the multiple time periods, where the $i$-th first parameter is one of the multiple candidate generation parameters, $m$ is a positive integer less than or equal to $M$, and $i$ is a positive integer.

The $i$-th time period may be any one of the multiple time periods, and the processing for the multiple time periods will not be illustrated one by one. It may be pointed out that, the same energy supply signal may correspond to a different first parameter in each of different time periods among the multiple time periods, and different energy supply signals may correspond to different first parameters in the same time period. The $m$-th energy supply signal is any one of the $M$ energy supply signals. Since the processing for each time period for each energy supply signal is the same as the processing for the $i$-th time period for the $m$-th energy supply signal, the processing for each time period for each energy supply signal will not be illustrated one by one. The related illustrations of the $m$-th energy supply signal and the $i$-th time period below are applicable to various time periods for other energy supply signals, which will not be illustrated one by one below.

Among the $M$ energy supply signals, any energy supply signal in a time period may be referred to as "energy supply signal segment", "energy supply signal sub-part", "partial energy supply signal", etc. In other words, any energy supply signal may be included in multiple time periods (i.e., the duration) in the time domain range, i.e., including respective energy supply signal segments (energy supply signal sub-parts, or partial energy supply signals) in time periods. Energy supply signal segments of different energy supply signals in the same time period are generated based on different first parameters. For the sake of simplicity, in the following, the energy supply signal in any time period is referred to as an energy supply signal segment in the any time period.

In some possible embodiments, the first device determines a respective first parameter for each of the $M$ energy supply signals in each time period based on the multiple candidate generation parameters in each of the $M$ candidate parameter groups, and generates the $M$ energy supply signals based on the respective first parameter for each of the $M$ energy supply signals in each time period.

Specifically, the first device determines the $m$-th candidate parameter group associated with the $m$-th energy supply signal among the $M$ energy supply signals based on the association between energy supply signals and candidate parameter groups. The first device determines the respective first parameter for the $m$-th energy supply signal in each of the multiple time periods based on the order of the multiple candidate generation parameters contained in the $m$-th candidate parameter group. The first device generates the $m$-th energy supply signal based on the respective first parameter for the $m$-th energy supply signal in each of the multiple time periods.

To implement this embodiment, the first device needs to have preset or pre-obtained each of the $M$ candidate parameter groups and the association between energy supply signals and candidate parameter groups. For the manner in which the first device presets or pre-obtains each of the $M$ candidate parameter groups and the association between energy supply signals and candidate parameter groups, reference may be made to that in the foregoing embodiment, which will not be repeated herein.

The $i$-th first parameter is the $i$-th candidate generation parameter among the multiple candidate generation parameters in the $m$-th candidate parameter group. The $m$-th candidate parameter group is one of the $M$ candidate parameter groups. Different candidate parameter groups among the $M$ candidate parameter groups are associated with different energy supply signals, and each of the M candidate parameter groups contains multiple candidate generation parameters. The $i$-th first parameter specifically refers to a first parameter used for the $m$-th energy supply signal in the $i$-th time period or a first parameter corresponding to the $m$-th energy supply signal in the $i$-th time period. In the following, unless otherwise specified, the $i$-th first parameter for the $m$-th energy supply signal has the same meaning as the first parameter for the $m$-th energy supply signal in the

$i$-th time period or the first parameter used for or corresponding to the $m$-th energy supply signal in the $i$-th time period, which will not be repeated. The $m$-th candidate parameter group mainly indicates a candidate parameter group associated with the $m$-th energy supply signal, and does not represent the sequence number or number corresponding to the candidate parameter group. For example, the first candidate parameter group associated with the first energy supply signal may actually be a candidate parameter group numbered "02" among the multiple candidate parameter groups. The focus of this embodiment is that different candidate parameter groups are associated with different energy supply signals.

The first device and the second device need to share the same $M$ candidate parameter groups, and different candidate parameter groups among the $M$ candidate parameter groups contain the same number of candidate generation parameters. Exemplarily, the multiple candidate generation parameters in the $m$-th candidate parameter group among the $M$ candidate parameter groups may be in the form of a set. For example, the $m$-th candidate parameter group may specifically be the $m$-th discrete set $\Phi_m$, and the multiple candidate generation parameters in $\Phi_m$ are denoted as $\{\phi_{m1}, \phi_{m2}, \cdots \phi_{mN}\}$, where $N$ is an integer greater than or equal to 2, and $N$ represents the number of multiple candidate generation parameters in $\Phi_m$.

The multiple candidate generation parameters in the $m$-th candidate parameter group may be sorted. Correspondingly, the $i$-th candidate generation parameter may refer to a candidate generation parameter at the $i$-th position among the multiple candidate generation parameters in the $m$-th candidate parameter group. The respective first parameter for the $m$-th energy supply signal in each of the multiple time periods is determined based on the order of the multiple candidate generation parameters in the $m$-th candidate parameter group as follows. The first device selects the candidate generation parameter at the $i$-th position from the multiple candidate generation parameters in the $m$-th candidate parameter group as the $i$-th first parameter for the $m$-th energy supply signal. The $m$-th discrete set $\Phi_m$ is still taken as an example. The $m$-th discrete set $\Phi_m$ contains $N$ candidate generation parameters arranged in sequence, and a candidate generation parameter $\phi_{mi}$ arranged at the $i$-th position among the $N$ candidate generation parameters is taken as the $i$-th first parameter for the $m$-th energy supply signal. It can be understood that, different first parameters are used for different energy supply signals in the same time period, where different first parameters specifically refer to those selected from different candidate parameter groups.

The number of multiple candidate generation parameters in different candidate parameter groups may be the same. The number of multiple candidate generation parameters in each candidate parameter group is greater than or equal to the number of multiple time periods. That is to say, first parameters for different time periods among multiple time periods in the time domain range occupied by any energy supply signal are selected from candidate generation parameters at different positions among the multiple candidate generation parameters in the same candidate parameter group.

In some possible embodiments, the first device determines, based on the multiple selection indication values in each of the $M$ selection information groups, the respective first parameter for each of the $M$ energy supply signals in each time period from the multiple candidate generation parameters, and generates the $M$ energy supply signals based on the respective first parameter for each of the $M$ energy supply signals in each time period.

Specifically, the first device determines the $m$-th selection information group associated with the $m$-th energy supply signal among the $M$ energy supply signals based on the association between energy supply signals and selection information groups. The first device determines, based on multiple selection indication values in the $m$-th selection information group, the respective first parameter for the m-th energy supply signal in each of the multiple time periods from the multiple candidate generation parameters. The first device generates the $m$-th energy supply signal based on the respective first parameter for the $m$-th energy supply signal in each of the multiple time periods. To implement this embodiment, the first device needs to have preset or pre-obtained the multiple candidate generation parameters, the $M$ selection information groups, and the association between energy supply signals and selection parameter groups. For the manner in which the first device presets or pre-obtains the above content, reference may be made to that in the foregoing embodiment, which will not be repeated herein.

The $i$-th first parameter is selected from the multiple candidate generation parameters based on the $i$-th selection indication value in the $m$-th selection information group among the $M$ selection information groups. Each of the $M$ selection information groups contains multiple selection indication values, and different selection information groups among the $M$ selection information groups are associated with different energy supply signals. The $i$-th selection indication value is a positive integer less than or equal to the number of multiple candidate generation parameters.

The $i$-th selection indication value in the $m$-th selection information group indicates a first target sorting position, and the $i$-th first parameter is a candidate generation parameter located at the first target sorting position among the multiple candidate generation parameters. The first device determines, based on the multiple selection indication values in the $m$-th selection information group, the respective first parameter for the $m$-th energy supply signal in each of the multiple time periods from the multiple candidate generation parameters as follows. The first device obtains the $i$-th selection indication value among the multiple selection indication values in the $m$-th selection information group. The first device selects, based on the first target sorting position indicated by the $i$-th selection indication value, a candidate generation parameter located at the first target sorting position from the multiple candidate generation parameters as the $i$-th first parameter for the $m$-th energy supply signal. In this embodiment, each of different energy supply signals is generated based on a respective different first parameter in the same time period, which specifically means that each of different energy supply signals is generated, in the same time period, based on a respective different first parameter selected according to a corresponding different selection information group. The same energy supply signal is generated based on a respective different first parameter in each of different time periods, which specifically means that the same energy supply signal is generated, in each of different time periods, based on a respective first parameter selected according to a corresponding different selection indication value in the same selection information group.

The multiple candidate generation parameters may be sorted, and the multiple candidate generation parameters may be in the form of a set. For example, the multiple candidate generation parameters may be multiple candidate generation parameters in a discrete set. The discrete set may be denoted as $\Phi$, and the multiple candidate generation parameters may be denoted as $\{\phi_1, \phi_2, \cdots \phi_N\}$, where $N$ is an integer greater than or equal to 2, and $N$ represents the number of candidate generation parameters, that is, the multiple candidate generation parameters are specifically $N$ candidate generation parameters. In this embodiment, the number of multiple candidate generation parameters is not limited.

The multiple selection indication values in the $m$-th selection information group are also sorted. The $m$-th selection information group may be an indication value sequence. Assume that the $m$-th selection information group is denoted as $\boldsymbol{k_m}$, $\boldsymbol{k_m} = \left[ k_m^1, k_m^2, \cdots k_m^Q \right]$, where $Q$ is an integer greater than or equal to 2, and $Q$ represents the number of selection indication values in the $m$-th selection information group. The $Q$ selection indication values in $\boldsymbol{k_m}$ are arranged in sequence. For example, $k_m^i$ represents a selection indication value arranged at the $i$-th position among the $Q$ selection indication values, where any selection indication value in the $m$-th selection information group is a positive integer greater than or equal to 1 and less than or equal to the number of multiple candidate generation parameters, i.e., $N$.

In some possible examples, the number of multiple selection indication values in the $m$-th selection information group, i.e., $Q$, may be greater than or equal to the number of multiple time periods. That is to say, a respective first parameter in each of different time periods of multiple time periods in a time domain range occupied by any energy supply signal is selected from the multiple candidate generation parameters based on first target sorting positions indicated by different selection indication values. For example, assume that N is equal to 5, the number of multiple time periods is 20, the number of multiple selection indication values in the m-th selection information group, i.e., Q, is equal to 20, and i is equal to 6. If $k_m^6 = 2$ , it means that a first target sorting position indicated by the 6-th selection indication value in the m-th selection information group is 2, and the 6-th first parameter for the m-th energy supply signal is a candidate generation parameter $\phi_2$ located at the second sorting position among five candidate generation parameters. In some other possible examples, the number of multiple selection indication values in the m-th selection information group, i.e., Q, may be less than the number of multiple time periods. In this example, the multiple selection indication values can be concatenated end to end until the total number of selection indication values obtained is greater than or equal to the number of multiple time periods. For example, $k_m$ contains 12 selection indication values (i.e., Q is equal to 12), the number of multiple time periods is 18, and the 12 selection indication values can be concatenated end to end to form 24 selection indication values. Further, the same manner as mentioned above is still used for determining the i-th selection indication value for the m-th energy supply signal and then determining the i-th first parameter, which will not be repeated.

In some possible embodiments, the first device determines, based on the multiple selection indication values in each of the M selection information groups, the respective first parameter for each of the M energy supply signals in each time period from the multiple candidate generation parameters contained in each of the M candidate parameter groups, and generates the M energy supply signals based on the respective first parameter for each of the M energy supply signals in each time period.

Specifically, the first device determines the m-th selection information group associated with the m-th energy supply signal among the M energy supply signals based on the association between energy supply signals and selection information groups, and determines the m-th candidate parameter group associated with the m-th energy supply signal from the M candidate parameter groups based on the association between energy supply signals and candidate parameter groups. The first device determines, based on the multiple selection indication values in the m-th selection information group, the respective first parameter for the m-th energy supply signal in each of the multiple time periods from the multiple candidate generation parameters in the m-th candidate parameter group. The first device generates the m-th energy supply signal based on the respective first parameter for the m-th energy supply signal in each of the multiple time periods.

The m-th energy supply signal is any one of the M energy supply signals, and the processing for other energy supply signals is the same as that for the m-th energy supply signal, which will not be illustrated one by one. To implement this embodiment, the first device needs to have preset or pre-obtained the multiple candidate parameter groups, the association between energy supply signals and candidate parameter groups, the M selection information groups, and the association between energy supply signals and selection information groups. For the manner in which the first device presets or pre-obtains the above content, reference may be made to that in the foregoing embodiment, which will not be repeated herein.

The i-th first parameter is selected from the multiple candidate generation parameters in the m-th candidate parameter group based on the i-th selection indication value in the m-th selection information group. The m-th candidate parameter group is one of the M candidate parameter groups. Different candidate parameter groups among the M candidate parameter groups are associated with different energy supply signals, and each of the M candidate parameter groups contains multiple candidate generation parameters. The i-th selection indication value is a positive integer less than or equal to the number of multiple candidate generation parameters in the m-th candidate parameter group.

The i-th selection indication value in the m-th selection information group indicates the second target sorting position, and the i-th first parameter is a candidate generation parameter located at the second target sorting position in the m-th candidate parameter group. The first device determines, based on the multiple selection indication values in the m-th selection information group, the respective first parameter for the m-th energy supply signal in each of the multiple time periods from the multiple candidate generation parameters in the m-th candidate parameter group as follows. The first device obtains the i-th selection indication value among the multiple selection indication values in the m-th selection information group. The first device selects, based on the second target sorting position indicated by the i-th selection indication value, a candidate generation parameter located at the second target sorting position from the multiple candidate generation parameters in the m-th candidate parameter group as the i-th first parameter for the m-th energy supply signal. In this embodiment, each of different energy supply signals is generated based on a respective different first parameter in the same time period, which specifically means that each of different energy supply signals is generated, in the same time period, based on a respective different first parameter selected according to a corresponding different selection information group from a corresponding candidate parameter group. The same energy supply signal is generated based on a different first parameter in each of different time periods, which specifically means that the same energy supply signal is generated, in each of different time periods, based on a respective first parameter selected according to a corresponding different selection indication value in the same selection information group from a corresponding candidate parameter group.

The multiple candidate generation parameters in the $m$-th candidate parameter group may be in the form of a set. For example, the multiple candidate generation parameters in the $m$-th candidate parameter group are specifically multiple candidate generation parameters in the $m$-th discrete set. For example, the $m$-th discrete set is denoted as $\Phi_m$, and the multiple candidate generation parameters are denoted as $\{\phi_{m1}, \phi_{m2}, \cdots \phi_{mN}\}$, where $N$ is an integer greater than or equal to 2, and $N$ represents the number of multiple candidate generation parameters in a discrete set.

The multiple selection indication values in the $m$-th selection information group are also sorted. The $m$-th selection information group may be an indication value sequence. Assume that the $m$-th selection information group may be denoted as $\boldsymbol{k}_m$, $\boldsymbol{k}_m = \left[ k_m^1, k_m^2, \cdots k_m^Q \right]$, where $Q$ is an integer greater than or equal to 2, and $Q$ represents the number of selection indication values, that is, the multiple selection indication values in the $m$-th selection information group are specifically $Q$ selection indication values. The $Q$ selection indication values in $\boldsymbol{k}_m$ are arranged in sequence. For example, a selection indication value arranged at the $i$-th position among the $Q$ selection indication values is the $i$-th selection indication value (i.e., $k_m^i$), where any selection indication value in the $m$-th selection information group is a positive integer greater than or equal to 1 and less than or equal to the number of multiple candidate generation parameters in the $m$-th candidate parameter group. The related illustration of the number of multiple selection indication values in the $m$-th selection information group, i.e., $Q$, is the same as that in the foregoing embodiment, which will not be repeated.

The first device can generate and send the first signal through the processing in the foregoing embodiment. Through the illustration of the foregoing embodiment, it can be seen that, the first signal is specifically a first signal including $M$ time-varying energy supply signals. In the following, unless otherwise specified, the $M$ energy supply signals have the same meaning as the $M$ time-varying energy supply signals, which will not be repeated.

In some possible embodiments, the third device can perform the following processing. The third device receives the first signal sent by the first device. The first signal includes $M$ energy supply signals, the $M$ energy supply signals occupy the same time domain range, and the time domain range contains multiple time periods. Each of the $M$ energy supply signals is generated based on a different first parameter in each of different time periods among the multiple time periods, and different energy supply signals among the $M$ energy supply signals are generated based on different first parameters in a same time period among the multiple time periods. $M$ is an integer greater than or equal to 2. The third device sends the second signal to the second device, where the second signal carries data reported by the third device.

The first information includes $M$ energy supply signals. The first signal received by the third device is different from the first signal sent by the first device. Specifically, the first signal received by the third device is a signal obtained after the first signal sent by the first device is transmitted through a channel, where the channel refers to a channel between the third device and the first device or a channel from the first device to the third device. For example, the first signal sent by the first device may be denoted as $f_{M1}(t) = \sum_{m=1}^{M} f_{m1}(t)$, where $f_{m1}(t)$ represents the $m$-th energy supply signal. Since the first signal received by the third device is transmitted to the third device through the channel between the first device and the third device, the first signal received by the third device from the first device may be denoted as $f_{tag}(t) = \sum_{m=1}^{M} h_{UT}^m f_{m1}(t)$, where

$\boldsymbol{h_{UT}} = \begin{bmatrix} h_{UT}^1 & \cdots & h_{UT}^M \end{bmatrix}$, $\boldsymbol{h_{UT}}$ is the channel from the first device to the third device, $\begin{bmatrix} h_{UT}^1 & \cdots & h_{UT}^M \end{bmatrix}$

represents channels through which the $M$ energy supply signals pass from the first device to the third device, respectively, and $f_{tag}(t)$ is the first signal received by the third device.

Before the third device sends the second signal to the second device, the method further includes the following. The third device obtains the second signal through modulating the reported data onto the first signal. The third device obtains the second signal through modulating the reported data onto the first signal as follows. The third device obtains the second signal through modulating the reported data onto the first signal in a specified modulation manner. The specific modulation manner may be preset and may be related to a type of the first parameter used by the first device and the second device. Alternatively, the specified modulation manner may be a modulation manner fixed for the third device, and the type of the first parameter used by the first device and the second device is determined based on the specified modulation manner for the third device. The reported data may be collected by the third device in advance, or may be collected after the energy supply signal is received by the third device. The content of the reported data, the collection manner of the reported data, and the collection timing are not limited in the embodiment.

The third device obtains the second signal through modulating the reported data onto the first signal in the specified modulation manner as follows. The third device obtains the second signal through modulating a mapped value of a to-be-transmitted symbol onto the energy supply signal in the specified modulation manner. The to-be-transmitted symbol includes an information symbol, and the information symbol is the reported data. In the following, unless otherwise specified, the data reported by the third device may be equivalent to the information symbol, which will not be repeated.

The information symbol may be sampled by the third device. For example, there may be multiple information symbols, and the value of each information symbol may be a value collected at one sampling point. For another example, since the information modulation rate $f_{tag}$ of the third device in the zero-power system is not high and the sampling rate is generally greater than $f_{tag}$, one information symbol (i.e., a time range of one information symbol) of the third device may correspond to multiple sampling points, and the value of the information symbol may be obtained by averaging values collected at the multiple sampling points corresponding to the time range of the information symbol, thereby reducing the impact of noise. The to-be-transmitted symbol can also include shared information. The shared information may be a sequence with a length of $L$, and the value of each position in the sequence with the length of $L$ may be preset. It may be noted that, the third device and the second device need to preset the same shared information.

Exemplarily, the value of each position in the sequence with the length of $L$ in the shared information may be the same, for example, all 1 or all 0, or the value of each position in the sequence with the length of $L$ in the shared information may be different, which is not limited herein. In the following, unless otherwise specified, the shared information, the values of the shared information, and the value of each position in the sequence with the length of $L$ in the shared information have the same meaning, which will not be repeated. In a possible example, the shared information may also be referred to as "preamble".

Exemplarily, the to-be-transmitted symbol may be denoted as $r(t)$, and the second signal may be denoted as $Y_{tag}^{ref} = F\left(f_{tag}(t), r(t)\right)$, where $F(f_{tag}(t), r(t))$ represents a modulated signal obtained through modulating $r(t)$ onto the first signal $f_{tag}(t)$.

The multiple candidate generation parameters may be multiple candidate amplitude parameters or multiple candidate phase parameters. Correspondingly, the first parameter may be an amplitude parameter or a phase parameter.

Optionally, when the first parameter is the amplitude parameter, the third device obtains the second signal through modulating the reported data onto the first signal as follows. The third device obtains the second signal through modulating the reported data onto the first signal by using an amplitude modulation (AM). The AM may include amplitude shift keying (ASK). It may be understood that, other AMs may also be used in actual processing, which are not exhaustively listed herein. Optionally, when the first parameter is the phase parameter, the third device obtains the second signal through modulating the reported data onto the first signal as follows. The third device obtains the second signal through modulating the reported data onto the first signal by using a phase modulation (PM). The PM may include phase-shift keying (PSK). It may be understood that, other PMs may also be used in actual processing, which are not exhaustively listed herein.

In some possible embodiments, since the second signal needs to be transmitted to the second device through a channel, the second signal received by the second device is also different from the second signal sent by the third device. The channel may specifically refer to a channel between the third device and the second device or a channel from the third device to the second device. For example, the second signal sent by the third device may be denoted as

$$Y_{tag}^{ref} = F\left(f_{tag}(t), r(t)\right)$$

, and after the second signal sent by the third device is transmitted through the channel between the third device and the second device, the second signal $Y_{BS}$ received by the second device may be denoted as $Y_{BS} = h_{TB}F(f_{tag}(t), r(t))$, where $h_{TB}$ represents the channel between the third device and the second device.

The $M$ third signals may be signals used by the second device to process the second signal, but the $M$ third signals are not signals that need to be sent.

The manner of determining or presetting the duration of the multiple time periods is the same as that in the foregoing embodiment, which will not be repeated. As long as the duration of each of the multiple time periods used by the first device is the same as the duration of each of the multiple time periods used by the second device, it shall belong to the protection scope of embodiments of the present disclosure.

In some possible embodiments, before the second device obtains the data reported by the third device through processing the second signal based on the $M$ third signals, the method further includes the following. The second device generates the $M$ third signals, where the $M$ third signals are $M$ time-varying third signals. In the following, unless otherwise specified, the $M$ third signals have the same meaning as the $M$ time-varying third signals, which is not repeated herein.

The second device can generate each of the $M$ third signals as long as the duration of the $M$ third signals can be determined.

In an example, before the second signal is received by the second device, as long as the duration of the $M$ third signals can be determined, the second device can generate the $M$ third signals in advance. In this example, the duration of the $M$ third signals may be determined in advance. Specifically, the duration of the $M$ third signals may be equal to the duration of the $M$ energy supply signals, and the duration of the $M$ energy supply signals may be preset or may be determined by the first device. If the duration of the $M$ energy supply signals is preset, the duration of the $M$ energy supply signals preset in the first device is the same as the duration of the $M$ energy supply signals preset in the second device. If the duration of the $M$ energy supply signals is determined by the first device, the first device can send the duration of the $M$ energy supply signals to the second device, and the second device receives the duration of the $M$ energy supply signals and then takes the duration of the $M$ energy supply signals as the duration of the $M$ third signals.

In another example, the second device may generate the $M$ third signals after the second signal is received by the second device.

The duration of each of the $M$ third signals may be the same as the duration of the second signal. The duration of the second signal can be determined as follows. After the second device receives the second signal sent by the third device, the second device obtains the duration of the second signal, and then takes the duration of the second signal as the duration of each of the $M$ third signals. Alternatively, the duration of each of the $M$ third signals may be determined in advance, and the duration of each of the $M$ third signals may be equal to the duration of each of the $M$ energy supply signals. The manner of determining the duration of each of the $M$ energy supply signals is the same as that in the foregoing embodiment, which will not be repeated. Different from the foregoing embodiment, in this case, although the second device can determine the duration of each of the $M$ third signals in advance, the second device still generates the $M$ third signals after receiving the second signal.

The second device generates the $M$ third signals as follows. The second device determines, based on the multiple candidate generation parameters, a respective second parameter for the $m$-th third signal among the $M$ third signals in each of the multiple time periods. The second device generates the $m$-th third signal based on the respective second parameter for the $m$-th third signal in each time period. The $m$-th third signal among the $M$ third signals is generated based on the $i$-th second parameter in the $i$-th time period among the multiple time periods, where the $i$-th second parameter is one of the multiple candidate generation parameters, $m$ is a positive integer less than or equal to $M,$ and $i$ is a positive integer.

The $m$-th third signal is any one of the $M$ third signals, and the processing for other third signals is the same as that for the $m$-th third signal, which will not be illustrated one by one. The $i$-th time period may be any one of the multiple time periods, and the processing for the multiple time periods will not be illustrated one by one. The related illustrations of the $m$-th third signal and the $i$-th time period below are applicable to various third signals in various time periods, which will not be illustrated one by one below. Any third signal may contain a respective third signal segment in each of the multiple time periods. Specifically, the third signal segment of the third signal in the $i$-th time period is generated based on the $i$-th second parameter, and the $i$-th second parameter is one of the multiple candidate generation parameters. It may be noted that, the third signal segment may also be referred to as "third signal sub-part", "partial third signal", etc. For the sake of simplicity, in the following, the third signal in any time period is referred to as a third signal segment in the any time period. In addition, the $i$-th time period may be any one of the multiple time periods. Although different second parameters are used in different time periods, the processing for each time period is the same as that for the $i$-th time period, which will not be illustrated one by one.

In some embodiments, the second device determines a respective second parameter for each of the $M$ third signals in each time period based on the multiple candidate generation parameters in each of the $M$ candidate parameter groups, and generates the $M$ third signals based on the respective second parameter for each of the $M$ third signals in each time period.

Specifically, the second device determines the $m$-th candidate parameter group associated with the $m$-th third signal among the $M$ third signals based on the association between third signals and candidate parameter groups. The second device determines the respective second parameter for the $m$-th third signal in each of the multiple time periods based on the order of the multiple candidate generation parameters in the $m$-th candidate parameter group. The second device generates the $m$-th third signal based on the respective second parameter for the $m$-th energy supply signal in each of the multiple time periods.

To implement this embodiment, the second device needs to have preset or pre-obtained each of the $M$ candidate parameter groups and the association between third signals and candidate parameter groups. For the manner in which the second device presets or pre-obtains each of the $M$ candidate parameter groups and the association between third signals and candidate parameter groups, reference may be made to that in the foregoing embodiment, which will not be repeated herein.

The $i$-th second parameter is the $i$-th candidate generation parameter among the multiple candidate generation parameters in the $m$-th candidate parameter group. The $m$-th candidate parameter group is one of the $M$ candidate parameter groups. Different candidate parameter groups among the $M$ candidate parameter groups are associated with different third signals, and each of the $M$ candidate parameter groups contains multiple candidate generation parameters.

The $i$-th second parameter specifically refers to a second parameter used for the $m$-th third signal in the $i$-th time period or a generation parameter corresponding to the $m$-th third signal in the $i$-th time period. In the following, unless otherwise specified, the $i$-th second parameter for the $m$-th third signal has the same meaning as the second parameter for the $m$-th third signal in the $i$-th time period or the second parameter used for or corresponding to the $m$-th third signal in the $i$-th time period, which will not be repeated.

It may be emphasized that, the first device and the second device need to share the same $M$ candidate parameter groups. For example, the $M$ candidate parameter groups are $M$ discrete sets, that is, the first device and the second device share the same $M$ discrete sets. Assume that the $m$-th discrete set among the $M$ discrete sets may be denoted as $\Phi_m$, the $m$-th discrete set $\Phi_m$ contains multiple candidate generation parameters. The form and composition of the $M$ candidate parameter groups are the same as those of the $M$ candidate parameter groups in the embodiment related to the first device, which will not be repeated.

In some embodiments, the second device determines, based on the multiple selection indication values in each of the $M$ selection information groups, the respective second parameter for each of the $M$ third signals in each time period from the multiple candidate generation parameters, and generates the $M$ third signals based on the respective second parameter for each of the $M$ third signals in each time period.

Specifically, the second device determines the $m$-th selection information group associated with the $m$-th third signal among the $M$ third signals based on the association between third signals and selection information groups. The second device determines, based on the multiple selection indication values in the $m$-th selection information group, the respective second parameter for the $m$-th third signal in each of multiple time periods from the multiple candidate generation parameters. The second device generates the $m$-th third signal based on the respective second parameter for the $m$-th third signal in each of the multiple time periods.

To implement this embodiment, the second device needs to have preset or pre-obtained the multiple candidate generation parameters, the $M$ selection information groups, and the association between third signals and selection information groups. For the manner in which the second device presets or pre-obtains the above content, reference may be made to that in the foregoing embodiment, which will not be repeated herein.

The $i$-th second parameter is selected from the multiple candidate generation parameters based on the $i$-th selection indication value in the $m$-th selection information group among the $M$ selection information groups. Each of the $M$ selection information groups contains multiple selection indication values, and different selection information groups among the $M$ selection information groups are associated with different third signals. The $i$-th selection indication value is a positive integer less than or equal to the number of multiple candidate generation parameters.

The $i$-th selection indication value in the $m$-th selection information group indicates the first target sorting position, and the $i$-th second parameter is a candidate generation parameter located at the first target sorting position among the multiple candidate generation parameters. The second device determines, based on the multiple selection indication values in the $m$-th selection information group, the respective second parameter for the $m$-th third signal in each of multiple time periods from the multiple candidate generation parameters as follows. The second device obtains the $i$-th selection indication value among the multiple selection indication values in the $m$-th selection information group. The second device determines, based on the first target sorting position indicated by the $i$-th selection indication value, a candidate generation parameter located at the first target sorting position from the multiple candidate generation parameters as the $i$-th second parameter for the $m$-th third signal.

The multiple candidate generation parameters may be sorted, and the multiple candidate generation parameters may be in the form of a set. For example, the multiple candidate generation parameters may be multiple candidate generation parameters in a discrete set. The specific example that the multiple candidate generation parameters are not divided into the multiple candidate parameter groups is the same as that in the foregoing embodiment, which will not be repeated. In this embodiment, the multiple selection indication values in the $m$-th selection information group are also sorted. The $m$-th selection information group may be an indication value sequence. The specific example of the selection information group is the same as that in the foregoing embodiment, which will not be repeated.

In some possible embodiments, the second device determines, based on the multiple selection indication values in each of the $M$ selection information groups, the respective second parameter for each of the $M$ third signals in each time period from the multiple candidate generation parameters contained in each of the $M$ candidate parameter groups, and generates the $M$ third signals based on the respective second parameter for each of the $M$ third signals in each time period.

Specifically, the second device determines the $m$-th selection information group associated with the $m$-th third signal among the $M$ third signals based on the association between third signals and selection information groups, and determines the $m$-th candidate parameter group associated with the $m$-th third signal from the $M$ candidate parameter groups based on the association between third signals and candidate parameter groups. The second device determines, based on the multiple selection indication values in the $m$-th selection information group, the respective second parameter for the $m$-th third signal in each of the multiple time periods from the multiple candidate generation parameters in the $m$-th candidate parameter group. The second device generates the $m$-th third signal based on the respective second parameter for the $m$-th energy supply signal in each of the multiple time periods.

To implement this embodiment, the second device needs to have preset or pre-obtained the multiple candidate parameter groups, the association between third signals and candidate parameter groups, the $M$ selection information groups, and the association between third signals and selection information groups. For the manner in which the second device presets or pre-obtains the above content, reference may be made to that in the foregoing embodiment, which will not be repeated herein.

The *i*-th second parameter is selected from the multiple candidate generation parameters in the *m*-th candidate parameter group based on the *i*-th selection indication value in the *m*-th selection information group. The *m*-th candidate parameter group is one of the *M* candidate parameter groups. Different candidate parameter groups among the *M* candidate parameter groups are associated with different third signals, and each of the *M* candidate parameter groups contains multiple candidate generation parameters. The *i*-th selection indication value is a positive integer less than or equal to the number of multiple candidate generation parameters in the *m*-th candidate parameter group.

The *i*-th selection indication value in the *m*-th selection information group indicates the second target sorting position, and the *i*-th second parameter is a candidate generation parameter located at the second target sorting position in the *m*-th candidate parameter group.

The second device determines, based on the multiple selection indication values in the *m*-th selection information group, a respective generation parameter for the *m*-th third signal in each of the multiple time periods from the multiple candidate generation parameters in the *m*-th candidate parameter group as follows. The second device obtains the *i*-th selection indication value among the multiple selection indication values in the *m*-th selection information group. The second device determines, based on the second target sorting position indicated by the *i*-th selection indication value, a candidate generation parameter located at the second target sorting position from the multiple candidate generation parameters in the *m*-th candidate parameter group as the *i*-th second parameter for the *m*-th third signal.

The multiple candidate generation parameters in the *m*-th candidate parameter group may be in the form of a set. The specific example that the multiple candidate generation parameters are divided into the multiple candidate parameter groups is the same as that in the foregoing embodiment, which will not be repeated. The multiple selection indication values in the *m*-th selection information group are also sorted. The *m*-th selection information group may be an indication value sequence. The specific example of the *m*-th selection information group is the same as that in the foregoing embodiment, which will not be repeated. The related illustration of the number of multiple selection indication values in the *m*-th selection information group, i.e., *Q*, is the same as that in the foregoing embodiment, which will not be repeated.

It may be pointed out that, the scheme or manner in which the first device selects the *i*-th first parameter for the *m*-th energy supply signal shall be the same as the scheme or manner in which the second device selects the *i*-th second parameter for the *m*-th third signal. In such a way, it can be ensured that the first parameter for the *m*-th energy supply signal in the *i*-th time period is the same as the second parameter for the *m*-th third signal in the *i*-th time period, such that the second device can obtain the data reported by the third device through cancelling the influence of the *M* energy supply signals in the second signal by using the *M* third signals. For example, the first device and the second device may determine, from the same *m*-th candidate parameter group, the respective first parameter for the *m*-th energy supply signal in each time period and the respective second parameter for the *m*-th third signal in each time period, respectively. For another example, both the first device and the second device may use the same *m*-th selection information group and the same multiple candidate generation parameters to determine the respective first parameter for the *m*-th energy supply signal in each time period and the respective second parameter for the *m*-th third signal in each time period, respectively. For yet another example, both the first device and the second device may use the same *m*-th selection information group and the same *m*-th candidate parameter group to determine the respective first parameter for the *m*-th energy supply signal in each time period and the respective second parameter for the *m*-th third signal in each time period, respectively.

The second device can generate *M* time-varying third signals based on the processing for the foregoing embodiment. The *M* third signals generated by the second device may be denoted as

$$f_{M2}(t) = \sum_{m=1}^{M} f_{m2}(t)$$

, where $f_{m2}(t)$ represents the *m*-th third signal. Each of the *M* third signals may contain the respective second parameter corresponding to each of the multiple time periods. In other words, second parameters corresponding to the multiple time periods may be extracted to form the third signal. Alternatively, the *M* third signals may be modulated, but the second device does not need to send the *M* third signals regardless of whether the *M* third signals are modulated.

In some possible embodiments, the second device obtains the data reported by the third device through processing the second signal based on the *M* third signals as follows. The second device obtains a channel estimation value based on the shared information and the *M* third signals. The second device generates *M* cancellation signals based on the channel estimation value and the *M* third signals. The second device obtains the data reported by the third device through cancelling the *M* energy supply signals in the second signal based on the *M* cancellation signals.

The shared information may be a sequence with the length of *L,* where *L* is specifically an integer greater than or equal to 2. The same shared information may be preconfigured or preset for the third device and the second device. The value of each position in the sequence with the length of *L* may all be 1 or 0. Alternatively, the value of each position in the sequence with the length of $L$ may be determined based on a preset rule. For example, if $L$ is equal to 4, the sequence with the length of $L$ may be 1010, or 0101, which are not exhaustively listed herein.

The second device obtains the channel estimation value based on the shared information and the $M$ third signals as follows. The second device obtains the channel estimation value based on the shared information, sampled values of the shared information, and a respective second parameter for each of the $M$ third signals corresponding to the shared information.

The manner of obtaining the sampled values of the shared information may include the following. The second device converts the received second signal into a baseband signal through I/Q demodulations, and samples at $L$ sampling points within the duration of the shared information from the start position of the baseband signal, to obtain the sampled values of the shared information. The sampled values of the shared information may specifically include a sampled value at each of the $L$ sampling points of the shared information. I/Q refers to an in-phase signal and a quadrature signal of a signal that are *cos* component and *sin* component of the signal. Since the second device can preset the shared information and the second device can pre-obtain the information modulation rate of the third device, the second device can determine the duration of the shared information based on the length of the shared information and the information modulation rate.

The respective second parameter for each of the $M$ third signals corresponding to the shared information can refer to a respective second parameter for each of the $M$ third signals corresponding to each of the $L$ sampling points within the duration of the shared information. It may be pointed out that, the foregoing embodiment has illustrated that the multiple candidate generation parameters (or the multiple candidate generation parameters in each candidate parameter group) preset in the first device and the second device are the same, the $M$ selection information groups preset in the first device and the second device are the same, and the scheme in which the first device selects each first parameter for each energy supply signal is the same as the scheme in which the second device selects each second parameter for each third signal. Therefore, the value and position of each second parameter for the $m$-th third signal for the second device are the same as the value and position of each first parameter for the $m$-th energy supply signal for the first device. As such, the respective second parameter for each of the $M$ third signals corresponding to the shared information can also refer to a first parameter at a position for each of the $M$ energy supply signals corresponding to the shared information.

In an example, the duration of each of the multiple time periods may be different from a sampling interval. For example, there are $L$ sampling points, the duration of a time period includes 2 sampling points, and then the first sampling point and the second sampling point may correspond to the same second parameter for any third signal. For example, the first sampling point and the second sampling point among the $L$ sampling points correspond to the first second-parameter for the $m$-th third signal among the $M$ third signals. In an example, the duration of each of the multiple time periods may be the same as the sampling interval. In this case, the second parameter for the $m$-th third signal among the $M$ third signals corresponding to the first sampling point among the $L$ sampling points may be second parameter 1, and the second parameter for the $m$-th third signal among the $M$ third signals corresponding to the second sampling point may be second parameter 2.

The second device obtains the channel estimation value based on the shared information, the sampled values of the shared information, and the respective second parameter for each of the $M$ third signals corresponding to the shared information, which may be related to the type of the actual second parameter. For example, if the second parameter is an amplitude parameter, the second device obtains the channel estimation value based on the shared information, the sampled values of the shared information, and the respective second parameter for each of the $M$ third signals corresponding to the shared information as follows. The second device obtains a first matrix based on the respective second parameter for each of the $M$ third signals corresponding to the shared information. The second device obtains a first result through multiplying the first matrix by the shared information. The second device obtains the channel estimation value through dividing the sampled values of the shared information by the first result.

For another example, if the second parameter is a phase parameter, the second device obtains the channel estimation value based on the shared information, the sampled values of the shared information, and the respective second parameter for each of the $M$ third signals corresponding to the shared information as follows. The second device obtains the first matrix based on the respective second parameter for each of the $M$ third signals corresponding to the shared information. The second device obtains a second result through calculation based on the shared information. The second device obtains a first result through multiplying the first matrix by the second result. The second device obtains the channel estimation value through dividing the sampled values of the shared information by the first result. The second result obtained through calculation based on the shared information may be a second result obtained through calculation by representing the shared information as "$\bar{r}$" and performing the calculation of $e^{j\cdot\bar{r}}$.

The channel estimation value may be denoted as $(h_{TB}\boldsymbol{h_{UT}})'$, where $\boldsymbol{h_{UT}} = \begin{bmatrix} h_{UT}^1 & \cdots & h_{UT}^M \end{bmatrix}$. Preferably, $(h_{TB}\boldsymbol{h_{UT}})'$ may be equal to $h_{TB}\boldsymbol{h_{UT}}$, and for the sake of brevity, the channel estimation value is denoted as $h_{TB}\boldsymbol{h_{UT}}$ hereinafter.

The second device obtains the data reported by the third device through processing the second signal based on the channel estimation value and the M third signals as follows. The second device generates M cancellation signals based on the channel estimation value and the M third signals. The second device obtains the data reported by the third device through processing the second signal based on the M cancellation signals.

As illustrated in the foregoing embodiment, the M third signals may be denoted as

$$f_{M2}(t) = \sum_{m=1}^{M} f_{m2}(t)$$ , and correspondingly, the

M cancellation signals may be obtained through multiplying the channel estimation value by the M third signals, and thus the M cancellation signals may be denoted as

$$f_{BS}(t) = h_{TB} \sum_{m=1}^{M} h_{UT}^{m} f_{m2}(t)$$ .

The second device may obtain the data reported by the third device through processing the second signal based on the M cancellation signals as follows. The second device obtains a symbol transmitted by the third device through processing a baseband signal based on the M cancellation signals. The second device obtains an information symbol through removing the shared information from the symbol transmitted by the third device, where the information symbol is the data reported by the third device. The baseband signal is obtained after the second signal is converted through the I/O. Alternatively, the second device may obtain the data reported by the third device through processing the second signal based on the M cancellation signals as follows. The second device obtains M adjusted cancellation signals through removing a part related to the shared information from each of the M cancellation signals. The second device obtains a remaining baseband signal through removing a part related to the shared information from the baseband signal. The second device obtains an information symbol through processing the remaining baseband signal based on the M adjusted cancellation signals, where the information symbol is the data reported by the third device. The part related to the shared information from each of the M cancellation signals can be removed as follows. A part from the start time of each cancellation signal to the end position of the duration of the shared information is removed from each cancellation signal according to the duration of the shared information. The remaining baseband signal can be obtained through removing the part related to the shared information from the baseband signal as follows. A part from the start time of the baseband signal to the end position of the duration of the shared information is removed from the baseband signal according to the duration of the shared information.

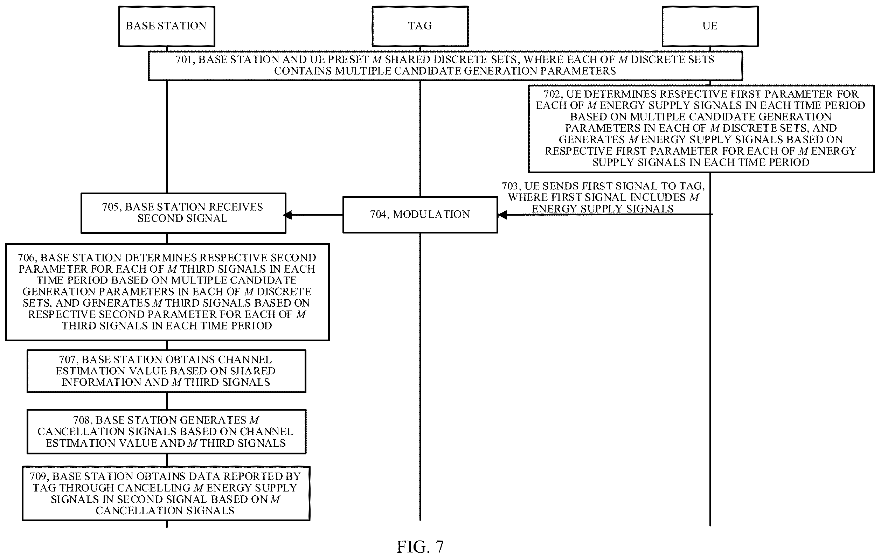

With reference to FIG. 7, a specific implementation of the communication method performed by the first device, the second device, and the third device is illustrated with an example in which the first device is a UE (the UE is provided with M antennas), the second device is a base station, the third device is a tag, and the M candidate parameter groups are M discrete sets.

At 701, the base station and the UE preset M shared discrete sets, where each of the M discrete sets contains multiple candidate generation parameters. Exemplarily, the m-th discrete set among the M discrete sets is denoted as $\Phi_m$, and $\Phi_m$ specifically contains {$\phi_1$, $\phi_2$, $\cdots\phi_N$}, i.e., N candidate generation parameters, where N is an integer greater than or equal to 2. Any candidate generation parameter may represent a certain type of parameter (e.g., an amplitude parameter, a phase parameter, etc.). It may be understood that, all the multiple candidate generation parameters are of the same type, e.g., all candidate amplitude parameters or all candidate phase parameters.

At 702, the UE determines a respective first parameter for each of M energy supply signals in each time period based on the multiple candidate generation parameters in each of the M discrete sets, and generates the M energy supply signals based on the respective first parameter for each of the M energy supply signals in each time period.

For example, the UE generates an energy supply signal segment in each time period based on a respective first parameter corresponding to each of multiple time periods in a time domain range occupied by the m-th energy supply signal. A duration of each of the multiple time periods is equal to 1/ $f_{tag}$ , where $f_{tag}$ is the information modulation rate of the tag. In other words, the UE changes a first parameter for the m-th energy supply signal every 1/ $f_{tag}$. Specifically, when the UE changes the first parameter for the m-th energy supply signal for the i-th time, the UE selects a candidate generation parameter at the i-th sorting position from the discrete set $\Phi_m$ as the i-th first parameter for the m-th energy supply signal, and generates an energy supply signal segment of the m-th energy supply signal in the i-th time period based on the i-th first parameter for the m-th energy supply signal. This process is repeated until energy supply signal segments of the m-th energy supply signal in all the multiple time periods are obtained. Finally, an m-th time-varying energy supply signal is generated. Here, only the m-th energy supply signal is taken as an example for illustrative explanation. In actual processing, the processing for the M energy supply signals is the same as that for the m-th energy supply signal, which are not exhaustively enumerated herein.

At 703, the UE sends a first signal to the tag, where the first signal includes M energy supply signals.

Correspondingly, the tag receives the first signal sent by the UE. In this case, the first signal received by the tag is denoted as $$f_{tag}(t) = \sum_{m=1}^{M} h_{UT}^{m} f_{m1}(t)$$ ,

where $f_{m1}(t)$ represents the m-th energy supply signal. Channels from the M antennas of the UE to the tag may

be denoted as $\boldsymbol{h_{UT}} = \begin{bmatrix} h_{UT}^1 & \cdots & h_{UT}^M \end{bmatrix}$ , where

$\mathrm{h}_{UT}^m$ is a channel from the $m$-th antenna of the UE to the tag, and $f_{tag}(t)$ is the first signal received by the tag.

At 704, the tag obtains a second signal through modulating reported data onto the first signal, and reflects the second signal to the base station.

The reported data may specifically be an information symbol in a to-be-transmitted symbol. The to-be-transmitted symbol may be denoted as $r(t)$, and the to-be-transmitted symbol may be composed of shared information and the information symbol. For the to-be-transmitted symbol, reference may be made to that in the foregoing embodiment, which will not be repeated herein. Specifically, the tag obtains the second signal through modulating the to-be-transmitted symbol onto the energy supply signal in a specified modulation manner, the second signal may be denoted as

$$Y_{tag}^{ref} = F\left(f_{tag}(t), r(t)\right)$$ , where $F(f_{tag}(t),r(t))$ represents a modulated signal obtained through modulating $r(t)$ onto $f_{tag}(t)$.

At 705, the base station receives the second signal.

The second signal received by the base station is a second signal transmitted through a channel between the base station and the tag, and thus the second signal received by the base station may be denoted as $Y_{BS} = h_{TB}F(f_{tag}(t),r(t))$, where $\mathrm{h}_{TB}$ represents a channel from the tag to the base station.

At 706, the base station determines a respective second parameter for each of $M$ third signals in each time period based on the multiple candidate generation parameters in each of the $M$ discrete sets, and generates the $M$ third signals based on the respective second parameter for each of the $M$ third signals in each time period.

For example, when the base station changes a second parameter for the $m$-th third signal for the $i$-th time, the base station selects a candidate generation parameter at the $i$-th sorting position from the discrete set $\Phi_m$ as the $i$-th second parameter. This process is repeated until $m$-th third signals in all the multiple time periods occupied by the $m$-th third signal are obtained. Finally, the $m$-th third signal $f_{m2}(t)$ is generated. Exemplarily, the base station can directly combine the respective second parameter for each time period into the $m$-th third signal. Here, only the $m$-th third signal is taken as an example for illustrative explanation. In actual processing, the processing for the $M$ third signals is the same as that for the $m$-th third signal, which are not exhaustively enumerated herein.

At 707, the base station obtains a channel estimation value based on the shared information and the $M$ third signals.

Exemplarily, the base station can obtain the channel estimation value $h_{TB}h_{UT}$ according to the shared information in the tag signal $r(t)$, sampled values of the shared information, and a respective second parameter for each of the $M$ third signals corresponding to the shared information.

At 708, the base station generates $M$ cancellation signals based on the channel estimation value and the $M$ third signals.

The $M$ cancellation signals can be obtained through directly multiplying the channel estimation value by the $M$ third signals.

Exemplarily, the channel estimation value is denoted as $h_{TB}h_{UT}$, where

$$\boldsymbol{h_{UT}} = \begin{bmatrix} h_{UT}^1 & \cdots & h_{UT}^M \end{bmatrix}$$ . The $M$ third signals are denoted as $\sum_{m=1}^{M} f_{m2}(t)$ . The final $M$ cancellation signals are denoted as

$$f_{BS}(t) = h_{TB}\sum_{m=1}^{M} h_{UT}^m f_{m2}(t) \ .$$

At 709, the base station obtains the data reported by the tag through cancelling the $M$ energy supply signals in the second signal based on the $M$ cancellation signals.

As illustrated in the foregoing embodiment, the second signal received by the base station may be denoted as $Y_{BS} = h_{TB}F(f_{tag}(t),r(t))$, where

$$f_{tag}(t) = \sum_{m=1}^{M} h_{UT}^m f_{m1}(t) \ , \ and \ correspondingly,$$

the M cancellation signals may be converted to

$$f_{BS}(t) = h_{TB}\sum_{m=1}^{M} h_{UT}^m f_{m2}(t) = h_{TB}f_{tag}(t) \ .$$ Therefore, $r(t)$ can be obtained through cancelling the $M$ cancellation signals $f_{BS}(t)$ from the second signal $Y_{BS}$. $r(t)$ is the to-be-transmitted symbol of the tag and is composed of a preamble and the information symbol, the information symbol can be obtained through removing the shared information from $r(t)$, and the information symbol is the data reported by the tag.

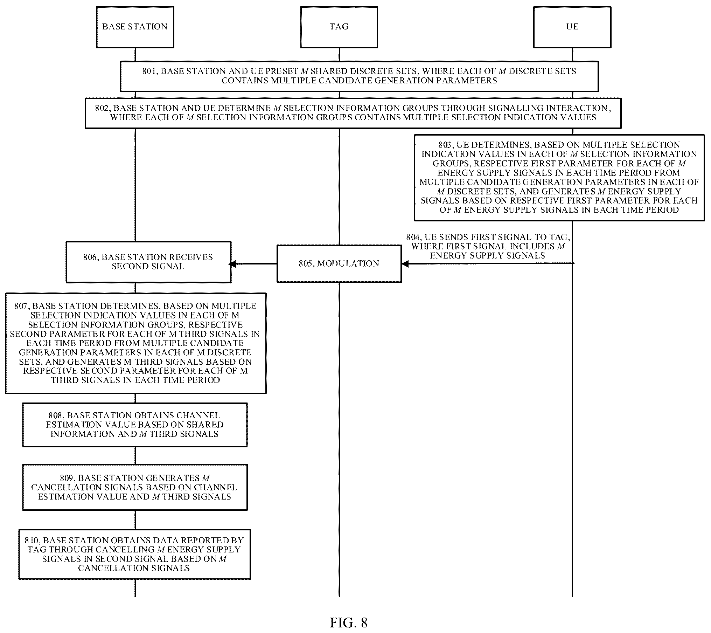

With reference to FIG. 8, a specific implementation of the communication method performed by the first device, the second device, and the third device is illustrated with an example in which the first device is a UE, the second device is a base station, and the third device is a tag.

At 801, the base station and the UE preset $M$ shared discrete sets, where each of the $M$ discrete sets contains multiple candidate generation parameters. The specific illustration of this step is the same as that of 701, which will not be repeated herein.

At 802, the base station and the UE determine $M$ selection information groups through signalling interaction, where each of the $M$ selection information groups contains multiple selection indication values.

The $M$ selection information groups may be generated by the base station and then sent to the UE, or may be generated by the UE and then sent to the base station. The signalling carrying the $M$ selection information groups has been illustrated in the foregoing embodiment, which will not be repeated herein. The $m$-th selection information group among the $M$ selection information groups may be denoted as $\boldsymbol{k}_m$, $\boldsymbol{k}_m = \left[ k_m^1, k_m^2, \cdots k_m^Q \right]$, where $Q$ is an integer greater than or equal to 2, $Q$ represents the number of selection indication values in the $m$-th selection information group, and any selection indication value $k_m^i$ in the $m$-th selection information group is a positive integer greater than or equal to 1 and less than or equal to $N$.

At 803, the UE determines, based on the multiple selection indication values in each of the $M$ selection information groups, a respective first parameter for each of $M$ energy supply signals in each time period from the multiple candidate generation parameters in each of the $M$ discrete sets, and generates the $M$ energy supply signals based on the respective first parameter for each of the $M$ energy supply signals in each time period.

For example, when the UE changes a first parameter for the $m$-th energy supply signal for the $i$-th time, the UE selects a selection indication value at the $i$-th position from the multiple selection indication values in the $m$-th selection information group $\boldsymbol{k}_m$ as the $i$-th selection indication value $k_m^i$. The UE selects, according to the second target sorting position indicated by the $i$-th selection indication value $k_m^i$, a candidate generation parameter at a second target sorting position from the discrete set $\Phi_m$ as the i-th first parameter. The UE generates an energy supply signal segment of the $m$-th energy supply signal in the $i$-th time period based on the $i$-th first parameter. This process is repeated until energy supply signal segments of the $m$-th energy supply signal in all the multiple time periods are obtained. Finally, the $m$-th energy supply signal $f_{m1}(t)$ is generated. Here, only the $m$-th energy supply signal is taken as an example for illustrative explanation. In actual processing, the processing for the $M$ energy supply signals is the same as that for the $m$-th energy supply signal, which are not exhaustively enumerated herein.

At 804, the UE sends a first signal to the tag, where the first signal includes $M$ energy supply signals.

At 805, the tag obtains a second signal through modulating reported data onto the first signal, and reflects the second signal to the base station.

At 806, the base station receives the second signal.

The detailed illustration of the operations at 804 to 806 is the same as that of the operations at 703 to 705 in the foregoing example, which will not be repeated.

At 807, the base station determines, based on the multiple selection indication values in each of the $M$ selection information groups, a respective second parameter for each of $M$ third signals in each time period from the multiple candidate generation parameters in each of the $M$ discrete sets, and generates the $M$ third signals based on the respective second parameter for each of the $M$ third signals in each time period.

For example, when the base station changes a second parameter for the $m$-th third signal for the $i$-th time, the base station selects a selection indication value at the $i$-th position from the multiple selection indication values in the $m$-th selection information group $\boldsymbol{k}_m$ as the i-th selection indication value $k_m^i$. The base station selects, according to the second target sorting position indicated by the $i$-th selection indication value $k_m^i$, a candidate generation parameter at the second target sorting position from the discrete set $\Phi_m$ as the $i$-th second parameter. The base station generates a third signal segment of the $m$-th third signal in the $i$-th time period based on the $i$-th second parameter. This process is repeated until third signal segments of the $m$-th third signal in all the multiple time periods are obtained. Finally, the $m$-th third signal $f_{m2}(t)$ is generated. Exemplarily, the base station can directly combine the second parameter for each time period into the $m$-th third signal.

At 808, the base station obtains a channel estimation value based on shared information and the $M$ third signals.

At 809, the base station generates $M$ cancellation signals based on the channel estimation value and the $M$ third signals.

At 810, the base station obtains the data reported by the tag through cancelling the $M$ energy supply signals in the second signal based on the $M$ cancellation signals.

The detailed illustration of the operations at 808 to 810 is the same as that of the operations at 707 to 709 in the foregoing example, which will not be repeated.

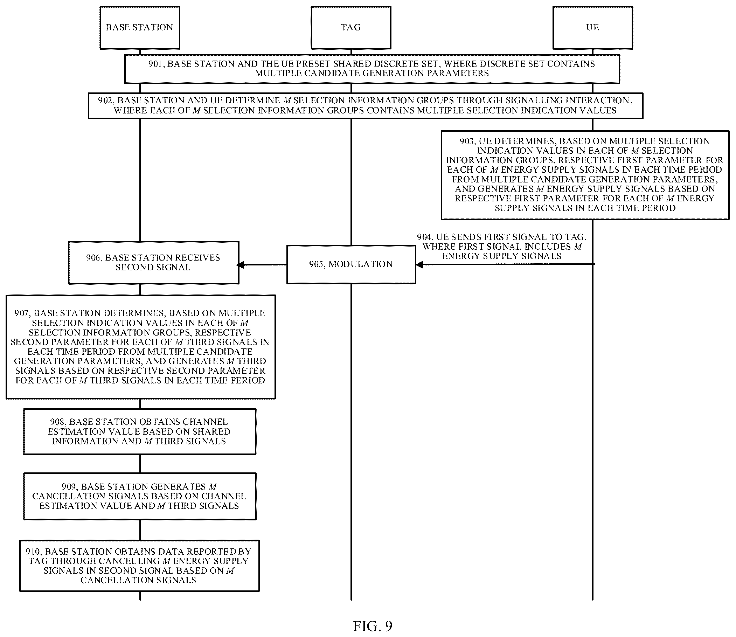

With reference to FIG. 9, a specific implementation of the communication method performed by the first device, the second device, and the third device is illustrated with an example in which the first device is a UE, the second device is a base station, and the third device is a tag.

At 901, the base station and the UE preset a shared discrete set, where the discrete set contains multiple candidate generation parameters.

Exemplarily, the discrete set is denoted as $\Phi$, and $\Phi$ specifically contains $\{\phi_1, \phi_2, \cdots \phi_N\}$, i.e., $N$ candidate generation parameters, where $N$ is an integer greater than or equal to 2. Any candidate generation parameter can represent a certain type of parameter (e.g., an amplitude parameter, a phase parameter, etc.). It may be understood that, all the multiple candidate generation parameters are of the same type, e.g., all candidate amplitude parameters or all candidate phase parameters.

At 902, the base station and the UE determine $M$ selection information groups through signalling interaction, where each of the $M$ selection information groups contains multiple selection indication values.

The detailed illustration of the operations at 902 is the same as that of the operations at 802 in the foregoing example, which will not be repeated herein.

At 903, the UE determines, based on the multiple selection indication values in each of the $M$ selection information groups, a respective first parameter for each of $M$ energy supply signals in each time period from the multiple candidate generation parameters, and generates the $M$ energy supply signals based on the respective first parameter for each of the $M$ energy supply signals in each time period.

For example, when the UE changes a first parameter for the $m$-th energy supply signal for the $i$-th time, the UE selects a selection indication value at the $i$-th position from the multiple selection indication values in the $m$-th selection information group $\boldsymbol{k}_m$ as the $i$-th selection indication value $k_m^i$. The UE selects, according to the first target sorting position indicated by the $i$-th selection indication value $k_m^i$, a candidate generation parameter at a first target sorting position from the discrete set $\Phi$ as the $i$-th first parameter. The UE generates an energy supply signal segment of the $m$-th energy supply signal in the $i$-th time period based on the $i$-th first parameter. This process is repeated until energy supply signal segments of the $m$-th energy supply signal in all the multiple time periods are obtained. Finally, the $m$-th energy supply signal $f_{m1}(t)$ is generated. Here, only the $m$-th energy supply signal is taken as an example for illustrative explanation. In actual processing, the processing for the $M$ energy supply signals is the same as that for the $m$-th energy supply signal, which are not exhaustively enumerated herein.

At 904, the UE sends a first signal to the tag, where the first signal includes $M$ energy supply signals.

At 905, the tag obtains a second signal through modulating reported data onto the first signal, and reflects the second signal to the base station.

At 906, the base station receives the second signal.

The detailed illustration of the operations at 904 to 906 is the same as that of the operations at 703 to 705 in the foregoing example, which will not be repeated.

At 907, the base station determines, based on the multiple selection indication values in each of the $M$ selection information groups, a respective second parameter for each of $M$ third signals in each time period from the multiple candidate generation parameters, and generates the $M$ third signals based on the respective second parameter for each of the $M$ third signals in each time period.

For example, when the base station changes a second parameter for the $m$-th third signal for the $i$-th time, the base station selects a selection indication value at the $i$-th position from the multiple selection indication values in the $m$-th selection information group $\boldsymbol{k}_m$ as the $i$-th selection indication value $k_m^i$. The base station selects, according to the first target sorting position indicated by the $i$-th selection indication value $k_m^i$, a candidate generation parameter at a first target sorting position from the discrete set $\Phi$ as the $i$-th second parameter. The base station generates a third signal segment of the $m$-th third signal in the $i$-th time period based on the $i$-th second parameter. This process is repeated until third signal segments of the $m$-th third signal in all the multiple time periods are obtained. Finally, the $m$-th third signal $f_{m2}(t)$ is generated. Exemplarily, the base station can directly combine the second parameter for each time period into the $m$-th third signal.

At 908, the base station obtains a channel estimation value based on shared information and the $M$ third signals.

At 909, the base station generates $M$ cancellation signals based on the channel estimation value and the $M$ third signals.

At 910, the base station obtains the data reported by the tag through cancelling the $M$ energy supply signals in the second signal based on the $M$ cancellation signals.

The detailed illustration of the operations at 908 to 910 is the same as that of the operations at 707 to 709 in the foregoing example, which will not be repeated.

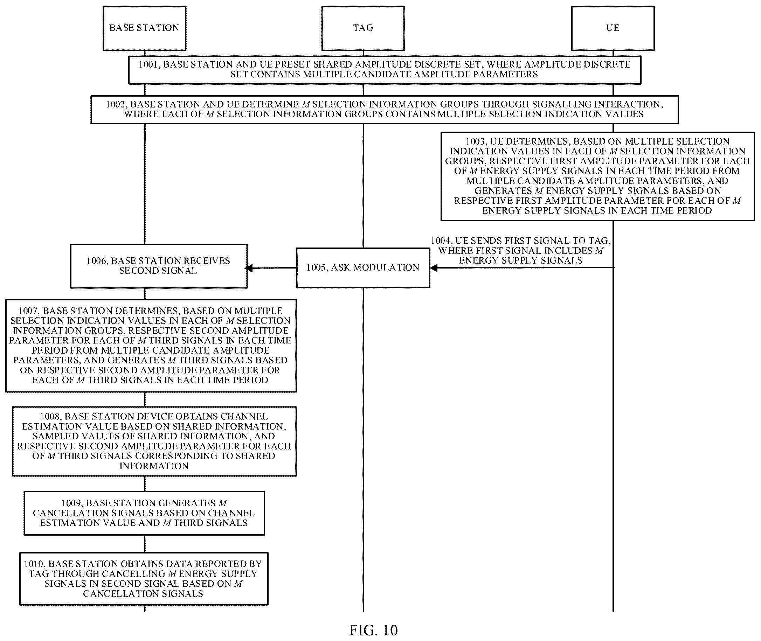

The candidate generation parameters may be candidate amplitude parameters or candidate phase parameters. Based on FIG. 9 and in combination with FIG. 10, an exemplary illustration is given with an example in which the candidate generation parameters are candidate amplitude parameters, the first parameter is a first amplitude parameter, and the second parameter is a second amplitude parameter.

At 1001, the base station and the UE preset a shared amplitude discrete set, where the amplitude discrete set contains multiple candidate amplitude parameters. Exemplarily, the amplitude discrete set is denoted as $\Phi$, and $\Phi$ specifically contains $\{\phi_1, \phi_2, \cdots \phi_N\}$, i.e., $N$ candidate amplitude parameters, where $N$ is an integer greater than or equal to 2. In this example, an amplitude of an energy supply signal is selected as a time-varying factor.

At 1002, the base station and the UE determine $M$ selection information groups through signalling interaction, where each of the $M$ selection information groups contains multiple selection indication values. The detailed illustration of the operations at 1002 is the same as that of the operations at 902 in the foregoing example, which will not be repeated herein.

At 1003, the UE determines, based on the multiple selection indication values in each of the $M$ selection information groups, a respective first amplitude parameter for each of $M$ energy supply signals in each time period from the multiple candidate amplitude parameters, and generates the $M$ energy supply signals based on the respective first amplitude parameter for each of the $M$ energy supply signals in each time period.

For example, the UE generates an energy supply signal segment in each time period based on a respective first amplitude parameter for the $m$-th energy supply signal in each of multiple time periods in a time domain range occupied by the $m$-th energy supply signal among the $M$ energy supply signals. A duration of each of the multiple time periods is equal to $1/f_{tag}$, where $f_{tag}$ is the information modulation rate of the tag. In other words, the UE changes the amplitude parameter for the $m$-th energy supply signal every $1/f_{tag}$. Specifically, when the UE changes the amplitude parameter for the $m$-th energy supply signal for the i-th time, the UE selects a selection indication value at the $i$-th position from the multiple selection indication values in the $m$-th selection information group $\boldsymbol{k}_m$ as the $i$-th selection indication value $k_m^i$. The UE selects, according to the first target sorting position indicated by the $i$-th selection indication value, a candidate amplitude parameter at a first sorting position from the amplitude discrete set $\Phi$ as the $i$-th first amplitude parameter. The UE generates an energy supply signal segment of the m-th energy supply signal in the $i$-th time period based on the $i$-th first amplitude parameter. This process is repeated until energy supply signal segments of the $m$-th energy supply signal in all the multiple time periods are obtained. Finally, the $m$-th energy supply signal $f_{m1}(t){=}A_m(t)cos(\omega t)$ is generated, where $A_m(t)$ contains the first amplitude parameter for the $m$-th energy supply signal in each of the multiple time periods.

At 1004, the UE sends a first signal to the tag, where the first signal includes $M$ energy supply signals.

Correspondingly, the tag receives the first signal sent by the UE. In this case, the first signal received by the tag is $f_{tag}\left(t\right)=\sum_{m=1}^{M}h_{UT}^{m}A_m\left(t\right)\cos\left(\omega t\right)$, and channels from $M$ antennas of the UE to the tag may be denoted as $\boldsymbol{h}_{UT}=\begin{bmatrix} h_{UT}^1 & \cdots & h_{UT}^M \end{bmatrix}$, where $\mathrm{h}_{UT}^{m}$ is a channel from the $m$-th antenna of the UE to the tag, and $f_{tag}(t)$ is the first signal received by the tag.

At 1005, the tag obtains a second signal through modulating reported data onto the first signal by using ASK modulation, and reflects the second signal to the base station.

Specifically, the tag obtains the second signal through modulating a to-be-transmitted symbol onto the energy supply signal by using the ASK modulation, the second signal may be denoted as $Y_{tag}^{ref}=r\left(t\right)\sum_{m=1}^{M}h_{UT}^{m}A_m\left(t\right)\cos\left(\omega t\right)$, where $r(t)$ is the to-be-transmitted symbol. Since the information modulation rate $f_{tag}$ of the tag in the zero-power system is not high and the sampling rate is generally greater than $f_{tag}$, one information symbol of the tag may correspond to multiple sampling points, and values collected at the multiple sampling points corresponding to one information symbol can be averaged, thereby reducing the impact of noise.

At 1006, the base station receives the second signal. The second signal received by the base station is a second signal transmitted through a channel between the base station and the tag, and thus the second signal received by the base station may be denoted as $Y_{BS}=h_{TB}r\left(t\right)\sum_{m=1}^{M}h_{UT}^{m}A_m\left(t\right)\cos\left(\omega t\right)$, where $h_{TB}$ represents a channel from the tag to the base station.

At 1007, the base station determines, based on the multiple selection indication values in each of the M selection information groups, a respective second amplitude parameter for each of M third signals in each time period from the multiple candidate amplitude parameters, and generates the M third signals based on the respective second amplitude parameter for each of the $M$ third signals in each time period.

For example, when the base station changes a second parameter for the $m$-th third signal for the $i$-th time, the base station selects a selection indication value at the $i$-th position from the multiple selection indication values in the $m$-th selection information group $\boldsymbol{k}_m$ as the i-th selection indication value $k_m^i$. The base station selects, according to the first target sorting position indicated by the $i$-th selection indication value $k_m^i$, a candidate amplitude parameter at a first target sorting position from the discrete set $\Phi$ as the $i$-th second amplitude parameter. The base station generates a third signal segment of the $m$-th third signal in the $i$-th time period based on the $i$-th second amplitude parameter. This process is repeated until third signal segments of the $m$-th third signal in all the multiple time periods are obtained. Finally, the $m$-th third signal $A_m(t)$ is generated. Exemplarily, the base station can directly combine the second amplitude parameter for each time period into the $m$-th third signal.

At 1008, the base station device obtains a channel estimation value based on shared information, sampled values of the shared information, and a respective second amplitude parameter for each of the $M$ third signals corresponding to the shared information.

Specifically, the manner in which the channel estimation value is obtained based on the shared information, the sampled values of the shared information, and the second amplitude parameter for each of the $M$ third signals corresponding to the shared information may be expressed by the following matrix formula:

$$\begin{bmatrix} y_1 \\ y_2 \\ \vdots \\ y_L \end{bmatrix} = \begin{bmatrix} \phi_{11} & \phi_{12} & \cdots & \phi_{1M} \\ \phi_{21} & \phi_{22} & \cdots & \phantom{'} \\ \vdots & \vdots & \vdots & \vdots \\ \phi_{L1} & \phi_{L2} & \cdots & \phi_{LM} \end{bmatrix} \begin{bmatrix} h_{TB}h_{UT}^1 \\ h_{TB}h_{UT}^2 \\ \vdots \\ h_{TB}h_{UT}^M \end{bmatrix} \bar{r}$$

Where $y_l$ ($l$ is a positive integer, and $1 \le l \le L$) represents a sampled value of the shared information at the $l$-th sampling point, where a real part is an in-phase component, and an imaginary part is a quadrature component. $\phi_{lm}$ represents a second amplitude parameter for the $m$-th third signal corresponding to the $l$-th sampling point of the shared information (certainly, since the value and position of each second amplitude parameter for the $m$-th third signal are the same as the value and position of each first amplitude parameter for the $m$-th energy supply signal, it can also be referred to as an amplitude of the energy supply signal at a position corresponding to the $l$-th preamble in the $m$-th energy supply signal). $\bar{r}$ represents the value of the shared information in $r(t)$. In the above formula, the channel estimation value $h_{TB}\boldsymbol{h_{UT}}$ is

specifically denoted as $\begin{bmatrix} h_{TB}h_{UT}^1 \\ h_{TB}h_{UT}^2 \\ \vdots \\ h_{TB}h_{UT}^M \end{bmatrix}$.

Based on the above formula, it may be seen that, as long as the base station obtains the shared information, the sampled values of the shared information, and the respective second amplitude parameter for each of the $M$ third signals corresponding to the shared information, the channel estimation value can be calculated based on the shared information, the sampled values of the shared information, and the respective second amplitude parameter for each of the $M$ third signals corresponding to the shared information. For example, the specific calculation manner can include the following. A first matrix is obtained based on the respective second parameter for each of the $M$ third signals corresponding to the shared information. A first result is obtained through multiplying the first matrix by the shared information. The channel estimation value is obtained through dividing the sampled values of the shared information by the first result.

The first matrix may be equal to

$\begin{bmatrix} \phi_{11} & \phi_{12} & \cdots & \phi_{1M} \\ \phi_{21} & \phi_{22} & \cdots & \phi_{2M} \\ \vdots & \vdots & \vdots & \vdots \\ \phi_{L1} & \phi_{L2} & \cdots & \phi_{LM} \end{bmatrix}$ , and the first result may be

equal to $\begin{bmatrix} \phi_{11} & \phi_{12} & \cdots & \phi_{1M} \\ \phi_{21} & \phi_{22} & \cdots & \phi_{2M} \\ \vdots & \vdots & \vdots & \vdots \\ \phi_{L1} & \phi_{L2} & \cdots & \phi_{LM} \end{bmatrix} \bar{r}$ . It may be understood that, the values of the shared information may be the same, such as all 1 or all 0. In addition, $L$ may be greater than or equal to $M$.

At 1009, the base station generates $M$ cancellation signals based on the channel estimation value and the $M$ third signals.

As illustrated in the foregoing steps, the $m$-th third signal is $A_m(t)$. In this step, the $M$ cancellation signals may be denoted as

$$A_{BS}(t) = abs\left(h_{TB}\sum_{m=1}^{M}h_{UT}^m A_m(t)\right),$$ where $abs$ (*)

represents taking the amplitude.

At 1010, the base station obtains the data reported by the tag through cancelling the $M$ energy supply signals in the second signal based on the $M$ cancellation signals.

As mentioned above, the second signal received by the base station may be denoted as

$$Y_{BS} = h_{TB}r(t)\sum_{m=1}^{M}h_{UT}^m A_m(t)\cos(\omega t),$$ and com-

bined with the $M$ cancellation signals

$$A_{BS}(t) = abs\left(h_{TB}\sum_{m=1}^{M}h_{UT}^m A_m(t)\right),$$ it may be concluded that, the amplitude of the second signal may be denoted as $abs(Y_{BS}) = A_{BS}(t)r(t)$. As such, the first time-varying amplitude parameter in the second signal can be cancelled with the $M$ cancellation signals, and finally the information symbol in $r(t)$ is obtained, where the information symbol is the data reported by the tag.

It may be noted that, the example provided in the FIG. 10 is illustrated based on the example provided in FIG. 9. In actual applications, the example provided in the FIG. 10 may also be used in combination with the example in FIG. 7 and the example in FIG. 8. For example, when the example provided in FIG. 10 is applicable to the example in FIG. 7, the operations at 701 include that the base station and the UE preset $M$ shared amplitude discrete sets, where each of the $M$ amplitude discrete sets contains multiple candidate amplitude parameters, the operations at 702 include that the UE determines a respective first amplitude parameter for each of $M$ energy supply signals in each time period based on the multiple candidate amplitude parameters in each of the $M$ amplitude discrete sets, and generates the $M$ energy supply signals based on the respective first amplitude parameter for each of the $M$ energy supply signals in each time period, the operations at 706 include that the base station determines a respective second amplitude parameter for each of $M$ third signals in each time period based on the multiple candidate amplitude parameters in each of the $M$ amplitude discrete sets, and generates the $M$ third signals based on the respective second amplitude parameter for each of the $M$ third signals in each time period, and the operations at 707 to 709 can be directly replaced by the operations at 1008 to 1010. For example, when the example provided in FIG. 10 is applicable to the example in FIG. 8, the operations at 801 include that the base station and the UE preset $M$ shared amplitude discrete sets, where each of the $M$ amplitude discrete sets contains multiple candidate amplitude parameters, the operations at 803 include that the UE determines, based on the multiple selection indication values in each of the $M$ selection information groups, a respective first amplitude parameter for each of $M$ energy supply signals in each time period from the multiple candidate amplitude parameters in each of the $M$ amplitude discrete sets, and generates the $M$ energy supply signals based on the respective first amplitude parameter for each of the $M$ energy supply signals in each time period, the operations at 807 include that the base station determines, based on the multiple selection indication values in each of the $M$ selection information groups, a respective second amplitude parameter for each of $M$ third signals in each time period from the multiple candidate amplitude parameters in each of the $M$ amplitude discrete sets, and generates the $M$ third signals based on the respective second amplitude parameter for each of the $M$ third signals in each time period, and the operations at 808 to 810 can be directly replaced by the operations at 1008 to 1010.

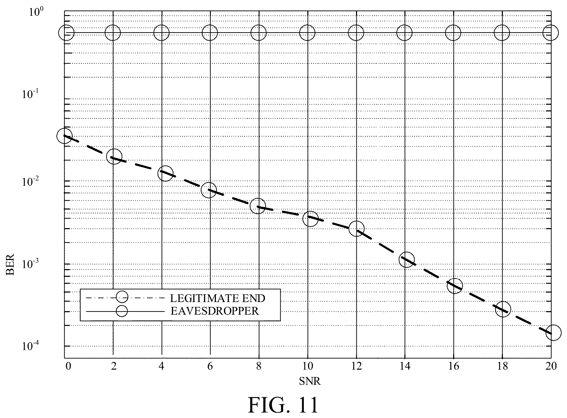

In combination with FIG. 11, results of simulation verification of the example provided in FIG. 10 will be illustrated below. In the simulation verification, a bit error rate of parsing the tag information (i.e., the information symbol) by an eavesdropper and that by a legitimate end are mainly compared, and a channel model used is

$$h = \sqrt{Ld^{-\alpha}G}$$
, where $L$ is a path loss constant and may be denoted as $L = \left(\dfrac{\lambda}{4\pi}\right)^2$ , $\lambda$ is a carrier wave-

length, the carrier frequency is 900 MHZ, a path loss index $\alpha$ is 2, $d$ represents an end-to-end distance and is 10 m in the simulation verification, and $G$ represents small-scale fading and satisfies the distribution CN (0,1) . Assume that a mapping set of the tag by using the ASK is $r(t) \in \{0.9, 0.1\}$ , where 0.9 represents a mapping value for 1 bit, and 0.1 is a mapping value for 0 bit. Assume that the amplitude discrete set is $\phi_1$ = 0.3, and $\phi_2$ = 7. As can be seen from FIG. 11, with the same signal noise ratio (SNR), the BER of the legitimate end (e.g., the base station) parsing the tag information is significantly lower than the BER of the eavesdropper parsing the tag information. For example, when the SNR is equal to 14, the BER of the eavesdropper parsing the tag information is about 0.7, and the BER of the legitimate end parsing the tag information is about

$10^{-3}$. When the SNR is equal to 20, the BER of the eavesdropper parsing the tag information is about 0.7, and the BER of the legitimate end parsing the tag information is close to $10^{-4}$. As can also be seen from FIG. 11, a higher SNR leads to a lower BER of the legitimate end parsing the tag information.

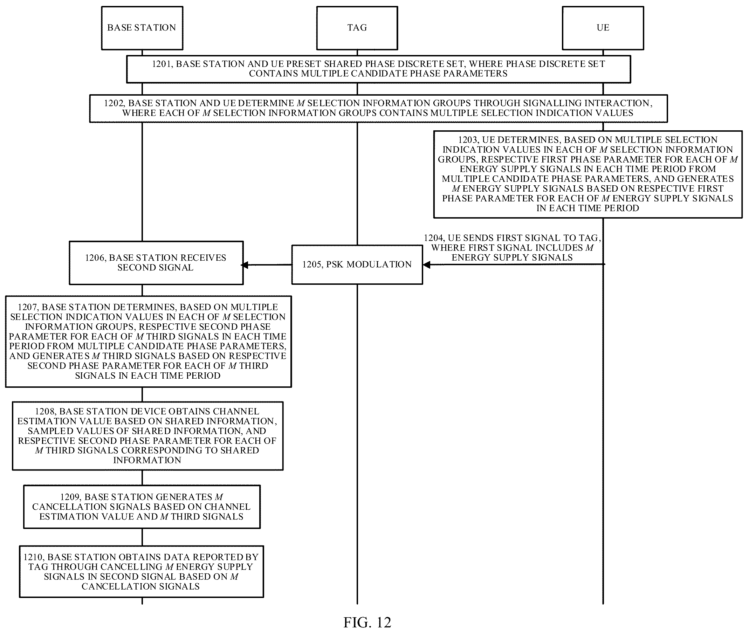

Based on FIG. 9 and in combination with FIG. 12, an exemplary illustration is given with an example in which the candidate generation parameters are candidate phase parameters, the first parameter is a first phase parameter, and the second parameter is a second phase parameter.

At 1201, the base station and the UE preset a shared amplitude discrete set, where the amplitude discrete set contains multiple candidate amplitude parameters. Exemplarily, the amplitude discrete set is denoted as $\Phi$ , and $\Phi$ specifically contains $\{\phi_1, \phi_2, \cdots \phi_N\}$, i.e., $N$ candidate amplitude parameters, where $N$ is an integer greater than or equal to 2. In this example, an amplitude of an energy supply signal is selected as a time-varying factor.

At 1202, the base station and the UE determine $M$ selection information groups through signalling interaction, where each of the $M$ selection information groups contains multiple selection indication values. The detailed illustration of the operations at 1202 is the same as that of the operations at 902 in the foregoing example, which will not be repeated herein.

At 1203, the UE determines, based on the multiple selection indication values in each of the $M$ selection information groups, a respective first phase parameter for each of $M$ energy supply signals in each time period from the multiple candidate phase parameters, and generates the $M$ energy supply signals based on the respective first phase parameter for each of the $M$ energy supply signals in each time period.

For example, the UE generates an energy supply signal segment in each time period based on a respective first phase parameter for the $m$-th energy supply signal in each of multiple time periods in a time domain range occupied by the $m$-th energy supply signal among the $M$ energy supply signals. A duration of each of the multiple time periods is equal to $1/f_{tag}$, where $f_{tag}$ is the information modulation rate of the tag. In other words, the UE changes the phase parameter for the $m$-th energy supply signal every $1/f_{tag}$. Specifically, when the UE changes the phase parameter for the $m$-th energy supply signal for the i-th time, the UE selects a selection indication value at the $i$-th position from the multiple selection indication values in the $m$-th selection information group $k_m$ as the $i$-th selection indication value $k_m^i$ . The UE selects, according to the first target sorting position indicated by the $i$-th selection indication value, a candidate phase parameter at a first sorting position from the phase discrete set $\Phi 1$ as the $i$-th first phase parameter. The UE generates an energy supply signal segment of the $m$-th energy supply signal in the $i$-th time period based on the i-

th first phase parameter. This process is repeated until energy supply signal segments of the $m$-th energy supply signal in all the multiple time periods are obtained. Finally, the $m$-th energy supply signal $f_{m1}(t) = cos(\omega t + \theta_m(t))$ is generated, where $\theta_m(t)$ contains the first phase parameter for the $m$-th energy supply signal in each of the multiple time periods.

At 1204, the UE sends a first signal to the tag, where the first signal includes $M$ energy supply signals.

Correspondingly, the tag receives the first signal sent by the UE. In this case, the first signal received by the tag is $f_{tag}(t) = \sum_{m=1}^{M} h_{UT}^m \cos\left(\omega t + \theta_m(t)\right)$,

and channels from $M$ antennas of the UE to the tag may be denoted as $\boldsymbol{h}_{UT} = \begin{bmatrix} h_{UT}^1 & \cdots & h_{UT}^M \end{bmatrix}$, where

$\mathrm{h}_{UT}^m$ is a channel from the $m$-th antenna of the UE to the tag, and $f_{tag}(t)$ is the first signal received by the tag.

At 1205, the tag obtains a second signal through modulating reported data onto the first signal by using PSK modulation, and reflects the second signal to the base station.

Specifically, the tag obtains the second signal through modulating a to-be-transmitted symbol onto the energy supply signal by using the ASK modulation, the second signal may be denoted as

$Y_{tag}^{ref} = \sum_{m=1}^{M} h_{UT}^m \cos\left(\omega t + \theta_m(t) + r(t)\right)$, where

$r(t)$ is the to-be-transmitted symbol. It can be noted that, in actual applications, since the information modulation rate $f_{tag}$ of the tag in the zero-power system is not high and the sampling rate is generally greater than $f_{tag}$, one information symbol of the tag may correspond to multiple sampling points, and values collected at the multiple sampling points corresponding to one information symbol can be averaged, thereby reducing the impact of noise.

At 1206, the base station receives the second signal. The second signal received by the base station is a second signal transmitted through a channel between the base station and the tag, and thus the second signal received by the base station may be denoted as

$Y_{BS} = h_{TB} \sum_{m=1}^{M} h_{UT}^m \cos\left(\omega t + \theta_m(t) + r(t)\right)$,

where $h_{TB}$ represents a channel from the tag to the base station.

At 1207, the base station determines, based on the multiple selection indication values in each of the $M$ selection information groups, a respective second phase parameter for each of $M$ third signals in each time period from the multiple candidate phase parameters, and generates the $M$ third signals based on the respective second phase parameter for each of the $M$ third signals in each time period.

For example, when the base station changes a second phase parameter for the $m$-th third signal for the $i$-th time, the base station selects a selection indication value at the $i$-th position from the multiple selection indication values in the $m$-th selection information group $k_m$ as the $i$-th selection indication value $k_m^i$. The base station selects, according to the first target sorting position indicated by the $i$-th selection indication value $k_m^i$, a candidate phase parameter at a first target sorting position from the discrete set $\Phi$ as the $i$-th second phase parameter. The base station generates a third signal segment of the $m$-th third signal in the $i$-th time period based on the $i$-th second phase parameter. This process is repeated until third signal segments of the $m$-th third signal in all the multiple time periods are obtained. Finally, the $m$-th third signal is generated. Exemplarily, the base station can directly combine the second phase parameter for each time period into the $m$-th third signal $\theta_m(t)$.

At 1208, the base station device obtains a channel estimation value based on shared information, sampled values of the shared information, and a respective second phase parameter for each of the $M$ third signals corresponding to the shared information.

Specifically, the manner in which the channel estimation value is obtained based on the shared information, the sampled values of the shared information, and the second phase parameter for each of the $M$ third signals corresponding to the shared information may be expressed by the following matrix formula:

$$\begin{bmatrix} y_1 \\ y_2 \\ \vdots \\ y_L \end{bmatrix} = \begin{bmatrix} e^{j\phi_{11}} & e^{j\phi_{12}} & \cdots & e^{j\phi_{1M}} \\ e^{j\phi_{21}} & e^{j\phi_{22}} & \cdots & e^{j\phi_{2M}} \\ \vdots & \vdots & \vdots & \vdots \\ e^{j\phi_{L1}} & e^{j\phi_{L2}} & \cdots & e^{j\phi_{LM}} \end{bmatrix} \begin{bmatrix} h_{TB}h_{UT}^1 \\ h_{TB}h_{UT}^2 \\ \vdots \\ h_{TB}h_{UT}^M \end{bmatrix} e^{j\bar{r}}$$

Where $y_l$ ($l$ is a positive integer, and $1 \le l \le L$) represents a sampled value of the shared information at the $l$-th sampling point, where a real part is an in-phase component, and an imaginary part is a quadrature component. $\phi_{lm}$ represents a second phase parameter for the $m$-th third signal corresponding to the $l$-th sampling point of the shared information. $\bar{r}$ represents the value the shared information in $r(t)$, and the channel estimation

value $h_{TB}\boldsymbol{h}_{UT}$ is specifically denoted as $\begin{bmatrix} h_{TB}h_{UT}^1 \\ h_{TB}h_{UT}^2 \\ \vdots \\ h_{TB}h_{UT}^M \end{bmatrix}$.

Based on the above formula, it may be seen that, as long as the base station obtains the shared information, the sampled values of the shared information, and the respective second phase parameter for each of the $M$ third signals corresponding to the shared information, the channel estimation value can be calculated based on the shared information, the sampled values of the shared information, and the s respective econd phase parameter for each of the $M$ third signals corresponding to the shared information. For example, the specific calculation manner can include the following. A first matrix is obtained based on the respective second phase parameter for each of the $M$ third signals corresponding to the shared information. A second result is calculated based on the shared information. A first result is obtained through multiplying the first matrix by the second result. The channel estimation value is obtained through dividing the sampled values of the shared information by the first result.

The first matrix may be equal to

$$\begin{bmatrix} e^{j\phi_{11}} & e^{j\phi_{12}} & \cdots & e^{j\phi_{1M}} \\ e^{j\phi_{21}} & e^{j\phi_{22}} & \cdots & e^{j\phi_{2M}} \\ \vdots & \vdots & \vdots & \vdots \\ e^{j\phi_{L1}} & e^{j\phi_{L2}} & \cdots & e^{j\phi_{LM}} \end{bmatrix}$$ , and the first result may be equal to $$\begin{bmatrix} e^{j\phi_{11}} & e^{j\phi_{12}} & \cdots & e^{j\phi_{1M}} \\ e^{j\phi_{21}} & e^{j\phi_{22}} & \cdots & e^{j\phi_{2M}} \\ \vdots & \vdots & \vdots & \vdots \\ e^{j\phi_{L1}} & e^{j\phi_{L2}} & \cdots & e^{j\phi_{LM}} \end{bmatrix} e^{j\bar{r}}$$ . It

may be understood that, the values of the shared information may be the same, such as all 1 or all 0. In addition, $L$ may be greater than or equal to $M$.

At 1209, the base station generates $M$ cancellation signals based on the channel estimation value and the $M$ third signals.

As illustrated in the foregoing steps, the $m$-th third signal is $\theta_m(t)$. In this step, the $M$ cancellation signals may be denoted as

$$\theta_{BS}(t) = angle(\sum_{m=1}^{M} h_{TB} h_{UT}^m e^{j\theta_m(t)})$$ , where *angle*

(*) represents taking the phase.

At 1210, the base station obtains the data reported by the tag through cancelling the $M$ energy supply signals in the second signal based on the $M$ cancellation signals.

As mentioned above, *angle* (*) in the $M$ cancellation signals $\theta_{BS}(t) = angle(\sum_{m=1}^{M} h_{TB} h_{UT}^m e^{j\theta_m(t)})$ represents taking the phase, the phase of the second signal may be denoted as $\varphi(t)$, where $\varphi(t) = \theta_{BS}(t)+r(t)$, and $r(t)$ can be obtained according to the following formula:

$$\begin{cases} r(t) = \varphi(t) - \theta_{BS}(t), if\, \varphi(t) > \theta_{BS}(t) \\ r(t) = \varphi(t) - \theta_{BS}(t) + 2\pi, if\, \varphi(t) \le \theta_{BS}(t) \end{cases}$$ .

As such, the information symbol in $r(t)$ can be obtained, where the information symbol is the data reported by the tag.

It may be noted that, the example provided in FIG. 12 is illustrated based on the example provided in FIG. 9. In actual applications, the example provided in FIG. 12 can also be used in combination with the example in FIG. 7 and the example in FIG. 8. For example, when the example provided in FIG. 12 is applicable to the example in FIG. 7, the operations at 701 include that the base station and the UE preset $M$ shared phase discrete sets, where each of the $M$ phase discrete sets contains multiple candidate phase parameters, the operations at 702 include that the UE determines a respective first phase parameter for each of $M$ energy supply signals in each time period based on the multiple candidate phase parameters in each of the $M$ phase discrete sets, and generates the $M$ energy supply signals based on the respective first phase parameter for each of the $M$ energy supply signals in each time period, the operations at 706 include that the base station determines a respective second phase parameter for each of $M$ third signals in each time period based on the multiple candidate phase parameters in each of the $M$ phase discrete sets, and generates the $M$ third signals based on the respective second phase parameter for each of the $M$ third signals in each time period, and the operations at 707 to 709 can be directly replaced by the operations at 1208 to 1210. For example, when the example provided in FIG. 12 is applicable to the example in FIG. 8, the operations at 801 include that the base station and the UE preset $M$ shared phase discrete sets, where each of the $M$ phase discrete sets contains multiple candidate phase parameters, the operations at 803 include that the UE determines, based on the multiple selection indication values in each of the $M$ selection information groups, a respective first phase parameter for each of $M$ energy supply signals in each time period from the multiple candidate phase parameters in each of the $M$ phase discrete sets, and generates the $M$ energy supply signals based on the respective first phase parameter for each of the $M$ energy supply signals in each time period, the operations at 807 include that the base station determines, based on the multiple selection indication values in each of the $M$ selection information groups, a respective second phase parameter for each of $M$ third signals in each time period from the multiple candidate phase parameters in each of the $M$ phase discrete sets, and generates the $M$ third signals based on the respective second phase parameter for each of the $M$ third signals in each time period, and the operations at 808 to 810 can be directly replaced by the operations at 1208 to 1210.

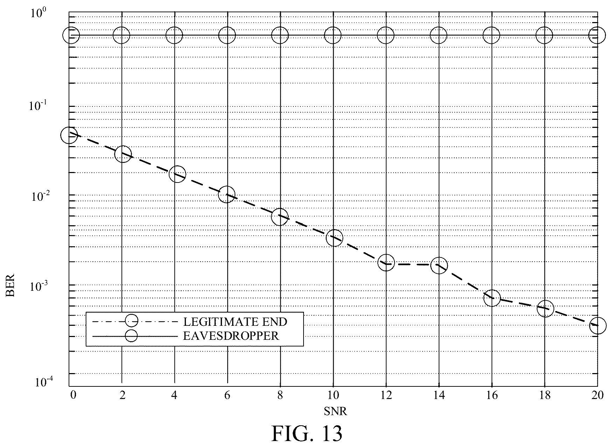

In combination with FIG. 13, results of simulation verification of the example provided in FIG. 12 will be illustrated below. In the simulation verification, the BER of an eavesdropper parsing the tag information and the BER of a legitimate end parsing the tag information are mainly compared. A channel model used in the simulation verification is the same as that in the foregoing example, which will not be repeated herein. Assume that a mapping set of the tag by using the PSK is

$$r(t) \in \left\{ 0, \frac{\pi}{2} \right\}$$ , where 0 represents a mapped value for 1 bit, and $\dfrac{\pi}{2}$ is a mapped value for 0 bit. Assume that the phase discrete set is $\phi_1 = 0$, and $\phi_2 = \dfrac{\pi}{2}$ . As can be seen from FIG. 13, with the same SNR, the BER of the legitimate end (e.g., the base station) parsing the tag information is significantly lower than the BER of the eavesdropper parsing the tag information. Specifically, as can be seen from FIG. 13, with different SNRs, the BER of the eavesdropper parsing the tag information is basically maintained at about 0.7, and the BER of the legitimate end parsing the tag information becomes lower as the SNR increases. For example, when the SNR is 0, the BER of the legitimate end parsing the tag information is about 0.1, when the SNR reaches 6, the BER of the legitimate end parsing the tag information is close to $10^{-2}$, and when the SNR reaches 16, the BER of the legitimate end parsing the tag information is less than $10^{-3}$.

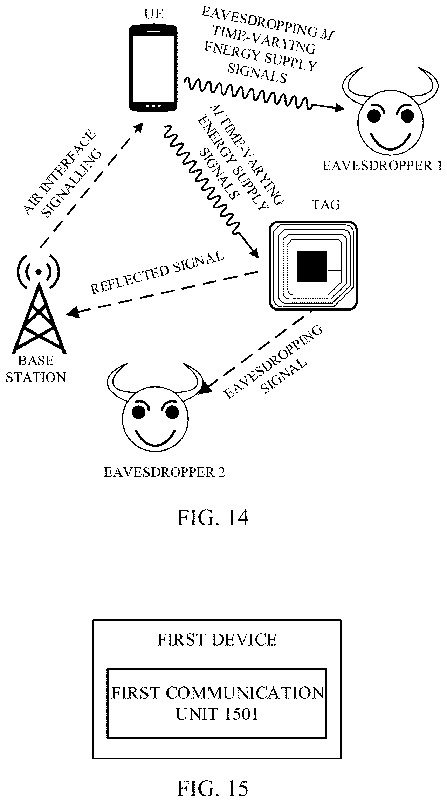

In combination with FIG. 14, embodiments of the present disclosure are illustrated with a scenario in which a first device is a UE, a second device is a base station, and a third device i a tag as an example. The base station and the UE can obtain the same multiple candidate generation parameters (the same multiple candidate generation parameters in each of $M$ candidate parameter groups, or the same multiple selection indication values in each of the $M$ selection information groups) through interaction in advance via air interface signalling. When the UE needs to power and activate the tag, the UE determines a respective first parameter for each of $M$ energy supply signals in each time period based on the multiple candidate generation parameters (the multiple candidate generation parameters in each of $M$ candidate parameter groups, or the multiple selection indication values in each of the $M$ selection information groups), generates $M$ time-varying energy supply signals, and sends a first signal including the $M$ time-varying energy supply signals. The tag obtains a second signal through modulating uploaded data onto the first signal, and reflects the second signal to the base station. The base station obtains $M$ third signals in the same manner as the UE. The base station obtains the data uploaded by the tag through parsing the second signal based on the $M$ third signals. In conjunction with FIG. 14, eavesdropper 1 may eavesdrop on a time-varying energy supply signal (i.e., the $M$ time-varying energy supply signals) during the above processing, but since the interaction of air interface signalling between the base station and the UE can be encrypted, eavesdropper 1 cannot obtain the same multiple candidate generation parameters (the multiple candidate generation parameters in each of $M$ candidate parameter groups, or the multiple selection indication values in each of the $M$ selection information groups) as the UE, and thus eavesdropper 1 cannot parse a time-varying pattern from the time-varying energy supply signal (i.e., the $M$ time-varying energy supply signals). Eavesdropper 2 can obtain an eavesdropping signal from the tag, i.e., can eavesdrop on a reflected signal from the tag, but since the reflected signal from the tag is modulated on $M$ time-varying energy supply signals, and since eavesdropper 2 does not have the same multiple candidate generation parameters (the multiple candidate generation parameters in each of $M$ candidate parameter groups, or the multiple selection indication values in each of the $M$ selection information groups) as the UE, eavesdropper 2 cannot correctly cancel the influence of a channel in the reflected signal from the tag and the influence of different parameters in different time periods.

As can be seen, with the foregoing solutions, the first signal sent by the first device includes $M$ energy supply signals, the $M$ energy supply signals occupy the same time domain range, each of the $M$ energy supply signals is generated based on a different parameter in each of different time periods, and different energy supply signals among the $M$ energy supply signals are generated based on different parameters in the same time period. In this way, the first signal sent by the first device and including the $M$ energy supply signals is a time-varying signal, such that the eavesdroppers cannot parse the data modulated onto the $M$ energy supply signals by the third device due to their inability to obtain the time-varying pattern of the $M$ energy supply signals, thereby ensuring the security of the data uploaded by the third device. In addition, additional technical means or overhead are not required for the foregoing solutions. Especially for the tag that is a zero-power device, no redundant process is added, the tag only needs to perform simple reflection modulation, and the technology supported by the existing zero-power device is not changed. From the perspective of the physical layer, it is only necessary to change some parameters for the energy supply signal, no complex physical layer signal design is required, and secure communication can be achieved through low-complexity operations. Again, in the related art, most of the manners for zero-power secure communication are still aimed at a scenario of two-way communication interaction. In embodiments of the present disclosure, the security problem of uplink signals in unidirectional communication links is solved.

FIG. 15 is a schematic structural diagram of composition of a first device according to an embodiment of the present disclosure. The first device includes a first communication unit 1501. The first communication unit 1501 is configured to send a first signal to a third device. The first signal includes $M$ energy supply signals, the $M$ energy supply signals occupy a same time domain range, and the time domain range contains multiple time periods. Each of the $M$ energy supply signals is generated based on a different first parameter in each of different time periods among the multiple time periods, and different energy supply signals among the $M$ energy supply signals are generated based on different first parameters in a same time period among the multiple time periods. $M$ is an integer greater than or equal to 2.

The $M$ energy supply signals are sent by $M$ antennas of the first device, respectively, and different energy supply signals are sent by different antennas among the $M$ antennas.

The $m$-th energy supply signal among the $M$ energy supply signals is generated based on the $i$-th first parameter in the $i$-th time period among the multiple time periods, where the $i$-th first parameter is one of multiple candidate generation parameters, $m$ is a positive integer less than or equal to $M$, and $i$ is a positive integer.

The $i$-th first parameter is selected from the multiple candidate generation parameters based on the $i$-th selection indication value in the $m$-th selection information group among $M$ selection information groups. Each of the $M$ selection information groups contains multiple selection indication values, and different selection information groups among the $M$ selection information groups are associated with different energy supply signals. The $i$-th selection indication value is a positive integer less than or equal to the number of multiple candidate generation parameters.

The $i$-th selection indication value in the $m$-th selection information group indicates a first target sorting position, and the $i$-th first parameter is a candidate generation parameter located at the first target sorting position among the multiple candidate generation parameters.

The $i$-th first parameter is selected from the multiple candidate generation parameters in the $m$-th candidate parameter group based on the $i$-th selection indication value in the $m$-th selection information group. The $m$-th candidate parameter group is one of $M$ candidate parameter groups. Different candidate parameter groups among the $M$ candidate parameter groups are associated with different energy supply signals, and each of the $M$ candidate parameter groups contains multiple candidate generation parameters. The $i$-th selection indication value is a positive integer less than or equal to the number of multiple candidate generation parameters in the $m$-th candidate parameter group.

The $i$-th selection indication value in the $m$-th selection information group indicates a second target sorting position, and the $i$-th first parameter is a candidate generation parameter located at the second target sorting position in the $m$-th candidate parameter group.

The $i$-th first parameter is the $i$-th candidate generation parameter among multiple candidate generation parameters in an $m$-th candidate parameter group. The $m$-th candidate parameter group is one of $M$ candidate parameter groups. Different candidate parameter groups among the $M$ candidate parameter groups are associated with different energy supply signals, and each of the $M$ candidate parameter groups contains multiple candidate generation parameters.

The multiple candidate generation parameters are multiple candidate amplitude parameters or multiple candidate phase parameters.

The $M$ selection information groups are preset, determined by a second device, or determined by the first device.

In the case where the $M$ selection information groups are determined by the second device, before the first communication unit is configured to send the first signal to the third device, the first communication unit is configured to receive first indication information sent by the second device before, where the first indication information carries the $M$ selection information groups.

In the case where the $M$ selection information groups are determined by the second device, before the first communication unit is configured to send the first signal to the third device, the first communication unit is configured to send second indication information to the second device, where the second indication information carries the $M$ selection information groups.

The multiple candidate generation parameters are preset, determined by the second device, or determined by the first device.

In the case where the multiple candidate generation parameters are determined by the second device, before the first communication unit is configured to send the first signal to the third device, the first communication unit is configured to receive third indication information sent by the second device, where the third indication information carries the multiple candidate generation parameters.

In the case where the multiple candidate generation parameters are determined by the first device, before the first communication unit is configured to send the first signal to the third device, the first communication unit is configured to send fourth indication information to the second device, where the fourth indication information carries the multiple candidate generation parameters.

A duration of each of the multiple time periods is preset, or determined by the second device, or determined by the first device.

In the case where the duration of each of the multiple time periods is preset, the duration of each of the multiple time periods is equal to a reciprocal of an information modulation rate of the third device.

In the case where the duration of each of the multiple time periods is determined by the second device, before the first communication unit is configured to send the first signal to the third device, the first communication unit is configured to receive fifth indication information sent by the second device, where the fifth indication information is used for determining the duration of each of the multiple time periods.

In the case where the duration of each of the multiple time periods is determined by the first device, before the first communication unit is configured to send the first signal to the third device, the first communication unit is configured to send sixth indication information to the second device, where the sixth indication information is used for determining the duration of each of the multiple time periods.

The first device is a terminal device, and the third device is a zero-power device.

The first device in embodiments of the present disclosure can implement corresponding functions of the first device in the foregoing communication method embodiments. It can be understood that, the first device can also be provided with a first processing unit. The first processing unit can perform the operations such as selecting the first parameter, generating the $M$ energy supply signals, etc., implemented by the first device in the communication method embodiment. For the procedure, function, implementation, and advantage corresponding to each module (sub-module, unit, assembly, etc.) in the first device, reference may be made to the corresponding illustrations in the foregoing method embodiments, which will not be described in detail again herein. It can be noted that, the functions of various modules (sub-modules, units, assemblies, etc.) in the first device in embodiments of the present disclosure may be implemented by different modules (sub-modules, units, assemblies, etc.), or may be implemented by the same module (sub-module, unit, assembly, etc.).

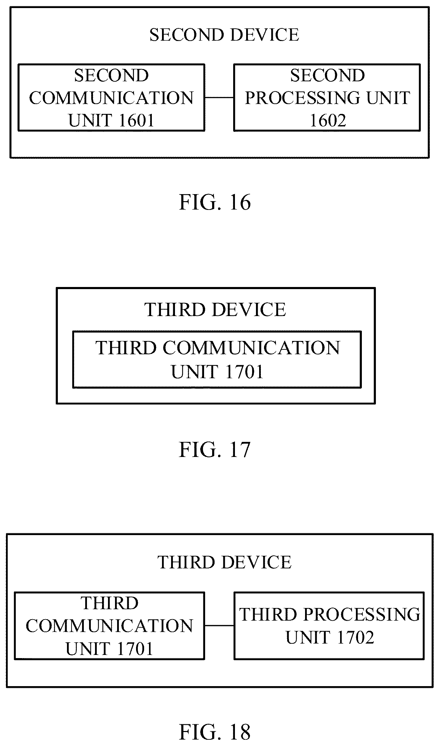

FIG. 16 is a schematic structural diagram of composition of a second device according to an embodiment of the present disclosure. The second device includes a second communication unit 1601 and a second processing unit 1602. The second communication unit 1601 is configured to receive a second signal sent by a third device. The second processing unit 1602 is configured to obtain data reported by the third device through processing the second signal based on $M$ third signals. The $M$ third signals have the same duration, and the duration contains multiple time periods. Each of the $M$ third signals is generated based on a different second parameter in each of different time periods among the multiple time periods, and different third signals among the $M$ third signals are generated based on different second parameters in a same time period among the multiple time periods. $M$ is an integer greater than or equal to 2.

The second processing unit is configured to obtain a channel estimation value based on shared information and the $M$ third signals. The second processing unit is configured to generate $M$ cancellation signals based on the channel estimation value and the $M$ third signals. The second processing unit is configured to obtain the data reported by the third device through cancelling $M$ energy supply signals in the second signal based on the $M$ cancellation signals.

The $m$-th third signal among the $M$ third signals is generated based on the $i$-th second parameter in the $i$-th time period among the multiple time periods, where the $i$-th second parameter is one of multiple candidate generation parameters, $m$ is a positive integer less than or equal to $M$, and $i$ is a positive integer.

The $i$-th second parameter is selected from the multiple candidate generation parameters based on the $i$-th selection indication value in the $m$-th selection information group among $M$ selection information groups. Each of the $M$ selection information groups contains multiple selection indication values, and different selection information groups among the $M$ selection information groups are associated with different third signals. The $i$-th selection indication value is a positive integer less than or equal to the number of multiple candidate generation parameters.

The $i$-th selection indication value in the $m$-th selection information group indicates a first target sorting position, and the $i$-th second parameter is a candidate generation parameter located at the first target sorting position among the multiple candidate generation parameters.

The $i$-th second parameter is selected from the multiple candidate generation parameters in the $m$-th candidate parameter group based on the $i$-th selection indication value in the $m$-th selection information group. The $m$-th candidate parameter group is one of $M$ candidate parameter groups. Different candidate parameter groups among the $M$ candidate parameter groups are associated with different third signals, and each of the $M$ candidate parameter groups contains multiple candidate generation parameters. The $i$-th selection indication value is a positive integer less than or equal to the number of multiple candidate generation parameters in the $m$-th candidate parameter group.

The $i$-th selection indication value in the $m$-th selection information group indicates a second target sorting position, and the $i$-th second parameter is a candidate generation parameter located at the second target sorting position in the $m$-th candidate parameter group.

The $i$-th second parameter is the $i$-th candidate generation parameter among multiple candidate generation parameters in the $m$-th candidate parameter group. The $m$-th candidate parameter group is one of $M$ candidate parameter groups. Different candidate parameter groups among the $M$ candidate parameter groups are associated with different third signals, and each of the $M$ candidate parameter groups contains multiple candidate generation parameters.

The multiple candidate generation parameters are multiple candidate amplitude parameters or multiple candidate phase parameters.

The $M$ selection information groups are preset, determined by a first device, or determined by the second device.

In the case where the $M$ selection information groups are determined by the second device, before the second communication unit is configured to receive the second signal sent by the third device, the second communication unit is configured to send first indication information to the first device, where the first indication information carries the $M$ selection information groups.

In the case where the $M$ selection information groups are determined by the first device, before the second communication unit is configured to receive the second signal sent by the third device, the second communication unit is configured to receive the second indication information sent by the first device, where the second indication information carries the $M$ selection information groups.

The multiple candidate generation parameters are preset, determined by the second device, or determined by the first device.

In the case where the multiple candidate generation parameters are determined by the second device, before the second communication unit is configured to receive the second signal sent by the third device, the second communication unit is configured to send third indication information to the first device, where the third indication information carries the multiple candidate generation parameters.

In the case where the multiple candidate generation parameters are determined by the first device, before the second communication unit is configured to receive the second signal sent by the third device, the second communication unit is configured to receive fourth indication information sent by the first device, where the fourth indication information carries the multiple candidate generation parameters.

A duration of each of the multiple time periods is preset, or determined by the second device, or determined by the first device.

In the case where the duration of each of the multiple time periods is preset, the duration of each of the multiple time periods is equal to a reciprocal of an information modulation rate of the third device.

In the case where the duration of each of the multiple time periods is determined by the second device, before the second communication unit is configured to receive the second signal sent by the third device, the second communication unit is configured to send fifth indication information to the first device, where the fifth indication information is used for determining the duration of each of the multiple time periods.

In the case where the duration of each of the multiple time periods is determined by the first device, before the second communication unit is configured to receive the second signal sent by the third device, the second communication unit is configured to receive the sixth indication information sent by the first device, where the sixth indication information is used for determining the duration of each of the multiple time periods.

The second device is a network device, and the third device is a zero-power device.

The second device in embodiments of the present disclosure can implement corresponding functions of the second device in the foregoing communication method embodiments. For the procedure, function, implementation, and advantage corresponding to each module (sub-module, unit, assembly, etc.) in the second device, reference may be made to the corresponding illustrations in the foregoing method embodiments, which will not be described in detail again herein. It can be noted that, the functions of various modules (sub-modules, units, assemblies, etc.) in the second device in embodiments of the present disclosure may be implemented by different modules (sub-modules, units, assemblies, etc.), or may be implemented by the same module (sub-module, unit, assembly, etc.).

FIG. 17 is a third device according to an embodiment of the present disclosure. The third device includes a third communication unit 1701. The third communication unit 1701 configured to receive a first signal sent by a first device. The first signal includes $M$ energy supply signals, the $M$ energy supply signals occupy the same time domain range, and the time domain range contains multiple time periods. Each of the $M$ energy supply signals is generated based on a different first parameter in each of different time periods among the multiple time periods, and different energy supply signals of the $M$ energy supply signals are generated based on different first parameters in a same time period among the multiple time periods. $M$ is an integer greater than or equal to 2. The third communication unit 1701 configured to send a second signal to a second device, where the second signal carries data reported by the third device.

Based on FIG. 17, as illustrated in FIG. 18, the third device further includes a third processing unit 1702. The third processing unit 1702 is configured to obtain the second signal through modulating the reported data onto the first signal.

The first parameter is an amplitude parameter or a phase parameter.

In the case where the first parameter is the amplitude parameter, the third processing unit is configured to obtain the second signal through modulating the reported data onto the first signal by using an AM. In the case where the first parameter is the phase parameter, the third processing unit is configured to obtain the second signal through modulating the reported data onto the first signal by using a PM.

The first device is a terminal device, the second device is a network device, and the third device is a zero-power terminal.

The third device in embodiments of the present disclosure can implement corresponding functions of the third device in the foregoing communication method embodiments. For the procedure, function, implementation, and advantage corresponding to each module (sub-module, unit, assembly, etc.) in the third device, reference may be made to the corresponding illustrations in the foregoing method embodiments, which will not be described in detail again herein. It can be noted that, the functions of various modules (sub-modules, units, assemblies, etc.) in the third device in embodiments of the present disclosure may be implemented by different modules (sub-modules, units, assemblies, etc.), or may be implemented by the same module (sub-module, unit, assembly, etc.).

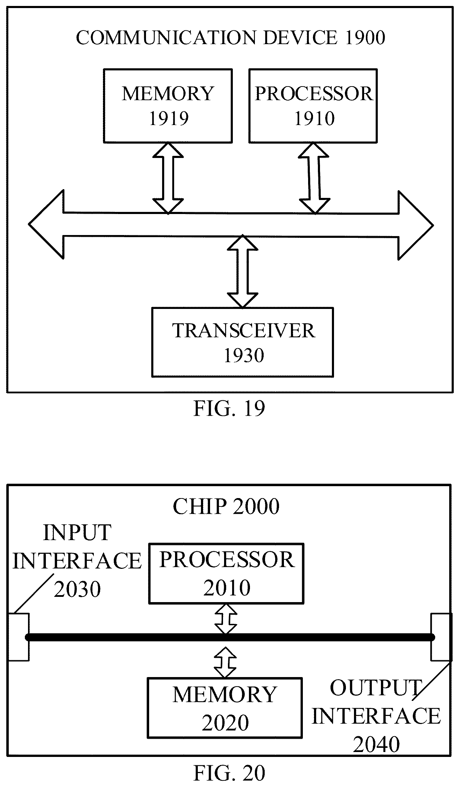

FIG. 19 is a schematic structural diagram of a communication device 1900 according to embodiments of the present disclosure. The communication device 1900 includes a processor 1910. The processor 1910 can invoke and execute a computer program stored in a memory, to cause the communication device 1900 to implement the method in embodiments of the present disclosure.

In a possible embodiment, the communication device 1900 may further a memory 1920. The processor 1910 can invoke and execute a computer program stored in the memory 1920, to cause the communication device 1900 to implement the method in embodiments of the present disclosure. The memory 1920 may be a separate device independent of the processor 1910, or may be integrated into the processor 1910. In a possible embodiment, the communication device 1900 may further include a transceiver 1930. The processor 1910 can control the transceiver 1930 to communicate with other devices, and specifically, to send information or data to other devices or receive information or data sent by other devices. The transceiver 1930 may include a transmitter and a receiver. The transceiver 1930 can further include an antenna, where one or more antennas may be provided. In a possible embodiment, the communication device 1900 may be the first device in embodiments of the present disclosure, and the communication device 1900 may implement corresponding operations implemented by the first device in various methods in embodiments of the present disclosure, which will not be described again herein for the sake of brevity. In a possible embodiment, the communication device 1900 may be the second device in embodiments of the present disclosure, and the communication device 1900 may implement corresponding operations implemented by the second device in various methods in embodiments of the present disclosure, which will not be described again herein for the sake of brevity. In a possible embodiment, the communication device 1900 may be the third device in embodiments of the present disclosure, and the communication device 1900 may implement corresponding operations implemented by the third device in various methods in embodiments of the present disclosure, which will not be described again herein for the sake of brevity.

FIG. 20 is a schematic structural diagram of a chip 2000 according to embodiments of the present disclosure. The chip 2000 includes a processor 2010. The processor 2010 can invoke and execute a computer program stored in a memory, to implement the method in embodiments of the present disclosure.

In a possible embodiment, the chip 2000 may further include a memory 2020. The processor 2010 can invoke and execute a computer program stored in the memory 2020, to implement the method performed by the first device, the second device, or the third device in embodiments of the present disclosure. The memory 2020 may be a separate device independent of the processor 2010, or may be integrated into the processor 2010. In a possible embodiment, the chip 2000 may further include an input interface 2030. The processor 2010 can control the input interface 2030 to communicate with other devices or chips, and specifically, to obtain information or data sent by other devices or chips. In a possible embodiment, the chip 2000 may further include an output interface 2040. The processor 2010 can control the output interface 2040 to communicate with other devices or chips, and specifically, to output information or data to other devices or chips.

In a possible embodiment, the chip may be applied to the first device in embodiments of the present disclosure, and the chip may implement corresponding operations implemented by the first device in various methods in embodiments of the present disclosure, which will not be described again herein for the sake of brevity. In a possible embodiment, the chip may be applied to the second device in embodiments of the present disclosure, and the chip may implement corresponding operations implemented by the second device in various methods in embodiments of the present disclosure, which will not be described again herein for the sake of brevity. In a possible embodiment, the chip may be applied to the third device in embodiments of the present disclosure, and the chip may implement corresponding operations implemented by the third device in various methods in embodiments of the present disclosure, which will not be described again herein for the sake of brevity. The chip applied to the third device, the first device, and the second device may be the same chip or different chips.

It can be understood that, the chip mentioned in embodiments of the present disclosure can also be referred to as a system-on-chip (SOC).

The processor may be a general-purpose processor, a digital signal processor (DSP), an application-specific integrated circuit (ASIC), a field programmable gate array (FPGA), or other programmable logic devices, discrete gates or transistor logic devices, discrete hardware components. The general-purpose processor may be a microprocessor, any conventional processor, etc. The memory may be a volatile memory or a non-volatile memory, or can include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM). It can be understood that, the memory above is intended for illustration rather than limitation. For example, the memory in embodiments of the present disclosure can also be a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), a direct rambus RAM (DR RAM), etc. In other words, the memory in embodiments of the present disclosure is intended to include, but is not limited to, these and any other suitable types of memory.

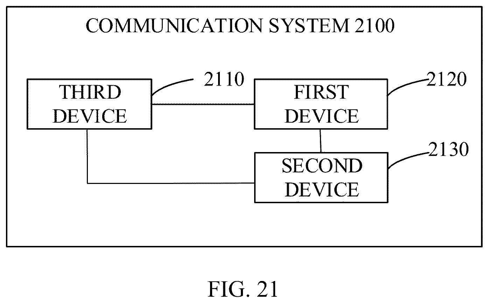

FIG. 21 is a schematic block diagram of a communication system 2100 according to embodiments of the present disclosure. The communication system 2100 includes a third device 2110, a first device 2120, and a second device 2130. The third device 2110 can be configured to implement corresponding functions implemented by the third device in the foregoing method. the first device 2120 can be configured to implement corresponding functions implemented by the first device in the foregoing method, and the second device 2130 can be configured to implement corresponding functions implemented by the second device in the foregoing method, which will not be repeated herein for the sake of brevity.

All or some of the foregoing embodiment can be implemented through software, hardware, firmware, or any other combination thereof. When implemented by software, all or some of the foregoing embodiment can be implemented in the form of a computer program product. The computer program product includes one or more computer instructions. When the computer instructions are applied and executed on a computer, all or some of the operations or functions of embodiments of the present disclosure are performed. The computer may be a general-purpose computer, a special-purpose computer, a computer network, or other programmable apparatuses. The computer instruction may be stored in a computer-readable storage medium, or sent from one computer-readable storage medium to another computer-readable storage medium. For example, the computer instruction may be sent from one website, computer, server, or data center to another website, computer, server, or data center in a wired manner or in a wireless manner. Examples of the wired manner may be a coaxial cable, an optical fiber, a digital subscriber line (DSL), etc. The wireless manner may be, for example, infrared, wireless, microwave, etc. The computer-readable storage medium may be any computer-accessible usable medium or a data storage device such as a server, a data center, or the like which integrates one or more usable media. The usable medium may be a magnetic medium (such as a soft disk, a hard disk, or a magnetic tape), an optical medium (such as a digital video disc (DVD)), or a semiconductor medium (such as a solid state disk (SSD)), etc.

It can be understood that, in various embodiments of the present disclosure, the magnitude of a sequence number of each process does not mean an order of execution, and the order of execution of each process may be determined by its function and internal logic and shall not constitute any limitation to the implementation of embodiments of the present disclosure. It will be evident to those skilled in the art that, for the sake of convenience and simplicity, in terms of the specific working processes of the foregoing systems, apparatuses, and units, reference may be made to the corresponding processes in the foregoing method embodiments, which is not repeated herein. The foregoing elaborations are merely embodiments of the present disclosure, but are not intended to limit the protection scope of the present disclosure. Any variation or replacement easily thought of by those skilled in the art in the technical scope disclosed in the present disclosure shall belong to the protection scope of the present disclosure. Therefore, the protection scope of the present disclosure shall be subject to the protection scope of the claims.

## Claims

1. A communication method, comprising:
   sending, by a first device, a first signal to a third device, wherein the first signal comprises $M$ energy supply signals; the $M$ energy supply signals occupy a same time domain range; the time domain range contains a plurality of time periods; each of the $M$ energy supply signals is generated based on a different first parameter in each of different time periods among the plurality of time periods, and different energy supply signals among the $M$ energy supply signals are generated based on different first parameters in a same time period among the plurality of time periods; and $M$ is an integer greater than or equal to 2.

2. The method of claim 1, wherein the $M$ energy supply signals are sent by $M$ antennas of the first device, respectively, and different energy supply signals are sent by different antennas among the $M$ antennas.

3. The method of claim 2, wherein an $m$-th energy supply signal among the $M$ energy supply signals is generated based on an $i$-th first parameter in an $i$-th time period among the plurality of time periods, wherein the $i$-th first parameter is one of a plurality of candidate generation parameters, $m$ is a positive integer less than or equal to $M$, and $i$ is a positive integer.

4. The method of claim 3, wherein the $i$-th first parameter is selected from the plurality of candidate generation parameters based on an $i$-th selection indication value in an $m$-th selection information group among $M$ selection information groups, wherein
   each of the $M$ selection information groups contains a plurality of selection indication values, and different selection information groups among the $M$ selection information groups are associated with different energy supply signals; and the $i$-th selection indication value is a positive integer less than or equal to a number of the plurality of candidate generation parameters.

**5.** The method of claim 4, wherein the $i$-th selection indication value in the m-th selection information group indicates a first target sorting position, and the $i$-th first parameter is a candidate generation parameter located at the first target sorting position among the plurality of candidate generation parameters.

**6.** The method of claim 4, wherein the $i$-th first parameter is selected from the plurality of candidate generation parameters in an $m$-th candidate parameter group based on the $i$-th selection indication value in an $m$-th selection information group, wherein the $m$-th candidate parameter group is one of $M$ candidate parameter groups; different candidate parameter groups among the $M$ candidate parameter groups are associated with different energy supply signals, and each of the $M$ candidate parameter groups contains a plurality of candidate generation parameters; and the $i$-th selection indication value is a positive integer less than or equal to a number of the plurality of candidate generation parameters in the $m$-th candidate parameter group.

**7.** The method of claim 6, wherein the $i$-th selection indication value in the $m$-th selection information group indicates a second target sorting position, and the $i$-th first parameter is a candidate generation parameter located at the second target sorting position in the $m$-th candidate parameter group.

**8.** The method of claim 3, wherein the $i$-th first parameter is an $i$-th candidate generation parameter among a plurality of candidate generation parameters in an $m$-th candidate parameter group, wherein
the $m$-th candidate parameter group is one of $M$ candidate parameter groups; and different candidate parameter groups among the $M$ candidate parameter groups are associated with different energy supply signals, and each of the $M$ candidate parameter groups contains a plurality of candidate generation parameters.

**9.** The method of any one of claims 3 to 8, wherein the plurality of candidate generation parameters are a plurality of candidate amplitude parameters or a plurality of candidate phase parameters.

**10.** The method of any one of claims 4 to 7, wherein the $M$ selection information groups are preset, or determined by a second device, or determined by the first device.

**11.** The method of claim 10, wherein in a case where the $M$ selection information groups are determined by the second device, before sending, by the first device, the first signal to the third device, the method further comprises:
receiving, by the first device, first indication information sent by the second device, wherein the first indication information carries the $M$ selection information groups.

**12.** The method of claim 10, wherein in a case where the $M$ selection information groups are determined by the first device, before sending, by the first device, the first signal to the third device, the method further comprises:
sending, by the first device, second indication information to the second device, wherein the second indication information carries the $M$ selection information groups.

**13.** The method of any one of claims 3 to 12, wherein the plurality of candidate generation parameters are preset, or determined by a second device, or determined by the first device.

**14.** The method of claim 13, wherein in a case where the plurality of candidate generation parameters are determined by the second device, before sending, by the first device, the first signal to the third device, the method further comprises:
receiving, by the first device, third indication information sent by the second device, wherein the third indication information carries the plurality of candidate generation parameters.

**15.** The method of claim 13, wherein in a case where the plurality of candidate generation parameters are determined by the first device, before sending, by the first device, the first signal to the third device, the method further comprises:
sending, by the first device, fourth indication information to the second device, wherein the fourth indication information carries the plurality of candidate generation parameters.

**16.** The method of any one of claims 1 to 15, wherein a duration of each of the plurality of time periods is preset, or determined by a second device, or determined by the first device.

**17.** The method of claim 16, wherein in a case where the duration of each of the plurality of time periods is preset, the duration of each of the plurality of time periods is equal to a reciprocal of an information modulation rate of the third device.

**18.** The method of claim 16, wherein in a case where the duration of each of the plurality of time periods is determined by the second device, before sending, by the first device, the first signal to the third device, the method further comprises:
receiving, by the first device, fifth indication information sent by the second device, wherein the fifth indication information is used for determining the duration of each of the plurality of time periods.

19. The method of claim 16, wherein in a case where the duration of each of the plurality of time periods is determined by the first device, before sending, by the first device, the first signal to the third device, the method further comprises:
sending, by the first device, sixth indication information to the second device, wherein the sixth indication information is used for determining the duration of each of the plurality of time periods.

20. The method of any one of claims 1 to 19, wherein the first device is a terminal device, and the third device is a zero-power device.

21. A communication method, comprising:

receiving, by a second device, a second signal sent by a third device; and
obtaining, by the second device, data reported by the third device through processing the second signal based on $M$ third signals, wherein the $M$ third signals have a same duration; the duration contains a plurality of time periods; each of the $M$ third signals is generated based on a different second parameter in each of different time periods among the plurality of time periods, and different third signals among the $M$ third signals are generated based on different second parameters in a same time period among the plurality of time periods; and $M$ is an integer greater than or equal to 2.

22. The method of claim 21, wherein obtaining, by the second device, the data reported by the third device through processing the second signal based on the $M$ third signals comprises:

obtaining, by the second device, a channel estimation value based on shared information and the $M$ third signals;
generating, by the second device, $M$ cancellation signals based on the channel estimation value and the $M$ third signals; and
obtaining, by the second device, the data reported by the third device through cancelling $M$ energy supply signals in the second signal based on the $M$ cancellation signals.

23. The method of claim 22, wherein an $m$-th third signal among the $M$ third signals is generated based on an $i$-th second parameter in an $i$-th time period among the plurality of time periods, wherein the $i$-th second parameter is one of a plurality of candidate generation parameters, $m$ is a positive integer less than or equal to $M$, and $i$ is a positive integer.

24. The method of claim 23, wherein the $i$-th second parameter is selected from the plurality of candidate generation parameters based on an $i$-th selection indication value in an $m$-th selection information group among $M$ selection information groups, wherein
each of the $M$ selection information groups contains a plurality of selection indication values, and different selection information groups among the $M$ selection information groups are associated with different third signals; and the $i$-th selection indication value is a positive integer less than or equal to a number of the plurality of candidate generation parameters.

25. The method of claim 24, wherein the $i$-th selection indication value in the $m$-th selection information group indicates a first target sorting position, and the $i$-th second parameter is a candidate generation parameter located at the first target sorting position among the plurality of candidate generation parameters.

26. The method of claim 24, wherein the $i$-th second parameter is selected from the plurality of candidate generation parameters in an $m$-th candidate parameter group based on the $i$-th selection indication value in an $m$-th selection information group, wherein the $m$-th candidate parameter group is one of $M$ candidate parameter groups; different candidate parameter groups among the $M$ candidate parameter groups are associated with different third signals, and each of the $M$ candidate parameter groups contains a plurality of candidate generation parameters; and the $i$-th selection indication value is a positive integer less than or equal to a number of the plurality of candidate generation parameters in the $m$-th candidate parameter group.

27. The method of claim 26, wherein the $i$-th selection indication value in the $m$-th selection information group indicates a second target sorting position, and the $i$-th second parameter is a candidate generation parameter located at the second target sorting position in the $m$-th candidate parameter group.

28. The method of claim 23, wherein the $i$-th second parameter is an $i$-th candidate generation parameter among a plurality of candidate generation parameters in an $m$-th candidate parameter group, wherein
the $m$-th candidate parameter group is one of $M$ candidate parameter groups; different candidate parameter groups among the $M$ candidate parameter groups are associated with different third signals, and each of the $M$ candidate parameter groups contains a plurality of candidate generation parameters.

29. The method of any one of claims 23 to 28, wherein the plurality of candidate generation parameters are a plurality of candidate amplitude parameters or a plurality of candidate phase parameters.

30. The method of any one of claims 24 to 27, wherein the $M$ selection information groups are preset, or determined by a first device, or determined by the second device.

31. The method of claim 30, wherein in a case where the $M$ selection information groups are determined by the second device, before receiving, by the second device, the second signal sent by the third device, the method further comprises:
sending, by the second device, first indication information to the first device, wherein the first indication information carries the $M$ selection information groups.

32. The method of claim 30, wherein in a case where the $M$ selection information groups are determined by the first device, before receiving, by the second device, the second signal sent by the third device, the method further comprises:
receiving, by the second device, second indication information sent by the first device, wherein the second indication information carries the $M$ selection information groups.

33. The method of any one of claims 23 to 32, wherein the plurality of candidate generation parameters are preset, or determined by the second device, or determined by a first device.

34. The method of claim 33, wherein in a case where the plurality of candidate generation parameters are determined by the second device, before receiving, by the second device, the second signal sent by the third device, the method further comprises:
sending, by the second device, third indication information to the first device, wherein the third indication information carries the plurality of candidate generation parameters.

35. The method of claim 33, wherein in a case where the plurality of candidate generation parameters are determined by the first device, before receiving, by the second device, the second signal sent by the third device, the method further comprises:
receiving, by the second device, fourth indication information sent by the first device, wherein the fourth indication information carries the plurality of candidate generation parameters.

36. The method of any one of claims 21 to 35, wherein a duration of each of the plurality of time periods is preset, or determined by the second device, or determined by a first device.

37. The method of claim 36, wherein in a case where the duration of each of the plurality of time periods is preset, the duration of each of the plurality of time periods is equal to a reciprocal of an information modulation rate of the third device.

38. The method of claim 36, wherein in a case where the duration of each of the plurality of time periods is determined by the second device, before receiving, by the second device, the second signal sent by the third device, the method further comprises:
sending, by the second device, fifth indication information to the first device, wherein the fifth indication information is used for determining the duration of each of the plurality of time periods.

39. The method of claim 36, wherein in a case where the duration of each of the plurality of time periods is determined by the first device, before receiving, by the second device, the second signal sent by the third device, the method further comprises:
receiving, by the second device, sixth indication information sent by the first device, wherein the sixth indication information is used for determining the duration of each of the plurality of time periods.

40. The method of any one of claims 21 to 39, wherein the second device is a network device, and the third device is a zero-power device.

41. A communication method, comprising:

receiving, by a third device, a first signal sent by a first device, wherein the first signal comprises $M$ energy supply signals; the $M$ energy supply signals occupy a same time domain range; the time domain range contains a plurality of time periods; each of the $M$ energy supply signals is generated based on a different first parameter in each of different time periods among the plurality of time periods, and different energy supply signals among the $M$ energy supply signals are generated based on different first parameters in a same time period among the plurality of time periods; and $M$ is an integer greater than or equal to 2; and
sending, by the third device, a second signal to a second device, wherein the second signal carries data reported by the third device.

42. The method of claim 41, wherein before sending, by the third device, the second signal to the second device, the method further comprises:
obtaining, by the third device, the second signal through modulating the reported data onto the first signal.

43. The method of claim 42, wherein the first parameter is an amplitude parameter or a phase parameter.

44. The method of claim 43, wherein in a case where the first parameter is the amplitude parameter, obtaining, by the third device, the second signal through modulating the reported data onto the first signal comprises:
obtaining, by the third device, the second signal through modulating the reported data onto the first signal by using an amplitude modulation (AM).

45. The method of claim 43, wherein in a case where the first parameter is the phase parameter, obtaining, by the third device, the second signal through modulating the reported data onto the first signal comprises:
obtaining, by the third device, the second signal through modulating the reported data onto the first signal by using a phase modulation (PM).

46. The method of any one of claims 41 to 45, wherein the first device is a terminal device, the second device is a network device, and the third device is a zero-power terminal.

47. A first device, comprising:
a first communication unit configured to send a first signal to a third device, wherein the first signal comprises $M$ energy supply signals; the $M$ energy supply signals occupy a same time domain range; the time domain range contains a plurality of time periods; each of the $M$ energy supply signals is generated based on a different first parameter in each of different time periods among the plurality of time periods, and different energy supply signals among the $M$ energy supply signals are generated based on different first parameters in a same time period among the plurality of time periods; and $M$ is an integer greater than or equal to 2.

48. The first device of claim 47, wherein the $M$ energy supply signals are sent by $M$ antennas of the first device, respectively, and different energy supply signals are sent by different antennas among the $M$ antennas.

49. The first device of claim 48, wherein an $m$-th energy supply signal among the $M$ energy supply signals is generated based on an $i$-th first parameter in an $i$-th time period among the plurality of time periods, wherein the $i$-th first parameter is one of a plurality of candidate generation parameters, $m$ is a positive integer less than or equal to $M$, and $i$ is a positive integer.

50. The first device of claim 49, wherein the $i$-th first parameter is selected from the plurality of candidate generation parameters based on an $i$-th selection indication value in an $m$-th selection information group among $M$ selection information groups, wherein
each of the $M$ selection information groups contains a plurality of selection indication values, and different selection information groups among the $M$ selection information groups are associated with different energy supply signals; and the $i$-th selection indication value is a positive integer less than or equal to a number of the plurality of candidate generation parameters.

51. The first device of claim 50, wherein the $i$-th selection indication value in the $m$-th selection information group indicates a first target sorting position, and the $i$-th first parameter is a candidate generation parameter located at the first target sorting position among the plurality of candidate generation parameters.

52. The first device of claim 50, wherein the $i$-th first parameter is selected from the plurality of candidate generation parameters in an $m$-th candidate parameter group based on the $i$-th selection indication value in an $m$-th selection information group, wherein the $m$-th candidate parameter group is one of $M$ candidate parameter groups; different candidate parameter groups among the $M$ candidate parameter groups are associated with different energy supply signals, and each of the $M$ candidate parameter groups contains a plurality of candidate generation parameters; and the $i$-th selection indication value is a positive integer less than or equal to a number of the plurality of candidate generation parameters in the $m$-th candidate parameter group.

53. The first device of claim 52, wherein the $i$-th selection indication value in the $m$-th selection information group indicates a second target sorting position, and the $i$-th first parameter is a candidate generation parameter located at the second target sorting position in the $m$-th candidate parameter group.

54. The first device of claim 49, wherein the $i$-th first parameter is an $i$-th candidate generation parameter among a plurality of candidate generation parameters in an $m$-th candidate parameter group, wherein
the $m$-th candidate parameter group is one of $M$ candidate parameter groups; and different candidate parameter groups among the $M$ candidate parameter groups are associated with different energy supply signals, and each of the $M$ candidate parameter groups contains a plurality of candidate generation parameters.

**55.** The first device of any one of claims 49 to 54, wherein the plurality of candidate generation parameters are a plurality of candidate amplitude parameters or a plurality of candidate phase parameters.

**56.** The first device of any one of claims 50 to 53, wherein the $M$ selection information groups are preset, or determined by a second device, or determined by the first device.

**57.** The first device of claim 56, wherein in a case where the $M$ selection information groups are determined by the second device, before the first communication unit is configured to send the first signal to the third device, the first communication unit is configured to receive first indication information sent by the second device before, wherein the first indication information carries the $M$ selection information groups.

**58.** The first device of claim 56, wherein in a case where the $M$ selection information groups are determined by the second device, before the first communication unit is configured to send the first signal to the third device, the first communication unit is configured to send second indication information to the second device, wherein the second indication information carries the $M$ selection information groups.

**59.** The first device of any one of claims 49 to 58, wherein the plurality of candidate generation parameters are preset, determined by a second device, or determined by the first device.

**60.** The first device of claim 59, wherein in a case where the plurality of candidate generation parameters are determined by the second device, before the first communication unit is configured to send the first signal to the third device, the first communication unit is configured to receive third indication information sent by the second device, wherein the third indication information carries the plurality of candidate generation parameters.

**61.** The first device of claim 59, wherein in a case where the plurality of candidate generation parameters are determined by the first device, before the first communication unit is configured to send the first signal to the third device, the first communication unit is configured to send fourth indication information to the second device, wherein the fourth indication information carries the plurality of candidate generation parameters.

**62.** The first device of any one of claims 47 to 61, wherein a duration of each of the plurality of time periods is preset, or determined by a second device, or determined by the first device.

**63.** The first device of claim 62, wherein in a case where the duration of each of the plurality of time periods is preset, the duration of each of the plurality of time periods is equal to a reciprocal of an information modulation rate of the third device.

**64.** The first device of claim 62, wherein in a case where the duration of each of the plurality of time periods is determined by the second device, before the first communication unit is configured to send the first signal to the third device, the first communication unit is configured to receive fifth indication information sent by the second device, wherein the fifth indication information is used for determining the duration of each of the plurality of time periods.

**65.** The first device of claim 62, wherein in a case where the duration of each of the plurality of time periods is determined by the first device, before the first communication unit is configured to send the first signal to the third device, the first communication unit is configured to send sixth indication information to the second device, wherein the sixth indication information is used for determining the duration of each of the plurality of time periods.

**66.** The first device of any one of claims 47 to 65, wherein the first device is a terminal device, and the third device is a zero-power device.

**67.** A second device, comprising:

> a second communication unit configured to receive a second signal sent by a third device; and
> a second processing unit configured to obtain data reported by the third device through processing the second signal based on $M$ third signals, wherein the $M$ third signals have a same duration; the duration contains a plurality of time periods; each of the $M$ third signals is generated based on a different second parameter in each of different time periods among the plurality of time periods, and different third signals among the $M$ third signals are generated based on different second parameters in a same time period among the plurality of time periods; and $M$ is an integer greater than or equal to 2.

**68.** The second device of claim 67, wherein the second processing unit is configured to:

> obtain a channel estimation value based on shared information and the $M$ third signals;
> generate $M$ cancellation signals based on the channel estimation value and the $M$ third signals; and
> obtain the data reported by the third device through cancelling $M$ energy supply signals in the second signal based on the *M* cancellation signals.

69. The second device of claim 68, wherein an *m*-th third signal among the *M* third signals is generated based on an *i*-th second parameter in an *i*-th time period among the plurality of time periods, wherein the *i*-th second parameter is one of a plurality of candidate generation parameters, *m* is a positive integer less than or equal to *M,* and *i* is a positive integer.

70. The second device of claim 69, wherein the *i*-th second parameter is selected from the plurality of candidate generation parameters based on an *i*-th selection indication value in an *m*-th selection information group among *M* selection information groups, wherein

    each of the *M* selection information groups contains a plurality of selection indication values, and different selection information groups among the *M* selection information groups are associated with different third signals; and the *i*-th selection indication value is a positive integer less than or equal to a number of the plurality of candidate generation parameters.

71. The second device of claim 70, wherein the *i*-th selection indication value in the *m*-th selection information group indicates a first target sorting position, and the *i*-th second parameter is a candidate generation parameter located at the first target sorting position among the plurality of candidate generation parameters.

72. The second device of claim 70, wherein the *i*-th second parameter is selected from the plurality of candidate generation parameters in an *m*-th candidate parameter group based on the *i*-th selection indication value in an *m*-th selection information group, wherein

    the *m*-th candidate parameter group is one of *M* candidate parameter groups; different candidate parameter groups among the *M* candidate parameter groups are associated with different third signals, and each of the *M* candidate parameter groups contains a plurality of candidate generation parameters; and the *i*-th selection indication value is a positive integer less than or equal to a number of the plurality of candidate generation parameters in the *m*-th candidate parameter group.

73. The second device of claim 72, wherein the *i*-th selection indication value in the *m*-th selection information group indicates a second target sorting position, and the *i*-th second parameter is a candidate generation parameter located at the second target sorting position in the *m*-th candidate parameter group.

74. The second device of claim 69, wherein the *i*-th second parameter is an *i*-th candidate generation parameter among a plurality of candidate generation parameters in an *m*-th candidate parameter group, wherein

    the *m*-th candidate parameter group is one of *M* candidate parameter groups; different candidate parameter groups among the *M* candidate parameter groups are associated with different third signals, and each of the *M* candidate parameter groups contains a plurality of candidate generation parameters.

75. The second device of any one of claims 69 to 74, wherein the plurality of candidate generation parameters are a plurality of candidate amplitude parameters or a plurality of candidate phase parameters.

76. The second device of any one of claims 70 to 73, wherein the *M* selection information groups are preset, or determined by a first device, or determined by the second device.

77. The second device of claim 76, wherein in a case where the *M* selection information groups are determined by the second device, before the second communication unit is configured to receive the second signal sent by the third device, the second communication unit is configured to send first indication information to the first device, wherein the first indication information carries the *M* selection information groups.

78. The second device of claim 76, wherein in a case where the *M* selection information groups are determined by the first device, before the second communication unit is configured to receive the second signal sent by the third device, the second communication unit is configured to receive the second indication information sent by the first device, wherein the second indication information carries the *M* selection information groups.

79. The second device of any one of claims 69 to 78, wherein the plurality of candidate generation parameters are preset, or determined by the second device, or determined by a first device.

80. The second device of claim 79, wherein in a case where the plurality of candidate generation parameters are determined by the second device, before the second communication unit is configured to receive the second signal sent by the third device, the second communication unit is configured to send third indication information to the first device, wherein the third indication information carries the plurality of candidate generation parameters.

**81.** The second device of claim 79, wherein in a case where the plurality of candidate generation parameters are determined by the first device, before the second communication unit is configured to receive the second signal sent by the third device, the second communication unit is configured to receive fourth indication information sent by the first device, wherein the fourth indication information carries the plurality of candidate generation parameters.

**82.** The second device of any one of claims 67 to 81, wherein a duration of each of the plurality of time periods is preset, or determined by the second device, or determined by a first device.

**83.** The second device of claim 82, wherein in a case where the duration of each of the plurality of time periods is preset, the duration of each of the plurality of time periods is equal to a reciprocal of an information modulation rate of the third device.

**84.** The second device of claim 82, wherein in a case where the duration of each of the plurality of time periods is determined by the second device, before the second communication unit is configured to receive the second signal sent by the third device, the second communication unit is configured to send fifth indication information to the first device, wherein the fifth indication information is used for determining the duration of each of the plurality of time periods.

**85.** The second device of claim 82, wherein in a case where the duration of each of the plurality of time periods is determined by the first device, before the second communication unit is configured to receive the second signal sent by the third device, the second communication unit is configured to receive the sixth indication information sent by the first device, wherein the sixth indication information is used for determining the duration of each of the plurality of time periods.

**86.** The second device of any one of claims 67 to 85, wherein the second device is a network device, and the third device is a zero-power device.

**87.** A third device, comprising:

a third communication unit configured to:
receive a first signal sent by a first device, wherein the first signal comprises M energy supply signals; the M energy supply signals occupy a same time domain range;
the time domain range contains a plurality of time periods; each of the M energy supply signals is generated based on a different first parameter in each of different time periods among the plurality of time periods, and different energy supply signals among the M energy supply signals are generated based on different first parameters in a same time period among the plurality of time periods; and M is an integer greater than or equal to 2; and
send a second signal to a second device, wherein the second signal carries data reported by the third device.

**88.** The third device of claim 87, further comprising:
a third processing unit configured to obtain the second signal through modulating the reported data onto the first signal.

**89.** The third device of claim 88, wherein the first parameter is an amplitude parameter or a phase parameter.

**90.** The third device of claim 89, wherein in a case where the first parameter is the amplitude parameter, the third processing unit is configured to obtain the second signal through modulating the reported data onto the first signal by using an amplitude modulation (AM).

**91.** The third device of claim 89, wherein in a case where the first parameter is the phase parameter, the third processing unit is configured to obtain the second signal through modulating the reported data onto the first signal by using a phase modulation (PM).

**92.** The third device of any one of claims 87 to 91, wherein the first device is a terminal device, the second device is a network device, and the third device is a zero-power terminal.

**93.** A first device, comprising:

a transceiver;
a memory configured to store a computer program; and
a processor configured to invoke and execute the computer program stored in the memory, to cause the first device to perform the method of any one of claims 1 to 20.

**94.** A second device, comprising:

a transceiver;
a memory configured to store a computer program; and
a processor configured to invoke and execute the computer program stored in the memory, to cause the second device to perform the method of any one of claims 21 to 40.

**95.** A third device, comprising:

a transceiver;
a memory configured to store a computer program; and
a processor configured to invoke and execute the computer program stored in the memory, to cause the third device to perform the method of any one of claims 41 to 46.

**96.** A chip, comprising:
a processor configured to invoke and execute a computer program stored in a memory, to cause a device equipped with the chip to perform the method of any one of claims 1 to 20, the method of any one of claims 21 to 40, or the method of any one of claims 41 to 46.

**97.** A computer-readable storage medium configured to store a computer program which, when executed by a device, causes the device to perform the method of any one of claims 1 to 20, the method of any one of claims 21 to 40, or the method of any one of claims 41 to 46.

**98.** A computer program product comprising computer program instructions that cause a computer to perform the method of any one of claims 1 to 20, the method of any one of claims 21 to 40, or the method of any one of claims 41 to 46.

**99.** A computer program being operable with a computer to perform the method of any one of claims 1 to 20, the method of any one of claims 21 to 40, or the method of any one of claims 41 to 46.

<u>100</u>

110

120          120

FIG. 1

READER                    TAG

| ENERGY HARVESTING | BACKSCATTERING COMMUNICATION | LOW-POWER COMPUTING |

FIG. 2

CASE 2: ZERO-POWER SIDELINK COMMUNICATION POWERED OR TRIGGERED BY NETWORK

CASE 1: ZERO-POWER COMMUNICATION IN WHICH TERMINAL ASSISTS IN POWER SUPPLY OR TRIGGERING

BACKSCATTER

POWER/TRIGGER

AIR INTERFACE DATA

AIR INTERFACE SIGNALLING

BACKSCATTER

AIR INTERFACE SIGNALLING

POWER ONLY

TRIGGER ONLY

BACKSCATTER

AIR INTERFACE SIGNALLING

AIR INTERFACE DATA

POWER/TRIGGER

BACKSCATTER

CASE 3: ZERO-POWER COMMUNICATION IN WHICH TERMINAL ASSISTS IN POWER SUPPLY

CASE 4: ZERO-POWER SIDELINK COMMUNICATION CONTROLLED BY NETWORK

BACKSCATTER----▶     POWER〰〰     TRIGGER——▶     AIR INTERFACE SIGNALLING/DATA – –▶

FIG. 3

FIRST DEVICE SENDS FIRST SIGNAL TO THIRD DEVICE, WHERE FIRST SIGNAL INCLUDES $M$ ENERGY SUPPLY SIGNALS; $M$ ENERGY SUPPLY SIGNALS OCCUPY THE SAME TIME DOMAIN RANGE; TIME DOMAIN RANGE CONTAINS MULTIPLE TIME PERIODS; EACH OF $M$ ENERGY SUPPLY SIGNALS IS GENERATED BASED ON DIFFERENT FIRST PARAMETER IN EACH OF DIFFERENT TIME PERIODS AMONG MULTIPLE TIME PERIODS, AND DIFFERENT ENERGY SUPPLY SIGNALS AMONG $M$ ENERGY SUPPLY SIGNALS ARE GENERATED BASED ON DIFFERENT FIRST PARAMETERS IN SAME TIME PERIOD AMONG MULTIPLE TIME PERIODS; AND $M$ IS INTEGER GREATER THAN OR EQUAL TO 2 — S410

FIG. 4

SECOND DEVICE RECEIVES SECOND SIGNAL SENT BY THIRD DEVICE — S510

SECOND DEVICE OBTAINS DATA REPORTED BY THIRD DEVICE THROUGH PROCESSING SECOND SIGNAL BASED ON $M$ THIRD SIGNALS, WHERE $M$ THIRD SIGNALS HAVE THE SAME DURATION; DURATION CONTAINS MULTIPLE TIME PERIODS; EACH OF $M$ THIRD SIGNALS IS GENERATED BASED ON DIFFERENT SECOND PARAMETER IN EACH OF DIFFERENT TIME PERIODS AMONG MULTIPLE TIME PERIODS, AND DIFFERENT THIRD SIGNALS AMONG $M$ THIRD SIGNALS ARE GENERATED BASED ON DIFFERENT SECOND PARAMETERS IN SAME TIME PERIOD AMONG MULTIPLE TIME PERIODS; AND $M$ IS AN INTEGER GREATER THAN OR EQUAL TO 2 — S520

FIG. 5

THIRD DEVICE RECEIVES FIRST SIGNAL SENT BY FIRST DEVICE, WHERE FIRST SIGNAL INCLUDES $M$ ENERGY SUPPLY SIGNALS; $M$ ENERGY SUPPLY SIGNALS OCCUPY THE SAME TIME DOMAIN RANGE; TIME DOMAIN RANGE CONTAINS MULTIPLE TIME PERIODS; EACH OF $M$ ENERGY SUPPLY SIGNALS IS GENERATED BASED ON DIFFERENT FIRST PARAMETER IN EACH OF DIFFERENT TIME PERIODS AMONG MULTIPLE TIME PERIODS, AND DIFFERENT ENERGY SUPPLY SIGNALS AMONG $M$ ENERGY SUPPLY SIGNALS ARE GENERATED BASED ON DIFFERENT FIRST PARAMETERS IN SAME TIME PERIOD AMONG MULTIPLE TIME PERIODS; AND $M$ IS INTEGER GREATER THAN OR EQUAL TO 2 — S610

THIRD DEVICE SENDS SECOND SIGNAL TO SECOND DEVICE, WHERE SECOND SIGNAL CARRIES DATA REPORTED BY THIRD DEVICE — S620

FIG. 6

| UE | TAG | BASE STATION |
|---|---|---|

**701,** BASE STATION AND UE PRESET M SHARED DISCRETE SETS, WHERE EACH OF M DISCRETE SETS CONTAINS MULTIPLE CANDIDATE GENERATION PARAMETERS

**702,** UE DETERMINES RESPECTIVE FIRST PARAMETER FOR EACH OF M ENERGY SUPPLY SIGNALS IN EACH TIME PERIOD BASED ON MULTIPLE CANDIDATE GENERATION PARAMETERS IN EACH OF M DISCRETE SETS, AND GENERATES M ENERGY SUPPLY SIGNALS BASED ON RESPECTIVE FIRST PARAMETER FOR EACH OF M ENERGY SUPPLY SIGNALS IN EACH TIME PERIOD

**703,** UE SENDS FIRST SIGNAL TO TAG, WHERE FIRST SIGNAL INCLUDES M ENERGY SUPPLY SIGNALS

**704, MODULATION**

**705,** BASE STATION RECEIVES SECOND SIGNAL

**706,** BASE STATION DETERMINES RESPECTIVE SECOND PARAMETER FOR EACH OF M THIRD SIGNALS IN EACH TIME PERIOD BASED ON MULTIPLE CANDIDATE GENERATION PARAMETERS IN EACH OF M DISCRETE SETS, AND GENERATES M THIRD SIGNALS BASED ON RESPECTIVE SECOND PARAMETER FOR EACH OF M THIRD SIGNALS IN EACH TIME PERIOD

**707,** BASE STATION OBTAINS CHANNEL ESTIMATION VALUE BASED ON SHARED INFORMATION AND M THIRD SIGNALS

**708,** BASE STATION GENERATES M CANCELLATION SIGNALS BASED ON CHANNEL ESTIMATION VALUE AND M THIRD SIGNALS

**709,** BASE STATION OBTAINS DATA REPORTED BY TAG THROUGH CANCELLING M ENERGY SUPPLY SIGNALS IN SECOND SIGNAL BASED ON M CANCELLATION SIGNALS

FIG. 7

51

BASE STATION

TAG

UE

801, BASE STATION AND UE PRESET $M$ SHARED DISCRETE SETS, WHERE EACH OF $M$ DISCRETE SETS CONTAINS MULTIPLE CANDIDATE GENERATION PARAMETERS

802, BASE STATION AND UE DETERMINE $M$ SELECTION INFORMATION GROUPS THROUGH SIGNALLING INTERACTION, WHERE EACH OF $M$ SELECTION INFORMATION GROUPS CONTAINS MULTIPLE SELECTION INDICATION VALUES

803, UE DETERMINES, BASED ON MULTIPLE SELECTION INDICATION VALUES IN EACH OF $M$ SELECTION INFORMATION GROUPS, RESPECTIVE FIRST PARAMETER FOR EACH OF $M$ ENERGY SUPPLY SIGNALS IN EACH TIME PERIOD FROM MULTIPLE CANDIDATE GENERATION PARAMETERS IN EACH OF $M$ DISCRETE SETS, AND GENERATES $M$ ENERGY SUPPLY SIGNALS BASED ON RESPECTIVE FIRST PARAMETER FOR EACH OF $M$ ENERGY SUPPLY SIGNALS IN EACH TIME PERIOD

806, BASE STATION RECEIVES SECOND SIGNAL

805, MODULATION

804, UE SENDS FIRST SIGNAL TO TAG, WHERE FIRST SIGNAL INCLUDES $M$ ENERGY SUPPLY SIGNALS

807, BASE STATION DETERMINES, BASED ON MULTIPLE SELECTION INDICATION VALUES IN EACH OF M SELECTION INFORMATION GROUPS, RESPECTIVE SECOND PARAMETER FOR EACH OF M THIRD SIGNALS IN EACH TIME PERIOD FROM MULTIPLE CANDIDATE GENERATION PARAMETERS IN EACH OF M DISCRETE SETS, AND GENERATES M THIRD SIGNALS BASED ON RESPECTIVE SECOND PARAMETER FOR EACH OF M THIRD SIGNALS IN EACH TIME PERIOD

808, BASE STATION OBTAINS CHANNEL ESTIMATION VALUE BASED ON SHARED INFORMATION AND $M$ THIRD SIGNALS

809, BASE STATION GENERATES $M$ CANCELLATION SIGNALS BASED ON CHANNEL ESTIMATION VALUE AND $M$ THIRD SIGNALS

810, BASE STATION OBTAINS DATA REPORTED BY TAG THROUGH CANCELLING $M$ ENERGY SUPPLY SIGNALS IN SECOND SIGNAL BASED ON $M$ CANCELLATION SIGNALS

FIG. 8

```
┌──────────────┐          ┌──────────────┐          ┌──────────────┐
│ BASE STATION │          │     TAG      │          │      UE      │
└──────┬───────┘          └──────┬───────┘          └──────┬───────┘
       │                         │                         │
   ┌───┴─────────────────────────┴─────────────────────────┴───┐
   │ 901, BASE STATION AND THE UE PRESET SHARED DISCRETE SET,   │
   │ WHERE DISCRETE SET CONTAINS MULTIPLE CANDIDATE GENERATION  │
   │ PARAMETERS                                                 │
   └───┬─────────────────────────┬─────────────────────────┬───┘
       │                         │                         │
   ┌───┴─────────────────────────┴─────────────────────────┴───┐
   │ 902, BASE STATION AND UE DETERMINE M SELECTION INFORMATION │
   │ GROUPS THROUGH SIGNALLING INTERACTION, WHERE EACH OF M     │
   │ SELECTION INFORMATION GROUPS CONTAINS MULTIPLE SELECTION   │
   │ INDICATION VALUES                                          │
   └───┬─────────────────────────┬─────────────────────────┬───┘
```

903, UE DETERMINES, BASED ON MULTIPLE SELECTION INDICATION VALUES IN EACH OF M SELECTION INFORMATION GROUPS, RESPECTIVE FIRST PARAMETER FOR EACH OF M ENERGY SUPPLY SIGNALS IN EACH TIME PERIOD FROM MULTIPLE CANDIDATE GENERATION PARAMETERS, AND GENERATES M ENERGY SUPPLY SIGNALS BASED ON RESPECTIVE FIRST PARAMETER FOR EACH OF M ENERGY SUPPLY SIGNALS IN EACH TIME PERIOD

904, UE SENDS FIRST SIGNAL TO TAG, WHERE FIRST SIGNAL INCLUDES M ENERGY SUPPLY SIGNALS

906, BASE STATION RECEIVES SECOND SIGNAL

905, MODULATION

907, BASE STATION DETERMINES, BASED ON MULTIPLE SELECTION INDICATION VALUES IN EACH OF M SELECTION INFORMATION GROUPS, RESPECTIVE SECOND PARAMETER FOR EACH OF M THIRD SIGNALS IN EACH TIME PERIOD FROM MULTIPLE CANDIDATE GENERATION PARAMETERS, AND GENERATES M THIRD SIGNALS BASED ON RESPECTIVE SECOND PARAMETER FOR EACH OF M THIRD SIGNALS IN EACH TIME PERIOD

908, BASE STATION OBTAINS CHANNEL ESTIMATION VALUE BASED ON SHARED INFORMATION AND M THIRD SIGNALS

909, BASE STATION GENERATES M CANCELLATION SIGNALS BASED ON CHANNEL ESTIMATION VALUE AND M THIRD SIGNALS

910, BASE STATION OBTAINS DATA REPORTED BY TAG THROUGH CANCELLING M ENERGY SUPPLY SIGNALS IN SECOND SIGNAL BASED ON M CANCELLATION SIGNALS

FIG. 9

```
┌─────────────────┐      ┌─────────────────┐      ┌─────────────────┐
│  BASE STATION   │      │      TAG        │      │       UE        │
└─────────────────┘      └─────────────────┘      └─────────────────┘
```

1001, BASE STATION AND UE PRESET SHARED AMPLITUDE DISCRETE SET, WHERE AMPLITUDE DISCRETE SET CONTAINS MULTIPLE CANDIDATE AMPLITUDE PARAMETERS

1002, BASE STATION AND UE DETERMINE $M$ SELECTION INFORMATION GROUPS THROUGH SIGNALLING INTERACTION, WHERE EACH OF $M$ SELECTION INFORMATION GROUPS CONTAINS MULTIPLE SELECTION INDICATION VALUES

1003, UE DETERMINES, BASED ON MULTIPLE SELECTION INDICATION VALUES IN EACH OF $M$ SELECTION INFORMATION GROUPS, RESPECTIVE FIRST AMPLITUDE PARAMETER FOR EACH OF $M$ ENERGY SUPPLY SIGNALS IN EACH TIME PERIOD FROM MULTIPLE CANDIDATE AMPLITUDE PARAMETERS, AND GENERATES $M$ ENERGY SUPPLY SIGNALS BASED ON RESPECTIVE FIRST AMPLITUDE PARAMETER FOR EACH OF $M$ ENERGY SUPPLY SIGNALS IN EACH TIME PERIOD

1004, UE SENDS FIRST SIGNAL TO TAG, WHERE FIRST SIGNAL INCLUDES $M$ ENERGY SUPPLY SIGNALS

1005, ASK MODULATION

1006, BASE STATION RECEIVES SECOND SIGNAL

1007, BASE STATION DETERMINES, BASED ON MULTIPLE SELECTION INDICATION VALUES IN EACH OF $M$ SELECTION INFORMATION GROUPS, RESPECTIVE SECOND AMPLITUDE PARAMETER FOR EACH OF $M$ THIRD SIGNALS IN EACH TIME PERIOD FROM MULTIPLE CANDIDATE AMPLITUDE PARAMETERS, AND GENERATES $M$ THIRD SIGNALS BASED ON RESPECTIVE SECOND AMPLITUDE PARAMETER FOR EACH OF $M$ THIRD SIGNALS IN EACH TIME PERIOD

1008, BASE STATION DEVICE OBTAINS CHANNEL ESTIMATION VALUE BASED ON SHARED INFORMATION, SAMPLED VALUES OF SHARED INFORMATION, AND RESPECTIVE SECOND AMPLITUDE PARAMETER FOR EACH OF $M$ THIRD SIGNALS CORRESPONDING TO SHARED INFORMATION

1009, BASE STATION GENERATES $M$ CANCELLATION SIGNALS BASED ON CHANNEL ESTIMATION VALUE AND $M$ THIRD SIGNALS

1010, BASE STATION OBTAINS DATA REPORTED BY TAG THROUGH CANCELLING $M$ ENERGY SUPPLY SIGNALS IN SECOND SIGNAL BASED ON $M$ CANCELLATION SIGNALS

FIG. 10

FIG. 11

56

| BASE STATION | TAG | UE |

1201, BASE STATION AND UE PRESET SHARED PHASE DISCRETE SET, WHERE PHASE DISCRETE SET CONTAINS MULTIPLE CANDIDATE PHASE PARAMETERS

1202, BASE STATION AND UE DETERMINE $M$ SELECTION INFORMATION GROUPS THROUGH SIGNALLING INTERACTION, WHERE EACH OF $M$ SELECTION INFORMATION GROUPS CONTAINS MULTIPLE SELECTION INDICATION VALUES

1203, UE DETERMINES, BASED ON MULTIPLE SELECTION INDICATION VALUES IN EACH OF $M$ SELECTION INFORMATION GROUPS, RESPECTIVE FIRST PHASE PARAMETER FOR EACH OF $M$ ENERGY SUPPLY SIGNALS IN EACH TIME PERIOD FROM MULTIPLE CANDIDATE PHASE PARAMETERS, AND GENERATES $M$ ENERGY SUPPLY SIGNALS BASED ON RESPECTIVE FIRST PHASE PARAMETER FOR EACH OF $M$ ENERGY SUPPLY SIGNALS IN EACH TIME PERIOD

1204, UE SENDS FIRST SIGNAL TO TAG, WHERE FIRST SIGNAL INCLUDES $M$ ENERGY SUPPLY SIGNALS

1205, PSK MODULATION

1206, BASE STATION RECEIVES SECOND SIGNAL

1207, BASE STATION DETERMINES, BASED ON MULTIPLE SELECTION INDICATION VALUES IN EACH OF $M$ SELECTION INFORMATION GROUPS, RESPECTIVE SECOND PHASE PARAMETER FOR EACH OF $M$ THIRD SIGNALS IN EACH TIME PERIOD FROM MULTIPLE CANDIDATE PHASE PARAMETERS, AND GENERATES $M$ THIRD SIGNALS BASED ON RESPECTIVE SECOND PHASE PARAMETER FOR EACH OF $M$ THIRD SIGNALS IN EACH TIME PERIOD

1208, BASE STATION DEVICE OBTAINS CHANNEL ESTIMATION VALUE BASED ON SHARED INFORMATION, SAMPLED VALUES OF SHARED INFORMATION, AND RESPECTIVE SECOND PHASE PARAMETER FOR EACH OF $M$ THIRD SIGNALS CORRESPONDING TO SHARED INFORMATION

1209, BASE STATION GENERATES $M$ CANCELLATION SIGNALS BASED ON CHANNEL ESTIMATION VALUE AND $M$ THIRD SIGNALS

1210, BASE STATION OBTAINS DATA REPORTED BY TAG THROUGH CANCELLING $M$ ENERGY SUPPLY SIGNALS IN SECOND SIGNAL BASED ON $M$ CANCELLATION SIGNALS

FIG. 12

FIG. 13

FIG. 14

FIG. 15

SECOND DEVICE

| SECOND COMMUNICATION UNIT 1601 | SECOND PROCESSING UNIT 1602 |

FIG. 16

THIRD DEVICE

THIRD COMMUNICATION UNIT 1701

FIG. 17

THIRD DEVICE

| THIRD COMMUNICATION UNIT 1701 | THIRD PROCESSING UNIT 1702 |

FIG. 18

COMMUNICATION DEVICE 1900

MEMORY 1919

PROCESSOR 1910

TRANSCEIVER 1930

FIG. 19

CHIP 2000

INPUT INTERFACE 2030

PROCESSOR 2010

MEMORY 2020

OUTPUT INTERFACE 2040

FIG. 20

COMMUNICATION SYSTEM 2100

THIRD
DEVICE

2110

FIRST
DEVICE

2120

SECOND
DEVICE

2130

FIG. 21

## INTERNATIONAL SEARCH REPORT

| International application No. |
| --- |
| **PCT/CN2023/070927** |

| A. | CLASSIFICATION OF SUBJECT MATTER |
| --- | --- |

H04W12/12(2021.01)i;  H04W56/00(2009.01)i;  H04B5/00(2006.01)i

According to International Patent Classification (IPC) or to both national classification and IPC

| B. | FIELDS SEARCHED |
| --- | --- |

Minimum documentation searched (classification system followed by classification symbols)

IPC: H04W, H04B, H04L

Documentation searched other than minimum documentation to the extent that such documents are included in the fields searched

Electronic data base consulted during the international search (name of data base and, where practicable, search terms used)

3GPP, CNTXT, ENTXT, ENTXTC, VEN, CNKI: 零, 功耗, 功率, 标签, 读取器, 多, 各, 供电信号, 供能信号, 供应信号, 时间, 时域, 时段, zero, energy, power, tag, reader, multi+, each, supply+ signal, tim+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 112292799 A (OMRON CORP.) 29 January 2021 (2021-01-29)<br>entire document | 1-99 |
| A | DE 102014225492 A1 (FRAUNHOFER GES. FORSCHUNG) 16 June 2016 (2016-06-16)<br>entire document | 1-99 |
| A | WO 2022222627 A1 (GUANGDONG OPPO MOBILE TELECOMMUNICATIONS CORP., LTD.) 27 October 2022 (2022-10-27)<br>entire document | 1-99 |
| A | WO 2023272443 A1 (GUANGDONG OPPO MOBILE TELECOMMUNICATIONS CORP., LTD.) 05 January 2023 (2023-01-05)<br>entire document | 1-99 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 September 2023** | **11 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/070927**

| Patent document cited in search report | | | Publication date (day/month/year) | Patent family member(s) | | | Publication date (day/month/year) |
|---|---|---|---|---|---|---|---|
| CN | 112292799 | A | 29 January 2021 | TW | 202007046 | A | 01 February 2020 |
| | | | | WO | 2020008683 | A1 | 09 January 2020 |
| | | | | JP | 2020010485 | A | 16 January 2020 |
| | | | | JP | 7087742 | B2 | 21 June 2022 |
| DE | 102014225492 | A1 | 16 June 2016 | DE | 102014225492 | B4 | 25 August 2016 |
| WO | 2022222627 | A1 | 27 October 2022 | | None | | |
| WO | 2023272443 | A1 | 05 January 2023 | | None | | |

Form PCT/ISA/210 (patent family annex) (July 2022)